# EUROPEAN PATENT APPLICATION

(11) **EP 4 836 224 A1**
(43) Date of publication of application: **04.11.2026**
(21) Application number: 26174011.2
(22) Date of filing: 22.04.2026
(51) Int. Cl.: H02J 3/32, H02J 3/38, H02J 7/35

(54) **METHOD FOR CONTROLLING PARAMETER OF VIRTUALIZED TWIN IN PHOTOVOLTAIC ENERGY STORAGE SYSTEM**

(30) Priority: 30.04.2025 CN 202510577442; 27.06.2025 CN 202510886951; 08.08.2025 CN 202511105938; 08.08.2025 CN 202511113303
(71) Applicant: Shanghai Sigeyuan Intelligent Technology Co., Ltd., Shanghai 201306 (CN)
(72) Inventor: YU, Ziwei, Shanghai 201306 (CN); QIN, Yijin, Shanghai 201306 (CN); SUN, Jianwen, Shanghai 201306 (CN)
(74) Representative: DREISS Patentanwälte PartG mbB

(57) **Abstract**

Provided is a method for controlling a parameter of a virtualized twin in a photovoltaic energy storage system. The photovoltaic energy storage system is virtually divided into two or more virtual photovoltaic energy storage systems. Each of the virtual photovoltaic energy storage systems is independently configured with an operation mode. The method includes: dynamically allocating a parameter of each component in each of the virtual photovoltaic energy storage systems. A sum of the parameters of a same component in the virtual photovoltaic energy storage systems is not greater than a parameter of a component corresponding to the same component in the photovoltaic energy storage system. The parameter includes a power capability of a power component, a current electric quantity of an energy storage battery, or a rated electric quantity of the energy storage battery.

## Description

### CROSS-REFERENCE TO RELATED APPLICATION

This application is based on and claims priorities to Chinese patent application No. 202510577442.0, filed on April 30, 2025, Chinese patent application No. 202510886951.1, filed on June 27, 2025, Chinese patent application No. 202511105938.4, filed on August 8, 2025, and Chinese patent application No. 202511113303.9, filed on August 8, 2025.

### FIELD

The present disclosure relates to the field of photovoltaic energy storage system technologies, and more particularly, to a method for controlling a parameter of a virtualized twin in a photovoltaic energy storage system.

### BACKGROUND

Energy storage virtualization technology virtually divides a photovoltaic energy storage system into multiple virtual photovoltaic energy storage systems. Each virtual photovoltaic energy storage system may operate in different modes according to a setting. For example, one photovoltaic energy storage system is virtually divided into two virtual photovoltaic energy storage systems, such as a photovoltaic energy storage system 1 and a photovoltaic energy storage system 2. Operation modes of the photovoltaic energy storage system 1 and the photovoltaic energy storage system 2 may be set independently, such as maximum self-generation and self-consumption, TOU, virtual power plant scheduling, etc.

When one photovoltaic energy storage system is virtually divided into a plurality of virtual photovoltaic energy storage systems, a sum of parameters of a same component of each virtual photovoltaic energy storage system is not greater than a parameter of a component corresponding to the same component in an original photovoltaic energy storage system. For example, when a maximum output power of an inverter of the original photovoltaic energy storage system is 27 kw, the photovoltaic energy storage system is virtualized into two virtual photovoltaic energy storage systems, and a power capability is allocated to the two virtual systems. For example, maximum output powers of inverters allocated to the two virtual systems are 12 kw and 15 kw, respectively. A sum of the maximum output powers of the inverters of the virtual system does not exceed a maximum power of an inverter of the original photovoltaic energy storage system. Similarly, a maximum absorption power of the inverter, a maximum charging/discharging power of a battery, a photovoltaic power generation power, an electric quantity and a capacity of an energy storage battery, etc. may be allocated to the virtual system.

Usually, a capability of each virtual system is set according to a fixed distribution relationship, such as the above-mentioned fixed distribution of 12 kw and 15 kw. Advantages of fixed distribution are simple system control and clear power division, and a disadvantage is that a capability of the original system cannot be fully utilized. Still take the above-mentioned inverter output power distribution as an example: a maximum output power of an original system inverter is 27 kw, and 12 kw and 15 kw are allocated to a virtual inverter 1 and a virtual inverter 2, respectively. When the virtual inverter 1 has no power output, that is, the power is 0, and an output power scheduling instruction of the virtual inverter 2 exceeds 15 kw (such as 20 kw), the virtual inverter 2 is limited by a set maximum output capability of the inverter, and the output is 15 kw. However, since the original system inverter may output 27 kw at maximum, and a current virtual inverter 1 has no power output, in principle, the system can respond to a 20 kw scheduling instruction for the virtual inverter 2. In this way, undoubtedly a waste of a surplus power capability of the photovoltaic energy storage system can occur, preventing full utilization of the surplus power capability.

### SUMMARY

The present disclosure aims to solve at least one of the technical problems in the related art. Therefore, the present disclosure provides a method for controlling a parameter of a virtualized twin in a photovoltaic energy storage system. In this way, remote scheduling of a virtual power plant and local scheduling of the photovoltaic energy storage system can be balanced, resource utilization of a local photovoltaic energy storage system can be enhanced, and local power supply reliability of the photovoltaic energy storage system can be improved, thereby enhancing user experience.

In a first aspect, the present disclosure provides a scheduling method for a photovoltaic energy storage system, which is applied to a local photovoltaic energy storage system. The local photovoltaic energy storage system is communicatively connected to a virtual power plant for power scheduling. The method includes: determining, in response to obtaining a virtual scheduling value sent by the virtual power plant, a charge-discharge threshold of a local scheduling value corresponding to the local photovoltaic energy storage system based on the virtual scheduling value and a total rated power corresponding to the local photovoltaic energy storage system, a positive scheduling value representing discharging, and a negative scheduling value represents charging; and performing local scheduling and virtual scheduling on the local photovoltaic energy storage system based on the virtual scheduling value, the local scheduling value, and the charge-discharge threshold.

With the scheduling method for the photovoltaic energy storage system according to the present disclosure, by receiving the virtual scheduling value sent by the virtual power plant, the local scheduling value is limited based on the virtual scheduling value and the total rated power corresponding to the local photovoltaic energy storage system. Therefore, remote scheduling of the virtual power plant and local scheduling of the photovoltaic energy storage system can be balanced by the local photovoltaic energy storage system, and a resource utilization rate of the local photovoltaic energy storage system and local power supply reliability of the photovoltaic energy storage system can be improved, thereby enhancing the user experience.

With the scheduling method for the photovoltaic energy storage system according to the present disclosure, the determining the charge-discharge threshold of the local scheduling value corresponding to the local photovoltaic energy storage system based on the virtual scheduling value and the total rated power corresponding to the local photovoltaic energy storage system includes: determining a target scheduling mode based on a scheduling demand corresponding to the virtual power plant, and the scheduling demand including reserved scheduling, preemptive scheduling, or additive scheduling; and processing, based on the target scheduling mode, the virtual scheduling value and the total rated power corresponding to the local photovoltaic energy storage system, and determining the charge-discharge threshold of the local scheduling value.

With the scheduling method for the photovoltaic energy storage system according to the present disclosure, in response to the target scheduling mode being the reserved scheduling, the processing, based on the target scheduling mode, the virtual scheduling value and the total rated power corresponding to the local photovoltaic energy storage system, and determining the charge-discharge threshold of the local scheduling value includes: dividing the total rated power corresponding to the local photovoltaic energy storage system into a virtual power plant scheduling portion power and a local scheduling portion power, and a sum of the virtual power plant scheduling portion power and the local scheduling portion power being smaller than or equal to the total rated power; and performing local scheduling on the local photovoltaic energy storage system by determining the local scheduling portion power as a limit value.

With the scheduling method for the photovoltaic energy storage system according to the present disclosure, the dividing the total rated power corresponding to the local photovoltaic energy storage system into the virtual power plant scheduling portion power and the local scheduling portion power includes: dividing the total rated power corresponding to the local photovoltaic energy storage system into at least two portions of power, and obtaining the virtual power plant scheduling portion power and the local scheduling portion power.

With the scheduling method for the photovoltaic energy storage system according to the present disclosure, the dividing the total rated power corresponding to the local photovoltaic energy storage system into the at least two portions of power, and obtaining the virtual power plant scheduling portion power and the local scheduling portion power includes: keeping, in response to the virtual power plant scheduling portion power satisfying the virtual scheduling value, the virtual power plant scheduling portion power and the local scheduling portion power unchanged; and adjusting, in response to the virtual power plant scheduling portion power not satisfying the virtual scheduling value, a proportion of the virtual power plant scheduling portion power in the total rated power and a proportion of the local scheduling portion power in the total rated power, respectively, and obtaining an adjusted virtual power plant scheduling portion power and an adjusted local scheduling portion power.

With the scheduling method for the photovoltaic energy storage system according to the present disclosure, in response to the target scheduling mode being the preemptive scheduling, the processing, based on the target scheduling mode, the virtual scheduling value and the total rated power corresponding to the local photovoltaic energy storage system, and determining the charge-discharge threshold of the local scheduling value includes: determining a first remaining available power as a maximum discharge threshold of the local scheduling value, and determining a first numerical value as a minimum discharge threshold of the local scheduling value in response to the virtual scheduling value being positive, and the first remaining available power being a difference between the total rated power and the virtual scheduling value; and determining a second remaining available power as a maximum charge threshold of the local scheduling value, and determining the first numerical value as a minimum charge threshold of the local scheduling value in response to the virtual scheduling value being negative. The second remaining available power is a sum of an opposite number of the total rated power and the negative virtual scheduling value.

With the scheduling method for the photovoltaic energy storage system according to the present disclosure, in response to the target scheduling mode being the additive scheduling, the processing, based on the target scheduling mode, the virtual scheduling value and the total rated power corresponding to the local photovoltaic energy storage system, and determining the charge-discharge threshold of the local scheduling value includes: determining, based on the virtual scheduling value, the total rated power of the local photovoltaic energy storage system as a maximum discharge threshold of the local scheduling value, and determining, based on the virtual scheduling value, an opposite number of a total rated power of the local photovoltaic energy storage system as a maximum charge threshold of the local scheduling value.

With the scheduling method for the photovoltaic energy storage system according to the present disclosure, the virtual scheduling value includes an energy storage virtual scheduling value and an inverter virtual scheduling value. The local scheduling value includes an energy storage local scheduling value and an inverter local scheduling value.

With the scheduling method for the photovoltaic energy storage system according to the present disclosure, the performing the local scheduling on the local photovoltaic energy storage system includes: performing, based on the local scheduling value, the local scheduling on the local photovoltaic energy storage system under the limitation of the charge-discharge threshold.

With the scheduling method for the photovoltaic energy storage system according to the present disclosure, the performing, based on the local scheduling value, the local scheduling on the local photovoltaic energy storage system under the limitation of the charge-discharge threshold includes: calculating a local energy storage state of charge corresponding to local energy storage in the local photovoltaic energy storage system during performing, based on the local scheduling value, the local scheduling on the local photovoltaic energy storage system under the limitation of the charge-discharge threshold; stopping discharging of the local energy storage when the local energy storage state of charge is not greater than a first state of charge; and stopping charging of the local energy storage when the local energy storage state of charge is greater than a second state of charge, and the first state of charge being smaller than the second state of charge.

With the scheduling method for the photovoltaic energy storage system according to the present disclosure, the performing the virtual scheduling on the local photovoltaic energy storage system includes: performing the virtual scheduling on the local photovoltaic energy storage system based on the virtual power plant scheduling portion power in the case of reserved scheduling, and a sum of the virtual power plant scheduling portion power and the local scheduling portion power being smaller than or equal to the total rated power; and performing the virtual scheduling on the local photovoltaic energy storage system based on the virtual scheduling value in the case of preemptive scheduling or additive scheduling.

With the scheduling method for the photovoltaic energy storage system according to the present disclosure, the performing the virtual scheduling on the local photovoltaic energy storage system includes: calculating a virtual energy storage state of charge corresponding to virtual energy storage in the local photovoltaic energy storage system during performing the virtual scheduling on the local photovoltaic energy storage system based on the virtual power plant scheduling portion power; or calculating the virtual energy storage state of charge corresponding to the virtual energy storage in the local photovoltaic energy storage system during performing the virtual scheduling on the local photovoltaic energy storage system based on the virtual scheduling value; stopping discharging for the virtual energy storage when the virtual energy storage state of charge is not greater than a third state of charge; and stopping charging for the virtual energy storage when the virtual energy storage state of charge is greater than a fourth state of charge. The third state of charge is smaller than the fourth state of charge.

The scheduling method for the photovoltaic energy storage system according to the present disclosure includes: determining the total rated power of the local photovoltaic energy storage system as a maximum discharge threshold of the local scheduling value, and determining an opposite number of the total rated power of the local photovoltaic energy storage system as a maximum charge threshold of the local scheduling value in response to the virtual scheduling value sent by the virtual power plant being not received or the virtual scheduling value being a first scheduling value; or determining a local rated power corresponding to the local photovoltaic energy storage system as the maximum discharge threshold of the local scheduling value, and determining an opposite number of the local rated power corresponding to the local photovoltaic energy storage system as the maximum charge threshold of the local scheduling value in response to the virtual scheduling value sent by the virtual power plant being not received or the virtual scheduling value is the first scheduling value; or performing the local scheduling on the local photovoltaic energy storage system based on the maximum discharge threshold and the maximum charge threshold.

In a second aspect, the present disclosure provides a scheduling apparatus for a photovoltaic energy storage system, which is applied to a local photovoltaic energy storage system. The local photovoltaic energy storage system is communicatively connected to a virtual power plant for power scheduling. The apparatus includes: a first processing module configured to determine, in response to obtaining a virtual scheduling value sent by the virtual power plant, a charge-discharge threshold of a local scheduling value corresponding to the local photovoltaic energy storage system based on the virtual scheduling value and a total rated power corresponding to the local photovoltaic energy storage system, a positive scheduling value representing discharging, and a negative scheduling value represents charging; and a second processing module configured to perform local scheduling and virtual scheduling on the local photovoltaic energy storage system based on the virtual scheduling value, the local scheduling value, and the charge-discharge threshold.

With the scheduling apparatus for the photovoltaic energy storage system according to the present disclosure, by receiving the virtual scheduling value sent by the virtual power plant, the local scheduling value is restricted based on the virtual scheduling value and the total rated power corresponding to the local photovoltaic energy storage system. Therefore, remote scheduling of the virtual power plant and local scheduling of the photovoltaic energy storage system can be balanced by the local photovoltaic energy storage system, and the resource utilization rate of the local photovoltaic energy storage system and the local power supply reliability of the photovoltaic energy storage system can be improved, thereby enhancing the user experience.

In a third aspect, the present disclosure provides a photovoltaic energy storage system. The system includes: an energy storage system; and a photovoltaic inverter system electrically connected to the energy storage system. The photovoltaic energy storage system is scheduled by the scheduling apparatus for the photovoltaic energy storage system according to the second aspect.

In a fourth aspect, the present disclosure provides an electronic device. The electronic device includes: a memory; a processor; and a computer program stored on the memory and executable on the processor. The processor is configured to, when executing the computer program, implement the scheduling method for the photovoltaic energy storage system according to the above first aspect.

In a fifth aspect, the present disclosure provides a non-transitory computer-readable storage medium having a computer program stored thereon. The computer program is configured to, when executed by a processor, implement the scheduling method for the photovoltaic energy storage system according to the above first aspect.

In a sixth aspect, the present disclosure provides a computer program product including a computer program. The computer program, when executed by a processor, is configured to implement the scheduling method for the photovoltaic energy storage system according to the above first aspect.

In a seventh aspect, the embodiments of the present disclosure provide a method for adjusting a parameter of a virtual battery, which is used to flexibly adjust a parameter of each virtual battery to improve a resource utilization rate. The method is applied to a photovoltaic energy storage system. An energy storage battery of the photovoltaic energy storage system is divided into a plurality of virtual batteries. Each virtual battery is connected to a virtual photovoltaic energy storage system for serving the virtual photovoltaic energy storage system. The method includes: obtaining an adjustment parameter for a specific virtual battery, the adjustment parameter including a to-be-adjusted virtual capacity and/or a to-be-adjusted virtual electric quantity for the specific virtual battery; adjusting a parameter of the specific virtual battery based on the to-be-adjusted virtual capacity and/or a to-be-adjusted virtual electric quantity; and adjusting parameters of other virtual batteries among the plurality of virtual batteries except for the specific virtual battery based on a capacity and/or an electric quantity of an energy storage battery and the adjusted parameter of the specific virtual battery.

In one embodiment, the obtaining the adjustment parameter for the specific virtual battery includes: obtaining a to-be-adjusted virtual capacity for the specific virtual battery inputted by a user; and keeping a state of charge of the specific virtual battery unchanged, and calculating the to-be-adjusted virtual electric quantity for the specific virtual battery based on a state of charge and the to-be-adjusted virtual capacity of the specific virtual battery.

In one embodiment, the obtaining the adjustment parameter for the specific virtual battery includes: obtaining the to-be-adjusted virtual capacity for the specific virtual battery inputted by the user; and adjusting, in response to an initial virtual capacity of the specific virtual battery being 0, a state of charge of the specific virtual battery based on states of charge of other virtual batteries according to a predetermined virtual battery priority, and calculating the to-be-adjusted virtual electric quantity for the specific virtual battery based on the to-be-adjusted virtual capacity and the adjusted state of charge of the specific virtual battery.

In one embodiment, the adjusting the parameter of the specific virtual battery based on the to-be-adjusted virtual capacity and/or the to-be-adjusted virtual electric quantity includes: determining a to-be-adjusted virtual capacity difference and a to-be-adjusted virtual electric quantity difference for the specific virtual battery based on the to-be-adjusted virtual capacity and the to-be-adjusted virtual electric quantity; and allocating the to-be-adjusted virtual capacity difference and the to-be-adjusted virtual electric quantity difference of the specific virtual battery to other virtual batteries, or compensating the to-be-adjusted virtual capacity difference and the to-be-adjusted virtual electric quantity difference of the specific virtual battery from the other virtual batteries to the specific virtual battery, according to the predetermined virtual battery priority.

In one embodiment, the adjusting parameters of other virtual batteries among the plurality of virtual batteries except for the specific virtual battery based on the capacity and/or the electric quantity of the energy storage battery and the adjusted parameter of the specific virtual battery includes: determining a total virtual capacity of the plurality of virtual batteries as the capacity of the energy storage battery, and determining a total virtual electric quantity of the plurality of virtual batteries as an electric quantity of the energy storage battery; increasing, in response to the to-be-adjusted virtual capacity difference and the to-be-adjusted virtual electric quantity difference of the specific virtual battery being allocated to other virtual batteries, virtual capacities and virtual electric quantities of the other virtual batteries by the virtual capacity difference and the virtual electric quantity difference, respectively; decreasing, in response to the to-be-adjusted virtual capacity difference and the to-be-adjusted virtual electric quantity difference of the specific virtual battery being compensated from the other virtual batteries to the specific virtual battery, the virtual capacities and the virtual electric quantities of the other virtual batteries by the virtual capacity difference and the virtual electric quantity difference, respectively; and adjusting the states of charge of the other virtual batteries based on the adjusted virtual capacities and the adjusted virtual electric quantities of the other virtual batteries.

In one embodiment, the obtaining the adjustment parameter for the specific virtual battery includes: calculating the to-be-adjusted virtual electric quantity for the specific virtual battery based on a charge-discharge power of a virtual photovoltaic energy storage system connected to the specific virtual battery within a specified time period.

In one embodiment, the calculating the to-be-adjusted virtual electric quantity for the specific virtual battery based on the charge-discharge power of the virtual photovoltaic energy storage system connected to the specific virtual battery within the specified time period includes: calculating the to-be-adjusted virtual electric quantity for the specific virtual battery according to the following power integration formula: ${Q}_{i} = {\int }_{0}^{t} {P}_{i} dt + {Q}_{i _ Init}$ where Pᵢ represents a charge-discharge power of an i-th specific virtual battery within a specific time period from 0 to t, Qᵢ represents a to-be-adjusted virtual electric quantity of the i-th specific virtual battery, and Q_{i_Init} represents a current virtual electric quantity of the i-th specific virtual battery, i.e., a virtual electric quantity at moment 0.

In one embodiment, subsequent to the calculating the to-be-adjusted virtual electric quantity for the specific virtual battery based on the charge-discharge power of the virtual photovoltaic energy storage system connected to the specific virtual battery within the specified time period, the method further includes: keeping the virtual capacity of the specific virtual battery unchanged; and adjusting the state of charge of the specific virtual battery based on the virtual capacity and the to-be-adjusted virtual electric quantity of the specific virtual battery.

In one embodiment, the adjusting parameters of other virtual batteries among the plurality of virtual batteries except for the specific virtual battery based on the capacity and/or the electric quantity of the energy storage battery and the adjusted parameter of the specific virtual battery includes: subtracting the adjusted virtual electric quantity of the specific virtual battery from the electric quantity of the energy storage battery to obtain adjusted virtual electric quantities of other virtual batteries; and adjusting the states of charge of the other virtual batteries based on virtual capacities and adjusted virtual electric quantities of the other virtual batteries.

In an eighth aspect, the embodiments of the present disclosure further provide an apparatus for adjusting a parameter of a virtual battery, which is configured to flexibly adjust a parameter of each virtual battery to improve the resource utilization rate. The apparatus is applied to a photovoltaic energy storage system. An energy storage battery of the photovoltaic energy storage system is divided into a plurality of virtual batteries. Each virtual battery is connected to a virtual photovoltaic energy storage system for serving the virtual photovoltaic energy storage system. The apparatus includes: a parameter obtaining module configured to obtain an adjustment parameter for a specific virtual battery, the adjustment parameter including a to-be-adjusted virtual capacity and/or a to-be-adjusted virtual electric quantity for the specific virtual battery; a first adjustment module configured to adjust a parameter of the specific virtual battery based on the to-be-adjusted virtual capacity and/or a to-be-adjusted virtual electric quantity; and a second adjustment module configured to adjust parameters of other virtual batteries among the plurality of virtual batteries except for the specific virtual battery based on a capacity and/or an electric quantity of an energy storage battery and the adjusted parameter of the specific virtual battery.

In a ninth aspect, the embodiments of the present disclosure further provide an electronic device. The electronic device includes: a memory; a processor; and a computer program stored on the memory and executable on the processor. The processor is configured to, when executing the computer program, implement the above method for adjusting the parameter of the virtual battery.

In a tenth aspect, the embodiments of the present disclosure further provide a computer-readable storage medium. The computer-readable storage medium has a computer program stored thereon. The computer program is configured to, when executed by a processor, implement the above method for adjusting the parameter of the virtual battery.

In an eleventh aspect, the embodiments of the present disclosure further provide a computer program product. The computer program product includes a computer program. The computer program is configured to, when executed by a processor, implement the above method for adjusting the parameter of the virtual battery.

In a twelfth aspect, the method for adjusting the parameter of the virtual battery according to the embodiments of the present disclosure includes: obtaining the adjustment parameter for the specific virtual battery, the adjustment parameter including the to-be-adjusted virtual capacity and/or the to-be-adjusted virtual electric quantity for the specific virtual battery; adjusting the parameter of the specific virtual battery based on the to-be-adjusted virtual capacity and/or the to-be-adjusted virtual electric quantity; and adjusting parameters of other virtual batteries among the plurality of virtual batteries except for the specific virtual battery based on the capacity and/or the electric quantity of the energy storage battery and the adjusted parameter of the specific virtual battery. In this way, the parameter of the specific virtual battery can be adjusted based on the adjustment parameter, and parameters of other virtual batteries can be adjusted after the parameter of the specific virtual battery are adjusted based on the capacity and/or the electric quantity of the energy storage battery, flexibly adjusting the parameter of the virtual battery and improving the resource utilization rate.

In a thirteenth aspect, the present disclosure provides a method for controlling a parameter of a virtualized twin in a photovoltaic energy storage system. The photovoltaic energy storage system includes an inverter having a plurality of phases. Each phase of the inverter is independently controlled. The photovoltaic energy storage system is virtually divided into two or more virtual photovoltaic energy storage systems. Each of the two or more virtual photovoltaic energy storage systems is independently configured with an operation mode. Each of the virtual photovoltaic energy storage systems includes a virtual inverter. The method further includes: dynamically allocating power capabilities of the phases of the virtual inverters in the virtual photovoltaic energy storage systems. A sum of the power capabilities of the phases of the virtual inverters in the virtual photovoltaic energy storage systems is not greater than a power capability of a corresponding phase in the photovoltaic energy storage system.

The method for controlling the parameter of the virtualized twin in the photovoltaic energy storage system and a computing device are provided according to the present disclosure. The method is applicable to a scenario where the inverter is a multi-phase inverter with independent control of each phase. Through dynamic allocation of the power capability of each phase in each virtual inverter, a power of each virtual photovoltaic energy storage system can be reliably responded, and the power capability of the photovoltaic energy storage system can be fully utilized.

According to one embodiment of the present disclosure, when dynamically allocating the power capabilities of the phases of the virtual inverters in the virtual photovoltaic energy storage systems, a sum of the power capabilities of the phases of at least one virtual inverter is a set value.

According to one embodiment of the present disclosure, the dynamically allocating power capabilities of the phases of the virtual inverters in the virtual photovoltaic energy storage systems includes: dynamically allocating the power capabilities of the phases of the virtual inverters in the virtual photovoltaic energy storage systems according to the following formula: ${P}_{Nimax} = \frac{{P}_{NiRef}}{{\sum }_{1}^{k} {P}_{NiRef}} ∗ {P}_{Nmax} ,$ where ***P_{Nimax}*** is a power capability of an ***N***-th phase of the virtual inverter in an ***i***-th virtual photovoltaic energy storage system, ***P_{Nmax}*** is the power capability of the ***N***-th phase of the virtual inverter in the photovoltaic energy storage system, ***P_{NiRef}*** is a scheduling instruction of the ***N***-th phase of the virtual inverter in the ***i***-th virtual photovoltaic energy storage system, and ***k*** is the number of the photovoltaic energy storage systems into which the photovoltaic energy storage system is divided.

According to one embodiment of the present disclosure, when the scheduling instruction of the ***N***-th phase of the virtual inverter in the ***i***-th virtual photovoltaic energy storage system is an output power, if a scheduling instruction of an ***N***-th phase of a virtual inverter in an ***i**'*-th virtual photovoltaic energy storage system is an input power, ***P_{Ni'Ref}*** is defined as 0 when calculating and allocating a power capability ***P_{Nimax}*** of the ***N***-th phase of the virtual inverter in the ***i***-th virtual photovoltaic energy storage system. When the scheduling instruction of the ***N***-th phase of the virtual inverter in the ***i***-th virtual photovoltaic energy storage system is the input power, if the scheduling instruction of the ***N***-th phase of the virtual inverter in the ***i'***-th virtual photovoltaic energy storage system is the output power, ***P_{Ni'Ref}*** is defined as 0 when calculating and allocating the power capability ***P_{Nimax}*** of the ***N***-th phase of the virtual inverter in the ***i***-th virtual photovoltaic energy storage system.

According to one embodiment of the present disclosure, the method further includes: setting a priority for each phase in each virtual inverter in each virtual photovoltaic energy storage system; and calculating and allocating a power capability ***P_{Nimax}*** of an ***N***-th phase of a virtual inverter in an ***i***-th virtual photovoltaic energy storage system based on the priority.

According to one embodiment of the present disclosure, a power priority of each virtual inverter in each of ***k*** virtual photovoltaic energy storage systems is predetermined, and a principle for allocating a power capability of the photovoltaic energy storage system is allocation based on the power priority: a scheduling instruction of an ***N***-th phase of the virtual inverter in the virtual photovoltaic energy storage system with a higher power priority is responded firstly, and then when the photovoltaic energy storage system has a remaining power capability, a scheduling instruction of an ***N***-th phase of the virtual inverter in the virtual photovoltaic energy storage system with a lower power priority is responded.

According to one embodiment of the present disclosure, the method further includes: setting an upper limit for a power capability of an ***N***-th phase of the virtual inverter in each virtual photovoltaic energy storage system. When calculating and allocating a power capability ***P_{Nimax}*** of an ***N***-th phase of the virtual inverter in an ***i***-th virtual photovoltaic energy storage system, the allocated parameter value is not allowable to exceed the set upper limit of the virtual inverter.

According to one embodiment of the present disclosure, the power capability is a maximum output power of the inverter or a maximum absorption power of the inverter.

In a fourteenth aspect, the present disclosure further provides an electronic device. The electronic device includes: a memory; a processor; and a computer program stored on the memory and executable on the processor. The processor is configured to, when executing the computer program, implement the method described above.

In a fifteenth aspect, the present disclosure further provides a computer-readable storage medium having a computer program stored therein. The computer program is configured to, when executed by a processor, implement the method described above. The computer-readable storage medium is preferably a non-temporary readable storage medium.

Compared with the related art, advantages and advantageous effects of the method for controlling the parameter of the virtualized twin in the photovoltaic energy storage system in this patent application are as follows. The method for controlling the parameter of the virtualized twin in the photovoltaic energy storage system provided in the present disclosure targets a photovoltaic energy storage system containing the multi-phase inverter for inverter power control, where each phase of the inverter can be controlled independently. By dynamically allocating the power capability of each phase of the virtual inverter in the virtually divided virtual photovoltaic energy storage system, the method can better meet a demand for an unbalanced output of each phase. Therefore, a utilization rate of the power capability of the photovoltaic energy storage system can be improved, avoiding an unnecessary power purchasing action from the power grid, and reducing an operating cost.

In a sixteenth aspect, the present disclosure provides a method for controlling a parameter of a virtualized twin in a photovoltaic energy storage system. The photovoltaic energy storage system is virtually divided into two or more virtual photovoltaic energy storage systems. Each of the two or more virtual photovoltaic energy storage systems is independently configured with an operation mode. The method includes: dynamically allocating a parameter of each component in each of the two or more virtual photovoltaic energy storage systems. A sum of the parameters of a same component in the two or more virtual photovoltaic energy storage systems is not greater than a parameter of a component corresponding to the same component in the photovoltaic energy storage system. The parameter includes a power capability of a power component, a current electric quantity of an energy storage battery, or a rated electric quantity of the energy storage battery.

With the method for controlling the parameter of the virtualized twin in the photovoltaic energy storage system according to the present disclosure, by dynamically allocating the parameters of the virtual photovoltaic energy storage system, the scheduling instruction of the virtual photovoltaic energy storage system can be reliably responded, and the power capability of the photovoltaic energy storage system can be fully utilized. Also, allocation of a capacity of the energy storage battery can be better performed.

According to one embodiment of the present disclosure, the method further includes: for at least one component of at least one virtual photovoltaic energy storage system, presetting a parameter of the at least one component; determining whether a set condition is satisfied; dynamically allocating the parameter of the at least one component when a set condition is satisfied; and allocating the parameter of the at least one component according to the preset parameter when the set condition is not satisfied.

According to one embodiment of the present disclosure, the set condition includes any one or a combination of: A. a voltage of a power grid connected to the photovoltaic energy storage system is within a set range; B. a frequency of the power grid connected to the photovoltaic energy storage system is within a set range; C. a power instruction of a virtual inverter of the at least one virtual photovoltaic energy storage system is within a set range, or the power instruction of the virtual inverter remains within a set range for a predetermined duration; D. the at least one virtual photovoltaic energy storage system has no power scheduling plan within a set time window starting from a current moment; E. a state of charge of a virtual battery corresponding to the at least one virtual photovoltaic energy storage system is within a set range; and F. an output power of an inverter of the at least one virtual photovoltaic energy storage system is smaller than a load power consumption of the at least one virtual photovoltaic energy storage system.

According to one embodiment of the present disclosure, the dynamically allocating a parameter of each component in each of the two or more virtual photovoltaic energy storage systems includes: dynamically allocating the power capability of each component in each of the two or more virtual photovoltaic energy storage systems according to the following formula ${P}_{Nimax} = \frac{{P}_{NiRef}}{{\sum }_{1}^{k} {P}_{NiRef}} \times {P}_{Nmax} ,$ where ***P_{Nimax}*** is a power capability of an ***N***-th component in an ***i***-th virtual photovoltaic energy storage system, ***P_{Nmax}*** is the power capability of the component in the photovoltaic energy storage system, ***P_{NiRef}*** is a scheduling instruction of the ***N***-th component in the ***i***-th virtual photovoltaic energy storage system, and ***k*** is the number of the virtual photovoltaic energy storage systems into which the photovoltaic energy storage system is divided.

According to one embodiment of the present disclosure, when the scheduling instruction of the ***N***-th component in the ***i***-th virtual photovoltaic energy storage system is an output power, if a scheduling instruction of an ***N***-th component in an ***i***'-th virtual photovoltaic energy storage system is an input power, ***P_{Ni'Ref}*** is defined as 0 when calculating and allocating the power capability ***P_{Nimax}*** of the ***N***-th component in the ***i***-th virtual photovoltaic energy storage system. When the scheduling instruction of the ***N***-th component in the ***i***-th virtual photovoltaic energy storage system is the input power, if the scheduling instruction of the ***N***-th component in the ***i'***-th virtual photovoltaic energy storage system is the output power, ***P_{Ni'OutRef}*** is defined as 0 when calculating and allocating the power capability ***P_{Nimax}*** of the ***N***-th component in the ***i***-th virtual photovoltaic energy storage system.

According to one embodiment of the present disclosure, the method further includes: setting a priority for each component in each virtual photovoltaic energy storage system; and calculating and allocating a power capability ***P_{Nimax}*** of an ***N***-th component in an ***i***-th virtual photovoltaic energy storage system based on the priority.

According to one embodiment of the present disclosure, a power priority of an ***N***-th component in each of ***k*** virtual photovoltaic energy storage systems is predetermined, and a principle for allocating a power capability of the photovoltaic energy storage system is allocation based on the power priority: a scheduling instruction of the ***N***-th component in the virtual photovoltaic energy storage system with a higher power priority is responded firstly, and then when the photovoltaic energy storage system has a remaining power capability, a scheduling instruction of the virtual photovoltaic energy storage system with a lower power priority is responded.

According to one embodiment of the present disclosure, the method further includes: setting a priority for the current electric quantity of the energy storage battery in each virtual photovoltaic energy storage system; and calculating and allocating a current electric quantity ***Qᵢ*** of an energy storage battery in an ***i***-th virtual photovoltaic energy storage system based on the priority.

According to one embodiment of the present disclosure, a priority of the current electric quantity of the energy storage battery in each of ***k*** virtual photovoltaic energy storage systems is predetermined, and a principle for allocating the current electric quantity of the energy storage battery of the photovoltaic energy storage system is allocation based on the priority: the current electric quantity of the energy storage battery of the virtual photovoltaic energy storage system with a lower priority for the current electric quantity of the energy storage battery is dynamically allocated to the current electric quantity of the energy storage battery of the virtual photovoltaic energy storage system with a higher priority for the current electric quantity of the energy storage battery.

According to one embodiment of the present disclosure, the method further includes: setting a priority for the rated electric quantity of the energy storage battery in each virtual photovoltaic energy storage system; and calculating and allocating a rated electric quantity ***Cᵢ*** of an energy storage battery in an ***i***-th virtual photovoltaic energy storage system based on the priority.

According to one embodiment of the present disclosure, a priority of the rated electric quantity of the energy storage battery in each of ***k*** virtual photovoltaic energy storage systems is predetermined, and a principle for allocating the rated electric quantity of the energy storage battery of the photovoltaic energy storage system is allocation based on the priority: the rated electric quantity of the energy storage battery of the virtual photovoltaic energy storage system with a lower priority for the rated electric quantity of the energy storage battery is dynamically allocated to the rated electric quantity of the energy storage battery of the virtual photovoltaic energy storage system with a higher priority for the rated electric quantity of the energy storage battery.

According to one embodiment of the present disclosure, the method further includes: setting an upper limit for a parameter of at least one component of at least one of the two or more virtual photovoltaic energy storage systems. When allocating a parameter of a virtual component for which the upper limit is set, the allocated parameter value is not allowable to exceed the set upper limit of the virtual component.

According to one embodiment of the present disclosure, the power capability includes at least one of a photovoltaic generation power of a photovoltaic string, a maximum output power of an inverter, a maximum absorption power of the inverter, a maximum charging power of the energy storage battery, or a maximum discharging power of the energy storage battery.

According to one embodiment of the present disclosure, a component in the photovoltaic energy storage system includes at least one of the photovoltaic string, the inverter, or the energy storage battery. Correspondingly, the component in each virtual photovoltaic energy storage system includes part or all of components in the photovoltaic energy storage system.

In a seventeenth aspect, the present disclosure further provides a computing device. The computing device includes: a memory; a processor; and a computer program stored on the memory and executable on the processor. The processor is configured to, when executing the computer program, implement the method described above.

In an eighteenth aspect, the present disclosure further provides a computer-readable storage medium having a computer program stored therein. The computer program is configured to, when executed by a processor, implement the method described above. The computer-readable storage medium is preferably a non-temporary readable storage medium.

Compared with the related art, advantages and advantageous effects of the method for controlling the parameter of the virtualized twin in the photovoltaic energy storage system, the computing device, and the storage medium in this patent application are as follows. With the method for controlling the parameter of the virtualized twin in the photovoltaic energy storage system according to the present disclosure, parameters of each component in the virtually divided virtual photovoltaic energy storage system are dynamically allocated. The parameters include the power capability of the power component or the capacity of the energy storage battery. In this way, needs of responding to scheduling instructions of different components of different virtual photovoltaic energy storage systems can be better adapted. Therefore, when adopting the control of the parameter of the virtualized twin, the photovoltaic energy storage system can better utilize a rich capacity of the original photovoltaic energy storage system to improve the utilization rate of the power capability of the photovoltaic energy storage system, improving operating stability and reliability of the photovoltaic energy storage system.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a first schematic flowchart illustrating a scheduling method for a photovoltaic energy storage system according to an embodiment of the present disclosure.
FIG. 2 is a first schematic diagram illustrating a principle of a scheduling method for a photovoltaic energy storage system according to an embodiment of the present disclosure.
FIG. 3 is a second schematic diagram illustrating a principle of a scheduling method for a photovoltaic energy storage system according to an embodiment of the present disclosure.
FIG. 4 is a third schematic diagram illustrating a principle of a scheduling method for a photovoltaic energy storage system according to an embodiment of the present disclosure.
FIG. 5 is a schematic structural diagram of a scheduling apparatus for a photovoltaic energy storage system according to an embodiment of the present disclosure.
FIG. 6 is a schematic structural diagram of an electronic device according to an embodiment of the present disclosure.
FIG. 7 is an exemplary diagram illustrating partitioning of a virtual photovoltaic energy storage system according to an embodiment of the present disclosure.
FIG. 8 is an exemplary diagram illustrating partitioning of a virtual battery according to an embodiment of the present disclosure.
FIG. 9 is a flowchart illustrating a method for adjusting a parameter of a virtual battery according to an embodiment of the present disclosure.
FIG. 10 is an exemplary diagram illustrating parameters of a virtual battery after partitioning according to an embodiment of the present disclosure.
FIG. 11 is an exemplary diagram illustrating parameters of the virtual battery of FIG. 4 after parameter adjustment according to an embodiment of the present disclosure.
FIG. 12 is another exemplary diagram illustrating parameters of the virtual battery of FIG. 4 after parameter adjustment according to an embodiment of the present disclosure.
FIG. 13 is another exemplary diagram illustrating parameters of a virtual battery after partitioning according to an embodiment of the present disclosure.
FIG. 14 is an exemplary diagram illustrating parameters of the virtual battery of FIG. 7 after parameter adjustment according to an embodiment of the present disclosure.
FIG. 15 is yet another exemplary diagram illustrating parameters of a virtual battery after partitioning according to an embodiment of the present disclosure.
FIG. 16 is an exemplary diagram illustrating parameters of the virtual battery of FIG. 9 after parameter adjustment according to an embodiment of the present disclosure.
FIG. 17 is a schematic diagram of a parameter adjustment apparatus for a virtual battery according to an embodiment of the present disclosure.
FIG. 18 is a schematic diagram of a computer device according to an embodiment of the present disclosure.
FIG. 19 is a schematic partitioning diagram for virtual twin control of a photovoltaic energy storage system according to an embodiment of the present disclosure.
FIG. 20 is a schematic partitioning diagram for virtual twin control of an inverter in a photovoltaic energy storage system according to an embodiment of the present disclosure.
FIG. 21 is a structural diagram of a computing device according to another embodiment of the present disclosure.
FIG. 22 is a structural diagram of a computer-readable storage medium according to another embodiment of the present disclosure.
FIG. 23 is a schematic partitioning diagram for virtual twin control of a photovoltaic energy storage system according to an embodiment of the present disclosure.
FIG. 24 is a structural diagram of a computing device according to another embodiment of the present disclosure.
FIG. 25 is a structural diagram of a computer-readable storage medium according to another embodiment of the present disclosure.

### DETAILED DESCRIPTION

Technical solutions in embodiments of the present disclosure will be clearly described with reference to the accompanying drawings in the embodiments of the present disclosure. Obviously, the described embodiments are part of the embodiments of the present disclosure, but not all the embodiments. Based on the embodiments of the present disclosure, all other embodiments obtained by those skilled in the art shall fall within the protection scope of the present disclosure.

Terms such as "first" and "second" in the description and the appended claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of the objects is not limited. For example, one or a plurality of first objects may be provided. In addition, "and/or" throughout the description and appended claims indicates at least one of the objects associated with "and/or". The character "/" generally indicates that the associated objects before and after the character are in an "or" relationship.

As a distributed energy source, a photovoltaic energy storage system has a non-negligible influence on stability of a power grid due to factors such as a small capacity, uneven distribution, and uncertainty of photovoltaic energy after being connected to the power grid. In the related art, the distributed energy scheduling strategy of the virtual power plant is mainly implemented to reduce uncertainty of the photovoltaic energy storage system, and stabilize a power generation capacity and a power consumption capacity, enabling the system to achieve economic optimization while providing effective support to the power grid. However, the above method makes remote scheduling of the virtual power plant and local scheduling of the photovoltaic energy storage system contradict, resulting in a low resource utilization rate and decreased local power supply reliability of the photovoltaic energy storage system, and affecting user experience.

A scheduling method for a photovoltaic energy storage system, a scheduling apparatus for a photovoltaic energy storage system, a photovoltaic energy storage system, an electronic device, and a readable storage medium according to an embodiment of the present disclosure are described in detail below with reference to the accompanying drawings through specific embodiments and application scenarios thereof.

The scheduling method for the photovoltaic energy storage system may be applied to a terminal. Specifically, the method may be executed by hardware or software in the terminal.

The terminal includes, but is not limited to, a portable communication device such as a mobile phone or a tablet computer. It should also be understood that, in some embodiments, the terminal may not be the portable communication device, but a desktop computer.

In various embodiments below, a terminal including a display and a touch-sensitive surface is described. However, it should be understood that the terminal may include one or more other physical user interface devices such as a physical keyboard, a mouse, and a joystick.

In the scheduling method for the photovoltaic energy storage system according to the embodiment of the present disclosure, an execution body of the scheduling method for the photovoltaic energy storage system may be the photovoltaic energy storage system, or a scheduling apparatus of the photovoltaic energy storage system disposed at the photovoltaic energy storage system, or a server electrically connected (via wired or wireless link) to the photovoltaic energy storage system, or a user terminal communicatively connected to the photovoltaic energy storage system, the user terminal including but not limited to a mobile terminal and a non-mobile terminal.

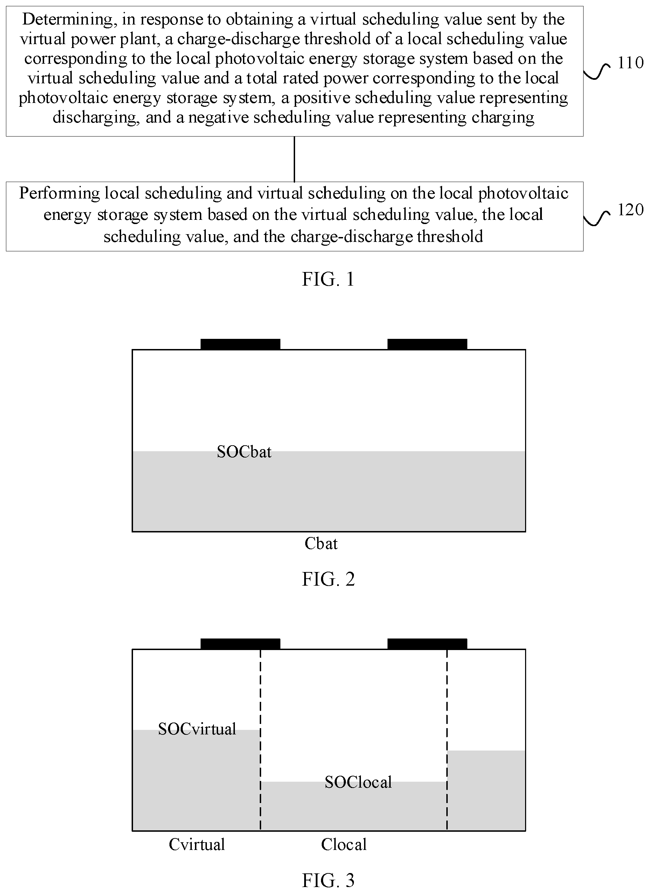

As illustrated in FIG. 1, the scheduling method for the photovoltaic energy storage system includes Step 110, Step 120, and Step 130.

The scheduling method for the photovoltaic energy storage system is applied to a local photovoltaic energy storage system. The local photovoltaic energy storage system is communicatively connected to a virtual power plant for power scheduling. The virtual power plant may be connected to the photovoltaic energy storage system through the cloud, or through a local modbus. The local photovoltaic energy storage system is a power generation system including a photovoltaic inverter system and an energy storage system.

At Step 110, in response to obtaining a virtual scheduling value sent by the virtual power plant, a charge-discharge threshold of a local scheduling value corresponding to the local photovoltaic energy storage system is determined based on the virtual scheduling value and a total rated power corresponding to the local photovoltaic energy storage system.

In this embodiment, the virtual power plant is a market entity that participates in different markets such as a spot power market, an auxiliary service market (such as frequency regulation and peak regulation), and a capacity market, and maximizes energy value through market-oriented means.

The virtual scheduling value is a charging power value or a discharging power value that the virtual power plant needs to schedule. The local photovoltaic energy storage system is a photovoltaic energy storage system to be scheduled by the virtual power plant. The local photovoltaic energy storage system may be a distributed system with a large capacity. The total rated power is a sum of a maximum power that can be stably outputted by a photovoltaic system in the photovoltaic energy storage system and a maximum power that can be stably outputted by an energy storage system in the photovoltaic energy storage system. The local scheduling value is an output power value corresponding to a local load of the local photovoltaic energy storage system. The charge-discharge threshold is a charge threshold and a discharge threshold that are not allowed to be exceeded by the local scheduling value.

A positive scheduling value represents discharging. A negative scheduling value represents charging. In the case where the virtual scheduling value is positive, the virtual scheduling value characterizes a discharging power of the local photovoltaic-energy storage system scheduled by the virtual power plant. In the case where the virtual scheduling value is negative, the virtual scheduling value characterizes a charging power of the local photovoltaic-energy storage system scheduled by the virtual power plant. Similarly, in the case where the local scheduling value is positive, the local scheduling value characterizes that the local photovoltaic energy storage system outputs a power outwardly (e.g., to the load) to meet a demand of the load. In the case where the local scheduling value is negative, the local scheduling value characterizes that the local photovoltaic energy storage system absorbs a power, e.g., purchases power from the power grid.

In an actual execution process, the virtual power plant may send the virtual scheduling value to the local photovoltaic energy storage system based on usage of the power grid to perform scheduling on the power of the local photovoltaic energy storage system.

The power of the local photovoltaic energy storage system may be divided into two or more parts, one part of which is used for virtual power plant scheduling, and the remaining part of which is used to meet the demand of the local load.

As illustrated in FIG. 2, a total capacity of the local photovoltaic energy storage system is described. The total capacity of the local photovoltaic energy storage system may be expressed as Cbat.

As illustrated in FIG. 3, the total capacity of the local photovoltaic energy storage system may be divided into virtual energy storage and local energy storage. The virtual energy storage may be used to respond to the local scheduling value. The local energy storage may be used to respond to the local scheduling value. The virtual energy storage may be denoted as Cvirtual. The local energy storage may be denoted as Clocal. An association relationship among the virtual energy storage, the local energy storage and the total capacity may be determined based on the following formula: Cbat>=Cvirtual+Clocal. It should be noted that an unit of capacity of the local photovoltaic energy storage system is ws.

On the basis of dividing the total capacity of the local photovoltaic energy storage system into the virtual energy storage and the local energy storage, a total state of charge may be further divided into a virtual energy storage state of charge and a local energy storage state of charge. The total state of charge may be represented as SOCbat. The total state of charge SOCbat is an actual state of charge of the photovoltaic energy storage system. The virtual energy storage state of charge may be represented as SOCvirtual. The virtual energy storage state of charge SOCvirtual may be calculated according to a scheduling situation of the virtual energy storage. The local energy storage state of charge may be represented as SOClocal. The local energy storage state of charge SOClocal is a state of charge of energy storage used for local scheduling.

A correlation among the virtual energy storage state of charge, the local energy storage state of charge and the total state of charge may be determined based on the following formula: Cbat*SOCbat>=Cvirtual*SOCvirtual+Clocal*SOClocal. It should be noted that a remaining electric quantity may be calculated by multiplying the capacity and the state of charge.

The energy storage system may also be divided into a virtual energy storage rated power and a local energy storage rated power based on an energy storage rated power. The energy storage rated power may be represented as Pbat_rated. A virtual rated power of the energy storage system may be represented as Pbat_rated_virtual. A local rated power of the energy storage system may be represented as Pbat_rated_local. A correlation among the virtual rated power of the energy storage system, the local rated power of the energy storage system and the energy storage rated power of the energy storage system may be determined based on the following formula: Pbat_rated>=Pbat_rated_virtual+Pbat_rated_local.

Similarly, an inverter rated power of the photovoltaic inverter system may also be divided into the virtual energy storage rated power and the local energy storage rated power. The inverter rated power may be represented as Pinv_rated. The virtual rated power of the photovoltaic inverter may be represented as Pinv_rated_virtual. The local rated power of the photovoltaic inverter may be represented as Pinv_rated_local. A correlation among the virtual energy storage rated power, the local energy storage rated power, and the inverter rated power of the photovoltaic inverter may be determined based on the following formula: Pinv_rated>=Pinv_rated_virtual+Pinv_rated_local. It should be noted that the virtual rated power of the photovoltaic inverter and the virtual rated power of the energy storage system may be the same or different in a numerical value.

In the actual execution process, after receiving the virtual scheduling value of the virtual power plant, the local photovoltaic energy storage system may limit the local scheduling value based on the virtual scheduling value and the total rated power corresponding to the local photovoltaic energy storage system, enabling the local photovoltaic energy storage system to still maintain a local scheduling demand on the basis of responding to the virtual scheduling value.

At Step 120, local scheduling and virtual scheduling are performed on the local photovoltaic energy storage system based on the virtual scheduling value, the local scheduling value, and the charge-discharge threshold.

In this step, it should be noted that in the process of scheduling the local photovoltaic energy storage system, the photovoltaic inverter system and the energy storage system may be scheduled, respectively. In addition, scheduling of the photovoltaic inverter system and the energy storage system may include remote scheduling based on the virtual scheduling value sent by the virtual power plant and local scheduling based on the local scheduling value.

In some embodiments, the virtual scheduling value includes an energy storage virtual scheduling value and an inverter virtual scheduling value. The local scheduling value includes an energy storage local scheduling value and an inverter local scheduling value.

In this embodiment, the energy storage virtual scheduling value is a virtual scheduling value for remotely scheduling the energy storage system. The energy storage virtual scheduling value may be represented as: Pbat_virtual*. The inverter virtual scheduling value is a virtual scheduling value for remotely scheduling the photovoltaic inverter. The inverter virtual scheduling value may be represented as Pinv_virtual*. The energy storage local scheduling value is a scheduling value for performing local scheduling on the energy storage system. The energy storage local scheduling value may be represented as Pbat_local*. The inverter local scheduling value is a scheduling value for locally scheduling the photovoltaic inverter system. The inverter local scheduling value may be represented as Pinv_local*.

In the actual execution process, the energy storage system may be scheduled based on the energy storage virtual scheduling value and the energy storage local scheduling value. The photovoltaic inverter system may be scheduled based on the inverter virtual scheduling value and the inverter local scheduling value.

A scheduling mode of the energy storage system and a scheduling mode of the photovoltaic inverter system may be determined based on the following formulas: Pbat*=Pbat_virtual*+Pbat_local*; Pinv*=Pinv_virtual*+Pinv_local*, where Pbat* is a scheduling value of the energy storage system, Pbat_virtual* is the energy storage virtual scheduling value, Pbat_local* is the energy storage local scheduling value, Pinv* is an inverter scheduling value, and Pinv_virtual* is the inverter virtual scheduling value. The inverter virtual scheduling value is numerically equal to Pbat_virtual*. Pinv_local* is the inverter local scheduling value.

With the scheduling method for the photovoltaic energy storage system according to the embodiments of the present disclosure, by dividing the virtual scheduling value into the energy storage virtual scheduling value and the inverter virtual scheduling value, and dividing the local scheduling value into the energy storage local scheduling value and the inverter local scheduling value, the energy storage system can be effectively scheduled based on the energy storage virtual scheduling value and the energy storage local scheduling value, and the photovoltaic inverter system can be effectively scheduled based on the inverter virtual scheduling value and the inverter local scheduling value, to improve scheduling accuracy.

In the actual execution process, after the charge-discharge threshold is determined, the local photovoltaic energy storage system is made to respond to scheduling of the virtual power plant based on the virtual scheduling value, and the local scheduling is performed based on the local scheduling value and the charge-discharge threshold, to simultaneously balance remote scheduling of the virtual power plant and local scheduling of the photovoltaic energy storage system.

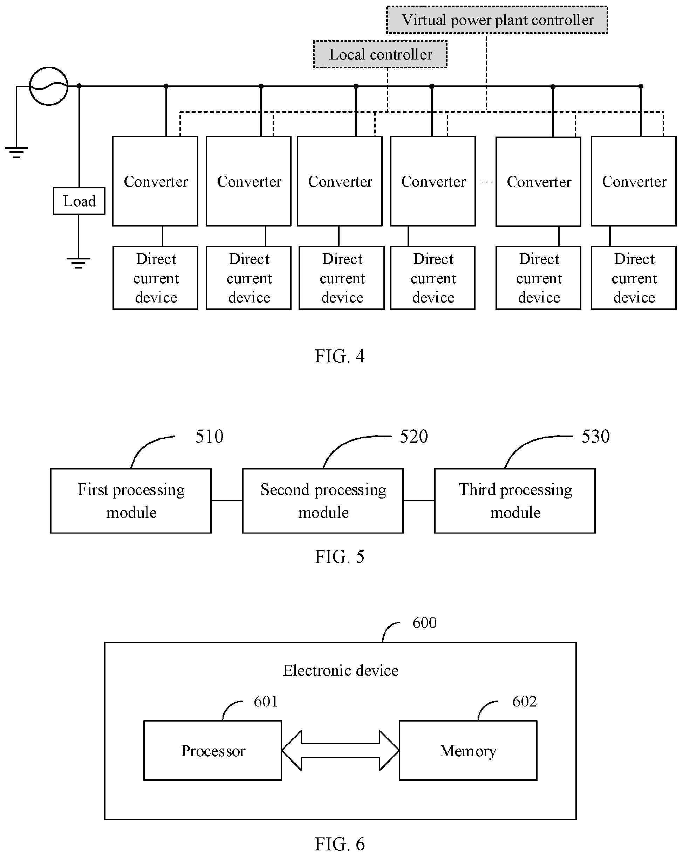

As illustrated in FIG. 4, in a practical application scenario, a virtual power plant controller may be connected to the power grid to perform scheduling on the local photovoltaic energy storage system.

The power grid can provide electricity supply. A local controller may receive a power from the power grid and distribute the power as needed, i.e., perform local scheduling. A converter can be connected to the local controller and a direct current device. The converter may be configured to convert an alternating current supplied by the power grid to a direct current to adapt to a demand of the direct current device. The direct current device is a device requiring the direct current for operation, such as a direct current motor, an LED light, etc. The virtual power plant controller is connected to the local controller and the converter to participate in scheduling and management of the power. The virtual power plant controller may receive operating status information from the local controller and the converter and send a control instruction as needed. The load is a party demanding an electrical power, and used to consume electricity provided by the power grid. A power of the power grid may flow into the local controller. A power flowing out of the local controller is processed by the converter, converted into the direct current, and then flows to various direct current devices. The virtual power plant controller can be in communication with the local controller to perform remote scheduling on the local power.

In the process of research and development, it was found that the photovoltaic energy storage system, as the distributed energy source, has the non-negligible influence on stability of the power grid due to factors such as small capacity, uneven distribution, and uncertainty of photovoltaic energy after being connected to the power grid. In the related art, the distributed energy scheduling strategy of the virtual power plant is mainly implemented to reduce uncertainty of the photovoltaic energy storage system, and stabilize the power generation capacity and the power consumption capacity, enabling the system to achieve economic optimization while providing effective support to the power grid. However, the above method makes remote scheduling of the virtual power plant and local scheduling of the photovoltaic energy storage system contradict, resulting in the low resource utilization rate and decreased local power supply reliability of the photovoltaic energy storage system, and affecting the user experience.

By obtaining the virtual scheduling value sent by the virtual power plant in the present disclosure, the charge-discharge threshold of the local scheduling value corresponding to the local photovoltaic energy storage system is determined based on the virtual scheduling value and the total rated power corresponding to the local photovoltaic energy storage system, effectively providing part of energy storage for the virtual power plant to perform scheduling. In addition, a remaining part of energy storage responds to the local scheduling, enabling the local photovoltaic energy storage system to balance the remote scheduling of the virtual power plant and the local scheduling of the photovoltaic energy storage system, improving the resource utilization rate of the local photovoltaic energy storage system and the local power supply reliability of the photovoltaic energy storage system, and thus enhancing the user experience.

With the scheduling method for the photovoltaic energy storage system according to the embodiments of the present disclosure, by receiving the virtual scheduling value sent by the virtual power plant, the local scheduling value is restricted based on the virtual scheduling value and the total rated power corresponding to the local photovoltaic energy storage system. Therefore, remote scheduling of the virtual power plant and local scheduling of the photovoltaic energy storage system can be balanced by the local photovoltaic energy storage system, and the resource utilization rate of the local photovoltaic energy storage system and the local power supply reliability of the photovoltaic energy storage system can be improved, thereby enhancing the user experience.

In some embodiments, the Step 110 may further include: determining a target scheduling mode based on a scheduling demand corresponding to the virtual power plant, the scheduling demand including reserved scheduling, preemptive scheduling, or additive scheduling; and processing, based on the target scheduling mode, the virtual scheduling value and the total rated power corresponding to the local photovoltaic energy storage system, and determining the charge-discharge threshold of the local scheduling value.

In this embodiment, the scheduling demand is a demand for the virtual power plant to schedule.

The reserved scheduling reserves a rated power allocated to the virtual energy storage, and limits a local scheduling instruction value within the local rated power. The preemptive scheduling performs a priority response to the virtual scheduling value, and uses a remaining available power of the local photovoltaic energy storage system to respond to the local scheduling. The additive scheduling adds the virtual scheduling value sent by the virtual power plant remote scheduling and the local scheduling instruction value as a total power instruction of the inverter. The target scheduling mode is one of the reserved scheduling, the preemptive scheduling, or the additive scheduling. The target scheduling mode is a scheduling mode corresponding to this scheduling performed by the virtual power plant. The target scheduling mode may be customized based on the virtual power plant, or may be determined based on characteristics of the virtual power plant or an actual situation of the virtual scheduling value, which is not limited in the present disclosure. It should be noted that charge-discharge thresholds determined by different target scheduling modes may be the same or different.

In the actual execution process, after obtaining the virtual scheduling value, a target scheduling mode responding to the virtual scheduling value is determined based on the scheduling demand corresponding to the virtual power plant. Through a requirement of the target scheduling mode, the virtual scheduling value and the total rated power corresponding to the local photovoltaic energy storage system are processed. Therefore, the local scheduling value is limited based on the requirement of the target scheduling mode, and the charge-discharge threshold is obtained.

With the scheduling method for the photovoltaic energy storage system according to the embodiments of the present disclosure, the target scheduling mode is determined through the scheduling demand corresponding to the virtual power plant. The virtual scheduling value and the total rated power corresponding to the local photovoltaic energy storage system are processed based on a specific scheduling mode to determine the charge-discharge threshold. A variety of charge-discharge threshold determination methods are provided, improving flexibility of charge-discharge threshold determination, which is suitable for a variety of use scenarios.

In some embodiments, in response to the target scheduling mode being the reserved scheduling, the processing, based on the target scheduling mode, the virtual scheduling value and the total rated power corresponding to the local photovoltaic energy storage system, and determining the charge-discharge threshold of the local scheduling value may further include: dividing the total rated power corresponding to the local photovoltaic energy storage system into a virtual power plant scheduling portion power and a local scheduling portion power, a sum of the virtual power plant scheduling portion power and the local scheduling portion power being smaller than or equal to the total rated power; and performing local scheduling on the local photovoltaic energy storage system by determining the local scheduling portion power as a limit value.

In this embodiment, the virtual power plant scheduling portion power is a power scheduled by the virtual power plant out of the total rated power of the local photovoltaic energy storage system. The local scheduling portion power is a power for local scheduling among the total rated power of the local photovoltaic energy storage system. In the actual execution process, a numerical value of the virtual power plant scheduling portion power may be the same as or different from a numerical value of the local scheduling portion power. It should be noted that the limit value is a charge-discharge threshold that limits the local scheduling value.

A range of the local scheduling value may be determined based on the following formulas: |Pinv_local*|<Pinv_rated_local; |Pbat_local*|<Pbat_rated_local, where Pinv_local* is the inverter local scheduling value, Pinv_rated_local is a local scheduling portion power of the photovoltaic inverter, Pbat_local* is the energy storage local scheduling value, and Pbat_rated_local is the local scheduling portion power for the energy storage system.

With the scheduling method for the photovoltaic energy storage system according to the embodiments of the present disclosure, by dividing the total rated power corresponding to the local photovoltaic energy storage system into the virtual power plant scheduling portion power and the local scheduling portion power, and the local scheduling portion power is determined as a local scheduling limit value, the local photovoltaic energy storage system can also respond to the virtual power plant scheduling in the process of responding to the local scheduling, improving a scheduling efficiency.

In some embodiments, the performing local scheduling on the local photovoltaic energy storage system by determining the local scheduling portion power as the limit value may further include: determining a positive local scheduling portion power as a maximum discharge threshold of the local scheduling value, and determining a first numerical value as a minimum discharge threshold of the local scheduling value in response to the virtual scheduling value being positive; and determining an opposite number of a local scheduling portion power as a maximum charge threshold of the local scheduling value, and determining the first numerical value as a minimum charge threshold of the local scheduling value in response to the virtual scheduling value being negative.

In this embodiment, in response to the virtual scheduling value being positive, it indicates that the virtual power plant is to perform discharge scheduling. In response to the virtual scheduling value being negative, it indicates that the virtual power plant is to perform charging scheduling. The maximum discharge threshold is a power threshold that is not allowable to be exceeded by the discharging power of the local photovoltaic energy storage system during local discharge scheduling. The minimum discharge threshold is a power threshold that needs to be exceeded by the discharging power of the local photovoltaic energy storage system during local discharge scheduling. The maximum charge threshold is a power threshold that is not allowable to be exceeded by the charging power of the local photovoltaic energy storage system during the local charge scheduling. The minimum charge threshold is a power threshold that needs to be exceeded by the charging power of the local photovoltaic energy storage system during the local charge scheduling. The first value is a power threshold that needs to be exceeded by the power of the local photovoltaic energy storage system during the local scheduling. A specific value of the first numerical value may be defined by the user or determined as needed. For example, the first numerical value may be 0 or a numerical value close to 0, which is not limited in the present disclosure.

It should be noted that, to improve a priority of remote scheduling of the virtual power plant, the local power may be limited when responding to the scheduling.

In the actual execution process, in response to the target scheduling mode being the reserved scheduling, the total rated power corresponding to the local photovoltaic energy storage system is divided into the virtual power plant scheduling portion power and the local scheduling portion power.

In response to the virtual scheduling value being positive, by limiting the local scheduling value by the positive local scheduling portion power, the positive local scheduling portion power is determined as the maximum discharge threshold. That is, the local scheduling value is not allowable to exceed the local scheduling portion power. The local scheduling value is limited by the first numerical value, i.e., the local scheduling value needs to exceed the first numerical value.

It should be noted that, in response to the virtual scheduling value being positive, the local scheduling value is between the first numerical value and the positive local scheduling portion power, indicating that when the virtual power plant performs discharge scheduling, the local scheduling also needs to perform discharge scheduling.

In the case where the virtual power plant performs remote scheduling and issues a discharge scheduling instruction, the range of local scheduling value may be determined based on the following formulas: 0<Pinv_local*<Pinv_rated_local; 0<Pbat_local*<Pbat_rated_local.

Similarly, in response to the virtual scheduling value being negative, by limiting the local scheduling value by an opposite number of the local scheduling portion power, the opposite number of the local scheduling portion power is determined as the maximum charge threshold. That is, the local scheduling value is not allowable to exceed the local scheduling portion power. The local scheduling value is limited by the first numerical value, i.e., the local scheduling value needs to exceed the first numerical value.

It should be noted that, in response to the virtual scheduling value being negative, the local scheduling value is between the opposite number of the local scheduling portion power and the first numerical value, indicating that when the virtual power plant performs charge scheduling, the local scheduling also needs to perform charge scheduling.

In the case where the virtual power plant performs remote scheduling and issues a charge scheduling instruction, the range of the local scheduling value may be determined based on the following formulas: -Pinv_rated_local<Pinv_local*<0; -Pbat_rated_local*<Pbat_local*<0.

With the scheduling method for the photovoltaic energy storage system according to the embodiments of the present disclosure, the local scheduling value is limited by the local scheduling portion power to narrow a scheduling range of the local scheduling, enabling the local photovoltaic energy storage system to respond to scheduling of the virtual power plant. Further, local scheduling can be performed on the basis of ensuring the scheduling demand of the virtual power plant, alleviating contradiction between the virtual power plant scheduling and the local scheduling. In addition, based on a positive virtual scheduling value or a negative virtual scheduling value, the local scheduling value is limited to enhance a priority of virtual power plant scheduling.

In some embodiments, the dividing the total rated power corresponding to the local photovoltaic energy storage system into the virtual power plant scheduling portion power and the local scheduling portion power may further include: dividing the total rated power corresponding to the local photovoltaic energy storage system into at least two portions of power, to obtain the virtual power plant scheduling portion power and the local scheduling portion power.

In this embodiment, during actual execution, the total rated power corresponding to the local photovoltaic energy storage system may be divided into two or more portions of power.

A proportion of each portion of power in the total rated power may be defined by the user. For example, the proportion of each portion of power in the total rated power is 50%: one portion is allocated to virtual power plant scheduling, and another portion is allocated to local scheduling.

In the actual execution process, multiple historical virtual scheduling values may also be collected. Multiple historical dashed line scheduling values may be learned through machine learning or a neural network model to determine an appropriate proportion of the virtual power plant scheduling portion power, to further obtian the local scheduling portion power from a part of the total rated power other than the virtual power plant scheduling portion power.

With the scheduling method for the photovoltaic energy storage system according to the embodiments of the present disclosure, by dividing the total rated power corresponding to the local photovoltaic energy storage system into two or more portions of power, and allocating each portion of power to the virtual power plant scheduling and the local scheduling, the virtual power plant scheduling portion power and the local scheduling portion power can be obtained, and independent power channels for the virtual power plant and the local scheduling are allocated, reducing mutual influence between the virtual scheduling and the local scheduling, and improving reliability of the scheduling.

In some embodiments, the dividing the total rated power corresponding to the local photovoltaic energy storage system into the at least two portions of power, and obtaining the virtual power plant scheduling portion power and the local scheduling portion power may further include: keeping, in response to the virtual power plant scheduling portion power satisfying the virtual scheduling value, the virtual power plant scheduling portion power and the local scheduling portion power unchanged; and adjusting, in response to the virtual power plant scheduling portion power not satisfying the virtual scheduling value, a proportion of the virtual power plant scheduling portion power in the total rated power and a proportion of the local scheduling portion power in the total rated power, respectively, and obtaining an adjusted virtual power plant scheduling portion power and an adjusted local scheduling portion power.

In this embodiment, the virtual power plant scheduling portion power not satisfying the virtual scheduling value means that the virtual power plant scheduling portion power is smaller than the virtual scheduling value, i.e., the virtual power plant scheduling portion power cannot meet the scheduling demand of the virtual power plant. The adjusted virtual power plant scheduling portion power is a virtual power plant scheduling portion power after the power is increased. The adjusted local scheduling portion power is a local scheduling portion power after the power is reduced or a local scheduling portion power remaining unchanged.

In the actual execution process, when the virtual power plant scheduling portion power satisfies the virtual scheduling value, it indicates that the local photovoltaic energy storage system can normally respond to the remote scheduling of the virtual power plant. In this case, the virtual power plant scheduling portion power and the local scheduling portion power can be kept unchanged.

When the virtual power plant scheduling portion power does not satisfy the virtual scheduling value, it indicates that the local photovoltaic energy storage system cannot normally respond to the remote scheduling of the virtual power plant. In this case, the proportion of the virtual power plant scheduling portion power in the total rated power can be increased.

Taking the total rated power divided into two portions as an example, after the virtual power plant scheduling portion power is increased, the local scheduling portion power may be correspondingly reduced.

Taking the total rated power as three portions as an example, after the virtual power plant scheduling portion power is increased, the local scheduling portion power may be kept unchanged, and remaining portions of power except the virtual power plant scheduling portion power and the local scheduling portion power may be correspondingly reduced. Also, after the virtual power plant scheduling portion power is increased, the local scheduling portion power may be reduced, and the remaining portions of power except the virtual power plant scheduling portion power and the local scheduling portion power may remain unchanged.

When the remaining portions of power except the virtual power plant scheduling portion power and the local scheduling portion power is reduced and the virtual scheduling value still cannot be satisfied, the local scheduling portion power may be further reduced to obtain the adjusted virtual power plant scheduling portion power and the adjusted local scheduling portion power.

With the scheduling method for the photovoltaic energy storage system according to the embodiments of the present disclosure, by comparing whether the virtual power plant scheduling portion power meets the virtual scheduling value, the virtual power plant scheduling portion power is flexibly adjusted to allow the adjusted virtual power plant scheduling portion power to meet the virtual scheduling value, thereby improving a success rate of the remote scheduling of the virtual power plant.

In some embodiments, in response to the target scheduling mode being the preemptive scheduling, the processing, based on the target scheduling mode, the virtual scheduling value and the total rated power corresponding to the local photovoltaic energy storage system, and determining the charge-discharge threshold of the local scheduling value may further include: determining a first remaining available power as a maximum discharge threshold of the local scheduling value, and determining a first numerical value as a minimum discharge threshold of the local scheduling value in response to the virtual scheduling value being positive, the first remaining available power being a difference between the total rated power and the virtual scheduling value; and determining a second remaining available power as a maximum charge threshold of the local scheduling value, and determining the first numerical value as a minimum charge threshold of the local scheduling value in response to the virtual scheduling value being negative. In this embodiment, the first remaining available power is the difference between the total rated power and the virtual scheduling value.

The first remaining available power is used for the local photovoltaic energy storage system to respond to local discharge scheduling. The second remaining available power is a sum of an opposite number of a total rated power and the negative virtual scheduling value. The second remaining available power is used for the local photovoltaic energy storage system to respond to local charge scheduling.

In the actual execution process, in the case where the virtual power plant issues a discharge scheduling instruction, the local scheduling value may be limited based on the following formulas: 0<Pinv_local*<Pinv_rated-Pinv_virtual*; 0<Pbat_local*<Pbat_rated-Pbat_virtual*.

In the case where the virtual power plant issues a charge scheduling instruction, the local scheduling value may be limited based on the following formulas: -Pinv_rated-Pinv_virtual*<Pinv_local*<0; -Pbat_rated-Pbat_virtual*<Pbat_local*<0.

After obtaining the virtual scheduling value, a difference operation is performed on the total rated power and the virtual scheduling value to obtain a first remaining available power. The local scheduling value is limited by the first remaining available power. That is, the first remaining available power is determined as a maximum discharge threshold that the local scheduling value can reach, and the first numerical value is determined as a minimum discharge threshold that the local scheduling value needs to exceed.

It should be noted that, in response to the virtual scheduling value being positive, the local scheduling value is between the first numerical value and the first remaining available power, indicating that when the virtual power plant performs discharge scheduling, the local scheduling also needs to perform discharge scheduling.

By adding the opposite number of the total rated power and the negative virtual scheduling value, the second remaining available power can be obtained. With the second remaining available power, the local scheduling value is limited. That is, the second remaining available power is determined as the maximum charge threshold that the local scheduling value can reach, and the first numerical value is determined as the minimum charge threshold that the local scheduling value needs to exceed.

It should be noted that, in response to the virtual scheduling value being negative, the local scheduling value is between the second remaining available power and the first numerical value, indicating that when the virtual power plant performs charge scheduling, the local scheduling also needs to perform charge scheduling. When the first remaining available power is the first numerical value, the local photovoltaic energy storage system cannot respond to the local discharge scheduling. Similarly, when the second remaining available power is the first numerical value, the local photovoltaic energy storage system cannot respond to the local charge scheduling.

With the scheduling method for the photovoltaic energy storage system according to the embodiments of the present disclosure, the local scheduling value is limited for discharge by the first remaining available power and the first numerical value, and the local scheduling value is limited for charge by the second remaining available power and the first numerical value. In this way, the local photovoltaic energy storage system can respond to the scheduling value of the virtual power plant in priority, and the remaining available power in the local photovoltaic energy storage system can be utilized to respond to the local scheduling, reasonably dividing energy of the local photovoltaic energy storage system, and improving the resource utilization rate.

In some embodiments, in response to the target scheduling mode being the additive scheduling, the processing, based on the target scheduling mode, the virtual scheduling value and the total rated power corresponding to the local photovoltaic energy storage system, and determining the charge-discharge threshold of the local scheduling value may further include: determining, based on the virtual scheduling value, the total rated power of the local photovoltaic energy storage system as a maximum discharge threshold of the local scheduling value, and determining, based on the virtual scheduling value, an opposite number of the total rated power of the local photovoltaic energy storage system as a maximum charge threshold of the local scheduling value.

In this embodiment, when the target scheduling mode is the additive scheduling, the local scheduling value may not be limited. That is, charging and discharging may be performed locally based on the total rated power of the local photovoltaic energy storage system. That is, during the charge scheduling of the local scheduling value, the charging power can reach up to the total rated power. During the discharge scheduling of the local scheduling value, the discharging power can reach up to the total rated power.

In some embodiments, in response to the virtual scheduling value being positive, a third remaining available power may be determined as the maximum discharge threshold of the local scheduling value, and the first numerical value may be determined as the minimum discharge threshold of the local scheduling value. The opposite number of the total rated power corresponding to the local photovoltaic energy storage system is determined as the maximum charge threshold of the local scheduling value. The first numerical value is determined as the minimum charge threshold of the local scheduling value.

In response to the virtual scheduling value being negative, the total rated power corresponding to the local photovoltaic energy storage system is determined as the maximum discharge threshold of the local scheduling value, and the first numerical value is determined as the minimum discharge threshold of the local scheduling value. A fourth remaining available power is determined as a maximum charge threshold of the local scheduling value. The first numerical value is determined as the minimum charge threshold of the local scheduling value.

In this embodiment, the third remaining available power is a difference between the total rated power and the virtual scheduling value. The fourth remaining available power is a sum of the opposite number of the total rated power and the virtual scheduling value.

In the actual execution process, in the case where the virtual power plant issues the discharge scheduling instruction, the local scheduling value may be limited based on the following formulas: -Pinv_rated<Pinv_local*<Pinv_rated-Pinv_virtual*; -Pbat_rated<Pbat_local*<Pbat_rated-Pbat_virtual*. In the case where the virtual power plant issues the charge scheduling instruction, the local scheduling value may be limited based on the following formulas: -Pinv_rated-Pinv_virtual*<Pinv_local*<Pinv_rated; -Pbat_rated-Pbat_virtual*<Pbat_local*<Pbat_rated.

In the actual execution process, in the case where the virtual power plant sends the discharge scheduling instruction, after receiving the virtual scheduling value, the difference between the total rated power and the virtual scheduling value is calculated to obtain the third remaining available power.

The third remaining available power is determined as the maximum discharge threshold, i.e., a power threshold that the local scheduling value is not allowable to exceed during discharging. The first numerical value is determined as a power threshold that the local scheduling value needs to exceed during charging.

In addition, it is also necessary to determine the opposite number of the total rated power corresponding to the local photovoltaic energy storage system as the maximum charge threshold of the local scheduling value, and determine the first numerical value as the minimum charge threshold of the local scheduling value. That is, a range of the local scheduling value is between the opposite number of the total rated power corresponding to the local photovoltaic energy storage system and the third remaining available power.

The range of the local scheduling value may be determined based on the following formulas: -Pinv_rated<Pinv_local*<Pinv_rated-Pinv_virtual*; -Pbat_rated<Pbat_local*<Pbat_rated-Pbat_virtual*.

It should be noted that, in the case where the virtual power plant issues the discharge scheduling instruction, the local scheduling value is limited between the third remaining available power and the opposite number of the total rated power corresponding to the local photovoltaic energy storage system. The local photovoltaic energy storage system can perform both discharge scheduling and charge scheduling.

In the case where the virtual power plant issues the charge scheduling instruction, after receiving the virtual scheduling value, the sum of the opposite number of the total rated power and the virtual scheduling value is calculated to obtain the fourth remaining available power.

The fourth remaining available power is determined as the maximum charge threshold, i.e., a power threshold that the local scheduling value is not allowable to exceed during charging. The first numerical value is determined as the power threshold that the local scheduling value needs to exceed during charging.

In addition, it is also necessary to determine the total rated power corresponding to the local photovoltaic energy storage system as the maximum discharge threshold of the local scheduling value, and determine the first numerical value as the minimum charge threshold of the local scheduling value. That is, the range of the local scheduling value is between the fourth remaining available power and the total rated power corresponding to the local photovoltaic energy storage system.

The range of the local scheduling value may be determined based on the following formulas: -Pinv_rated-Pinv_virtual*<Pinv_local*<Pinv_rated; -Pbat_rated-Pbat_virtual*<Pbat_local*<Pbat_rated.

It should be noted that, in the case where the virtual power plant issues the charge scheduling instruction, the local scheduling value is limited between the fourth remaining available power and the total rated power corresponding to the local photovoltaic energy storage system. The local photovoltaic energy storage system can perform both the discharge scheduling and the charge scheduling.

With the scheduling method for the photovoltaic energy storage system according to the embodiments of the present disclosure, in response to the virtual scheduling value being positive, the local scheduling value is limited between the opposite number of the total rated power corresponding to the local photovoltaic energy storage system and the third remaining available power; and in response to the virtual scheduling value being negative, the local scheduling value is limited between the fourth remaining available power and the total rated power corresponding to the local photovoltaic energy storage system. Therefore, the local photovoltaic energy storage system can perform discharge scheduling or charge scheduling locally on the basis of responding to the virtual scheduling, which is not affected by the virtual scheduling, improving flexibility of local scheduling.

In the actual execution process, when the target scheduling mode is determined as the additive scheduling, the local scheduling may be performed based on an actual operating status of the local photovoltaic energy storage system to meet a usage demand of the local load.

With the scheduling method for the photovoltaic energy storage system according to the embodiments of the present disclosure, by determining the target scheduling mode as the additive scheduling, the range of the local scheduling value is limited between the total rated power and the opposite number of the total rated power. That is, there is no need to limit the local scheduling value, and an actual demand of the local scheduling is guaranteed on the basis of responding to the virtual power plant scheduling.

It should be noted that in the process of the reserved scheduling, the preemptive scheduling, or the additive scheduling, when calculating the local scheduling value, a capacity of a local available energy storage device may be taken into account, i.e., power calculation and limitation is performed based on a local energy storage state of charge.

In some embodiments, the performing local scheduling on the local photovoltaic energy storage system may further include: performing, based on the local scheduling value, the local scheduling on the local photovoltaic energy storage system under the limitation of the charge-discharge threshold.

In this embodiment, when the local photovoltaic energy storage system needs to perform the local scheduling, after the local scheduling value is obtained, a magnitude relationship between the local scheduling value and the charge-discharge threshold may be compared. When the local scheduling value exceeds the charge-discharge threshold, the local scheduling value may be updated to the maximum charge threshold or the maximum discharge threshold of the charge-discharge threshold, to perform the local scheduling on the local photovoltaic energy storage system.

For example, a case that the local scheduling value is 50 kw and the maximum discharge threshold is 40 kw is taken as an example, the local scheduling value exceeds the maximum discharge threshold. In this case, it is necessary to update the local scheduling value to 40 kw, and perform the local discharge scheduling based on the updated local scheduling value.

For another example, a case that the local scheduling value is -50 kw and the maximum charge threshold is -40 kw is taken as an example, the local scheduling value exceeds the maximum charge threshold. In this case, the local scheduling value needs to be updated to -40 kw, and the local charge scheduling is performed based on the updated local scheduling value.

In some embodiments, the performing, based on the local scheduling value, the local scheduling on the local photovoltaic energy storage system under the limitation of the charge-discharge threshold may further include: calculating a local energy storage state of charge corresponding to local energy storage in the local photovoltaic energy storage system during performing, based on the local scheduling value, the local scheduling on the local photovoltaic energy storage system under the limitation of the charge-discharge threshold; stopping discharging of the local energy storage when the local energy storage state of charge is not greater than a first state of charge; and stopping charging of the local energy storage when the local energy storage state of charge is greater than a second state of charge. The first state of charge is smaller than the second state of charge.

In this embodiment, the local energy storage state of charge is a locally available state of charge. The local energy storage state of charge may be represented as SOClocal.

The local energy storage state of charge may be calculated based on the following formula: $SOClocal \left(t\right) = SOClocal \left(t0\right) - \frac{{\int }_{t 0}^{t} Pbat _ {local}^{∗} \left(t\right)}{Clocal} ,$ where SOClocal(t) is a local energy storage state of charge at a moment t, SOClocal(t0) is a local energy storage state of charge at an initial allocation moment, Pbat_local*(*t*) is a local energy storage scheduling value at the time t, and Clocal is local energy storage. $SOClocal \left(t\right) = \frac{Cbat ∗ SOCbat \left(t\right) - Cvirtual ∗ SOCvirtual \left(t\right)}{Clocal} ,$ where SOClocal(*t*) is a local energy storage state of charge at a moment t, Cbat is a total capacity of the local photovoltaic energy storage system, SOCbat(*t*) is a total state of charge at the moment t, Cvirtual is virtual energy storage, SOCvirtual(t) is virtual energy storage state of charge at the moment t, and Clocal is local energy storage.

The first state of charge is a predetermined value for determining whether or not it is necessary to limit a local discharge instruction. A specific value of the first state of charge may be defined by the user or determined as desired. For example, the first state of charge may be 0%, 5%, or the like. The present disclosure is not limited in this regard.

The second state of charge is a predetermined value for determining whether or not it is necessary to limit a local charge instruction. A specific value of the second state of charge may be defined by the user or determined as desired. For example, the second state of charge may be 98%, 100%, or the like. The present disclosure is not limited in this regard.

In the actual execution process, during performing, based on the local scheduling value, the local scheduling on the local photovoltaic energy storage system, the local energy storage state of charge corresponding to the local energy storage in the local energy storage system may be calculated based on a target time interval. A specific value of the target time interval may be defined by the user or determined as desired. The present disclosure is not limited in this regard.

After calculating the local energy storage state of charge, SOClocal may be used as a feedback to participate in closed-loop control related to SOC in the local scheduling. An output of the local energy storage device may be calculated to limit the output of the local energy storage device at the end of charging and discharging process.

As an example, the first state of charge is 0%. When SOClocal is equal to 0%, the local discharge instruction is limited. That is, when SOClocal is equal to 0%, the local energy storage stops discharging.

As an example, the second state of charge is 100%. When SOClocal is equal to 100%, the local charge instruction is limited. That is, when SOClocal is equal to 100%, the local energy storage stops charging.

With the scheduling method for the photovoltaic energy storage system according to the embodiments of the present disclosure, by comparing the local energy storage state of charge with the first state of charge and comparing the local energy storage state of charge with the second state of charge, based on the comparison result, the output of the local energy storage is limited at the end of charging and discharging process, reducing harm caused by over-charging and over-discharging in the local scheduling process, and ensuring safety of the local photovoltaic energy storage system.

In some embodiments, the performing the virtual scheduling on the local photovoltaic energy storage system may further include: performing the virtual scheduling on the local photovoltaic energy storage system based on the virtual power plant scheduling portion power in the case of reserved scheduling, a sum of the virtual power plant scheduling portion power and the local scheduling portion power being smaller than or equal to the total rated power; and performing the virtual scheduling on the local photovoltaic energy storage system based on the virtual scheduling value in the case of preemptive scheduling or additive scheduling.

In this embodiment, in response to the virtual power plant scheduling by the reserved scheduling method, the virtual power plant scheduling portion power is used to respond to the virtual scheduling value to virtually schedule the local photovoltaic energy storage system.

In the case of the preemptive scheduling or the additive scheduling, a power corresponding to the virtual scheduling value is obtained from the local photovoltaic energy storage system to respond to the remote scheduling of the virtual power plant.

With the scheduling method for the photovoltaic energy storage system according to the embodiments of the present disclosure, different ways of responding to the virtual power plant scheduling are selected through different scheduling modes. In the case of the reserved scheduling, the virtual power plant scheduling portion power is used to respond to the remote scheduling of the virtual power plant. In the case of the preemptive scheduling or the additive scheduling, the remote scheduling of the virtual power plant is responded based on the virtual scheduling value. This approach explicitly defines a method of responding to the virtual power plant scheduling for different scheduling modes, improving accuracy of the scheduling.

In some embodiments, the performing the virtual scheduling on the local photovoltaic energy storage system may further include: calculating a virtual energy storage state of charge corresponding to virtual energy storage in the local photovoltaic energy storage system during performing the virtual scheduling on the local photovoltaic energy storage system based on the virtual power plant scheduling portion power; stopping discharging for the virtual energy storage when the virtual energy storage state of charge is not greater than a third state of charge; and stopping charging for the virtual energy storage when the virtual energy storage state of charge is greater than a fourth state of charge. The third state of charge is smaller than the fourth state of charge.

In this embodiment, the virtual energy storage state of charge is a state of charge of the part of the virtual energy storage in response to the remote scheduling of the virtual power plant.

The virtual energy storage state of charge may be represented as SOCvirtual. In the actual execution process, the virtual energy storage state of charge may be calculated based on the following formula: $SOCvirtual \left(t\right) = SOCvirtual \left(t0\right) - \frac{{\int }_{t 0}^{t} Pbat _ {virtual}^{∗} \left(t\right) d t}{Cvirtual} ,$ where SOCvirtual(t) is a virtual energy storage state of charge at the moment t, SOCvirtual(*t*0) is a virtual energy storage state of charge at the initial allocation moment, Pbat_virtual* *(t)* is a virtual energy storage scheduling value at the moment *t,* and Cvirtual is the virtual energy storage.

The third state of charge is a predetermined value for determining whether or not it is necessary to limit a virtual discharge instruction. A specific value of the third state of charge may be defined by the user or determined as desired. For example, the third state of charge may be 0%, 3%, 5%, or the like. The present disclosure is not limited in this regard.

The fourth state of charge is a predetermined value for determining whether or not it is necessary to limit a virtual charge instruction. A specific value of the fourth state of charge may be defined by the user or determined as desired. For example, the fourth state of charge may be 98%, 100%, or the like. The present disclosure is not limited in this regard.

In the actual execution process, in the process of responding to the virtual power plant scheduling, a scheduling instruction value of the virtual energy storage device may be adjusted at the end of virtual energy storage charging and discharging process based on the virtual energy storage state of charge SOCvirtual.

As an example, the third state of charge is 0%. When SOClocal is equal to 0%, the discharge instruction of the virtual power plant is limited. That is, when SOClocal is equal to 0%, the virtual energy storage stops discharging.

As an example, the fourth state of charge is 100%. When SOClocal is equal to 100%, the charge instruction of the virtual power plant is limited. That is, when SOClocal is equal to 100%, the virtual energy storage stops charging.

In some embodiments, the performing the virtual scheduling on the local photovoltaic energy storage system may further include: calculating a virtual energy storage state of charge corresponding to the virtual energy storage in the local photovoltaic energy storage system during performing, based on the virtual scheduling value, virtual scheduling on the local photovoltaic energy storage system; stopping discharging for the virtual energy storage when the virtual energy storage state of charge is not greater than a third state of charge; and stopping charging for the virtual energy storage when the virtual energy storage state of charge is greater than a fourth state of charge. The third state of charge is smaller than the fourth state of charge.

In this embodiment, during performing, based on the virtual scheduling value, virtual scheduling on the local photovoltaic energy storage system, the virtual energy storage state of charge corresponding to the virtual energy storage in the local energy storage system may be calculated at a target time interval.

By comparing the magnitude relationship between the virtual energy storage state of charge and the third state of charge and the fourth state of charge, the charging and discharging are stopped in time at the end of charging and discharging process. A specific process is the same as the process of virtual scheduling of the local photovoltaic energy storage system based on the virtual power plant scheduling portion power, which is not described again here to avoid repetition.

With the scheduling method for the photovoltaic energy storage system according to the embodiments of the present disclosure, in the process of responding to the remote scheduling of the virtual power plant, the virtual energy storage state of charge is calculated, the scheduling state is obtained in real time, and the virtual energy storage state of charge is compared with each of the third state of charge and the fourth state of charge, to determine whether the virtual energy storage state of charge reaches a charge-discharge stop condition, to stop the charging and discharging in time, improving safety of the remote scheduling process of the virtual power plant.

In some embodiments, the method may further include: determining the total rated power of the local photovoltaic energy storage system as a maximum discharge threshold of the local scheduling value, and determining an opposite number of the total rated power of the local photovoltaic energy storage system as a maximum charge threshold of the local scheduling value in response to the virtual scheduling value sent by the virtual power plant being not received or the virtual scheduling value being a first scheduling value; and performing the local scheduling on the local photovoltaic energy storage system based on the maximum discharge threshold and the maximum charge threshold.

In this embodiment, the first scheduling value is a predetermined value indicating that no scheduling of the local photovoltaic energy storage system by the virtual power plant is needed. A specific value of the first scheduling value may be defined by the user or determined as needed. For example, the first scheduling value may be 0 or a numerical value close to 0, which is not limited in the present disclosure.

In the actual execution process, in response to the virtual scheduling value sent by the virtual power plant being not received, it indicates that no remote scheduling of the local photovoltaic energy storage system is needed, but the local scheduling is needed.

When the virtual power plant sends the virtual scheduling value, but the virtual scheduling value is the first scheduling value, it may also be approximately considered that no remote scheduling of the local photovoltaic energy storage system is needed, but the local scheduling is needed.

When no remote scheduling of the local photovoltaic energy storage system is needed, but the local scheduling is needed, there is no need to limit the local scheduling value. The total rated power of the local photovoltaic energy storage system may be determined as the maximum discharge threshold. The opposite number of the total rated power may be determined as the maximum charge threshold.

A magnitude relationship between the local scheduling value and the total rated power of the local photovoltaic energy storage system may be determined based on the following formulas: -Pinv_rated<Pinv_local*<Pinv_rated; -Pbat_rated<Pbat_local*<Pbat_rated.

In other embodiments, the method may further include: determining a local rated power corresponding to the local photovoltaic energy storage system as the maximum discharge threshold of the local scheduling value, and determining an opposite number of a local rated power corresponding to the local photovoltaic energy storage system as the maximum charge threshold of the local scheduling value in response to the virtual scheduling value sent by the virtual power plant being not received or the virtual scheduling value is the first scheduling value; and performing the local scheduling on the local photovoltaic energy storage system based on the maximum discharge threshold and the maximum charge threshold.

In this embodiment, when no remote scheduling of the local photovoltaic energy storage system is needed, but the local scheduling is needed, the local scheduling value may be limited within a charge-discharge range corresponding to the local rated power.

A magnitude relationship between the local scheduling value and the local rated power may be determined based on the following formulas: $- Pinv _ rated _ local < Pinv _ local * < Pinv _ rated _ local ;$ $- Pbat _ rated _ local < Pbat _ local * < Pbat _ rated _ local .$

In the actual execution process, when the local photovoltaic energy storage system does not need to respond to the remote scheduling, the manner of performing the local scheduling may be defined by the user or determined as desired, which is not limited in the present disclosure. That is, charging and discharging based on the local rated power or based on the total rated power may be selected by the user.

With the scheduling method for the photovoltaic energy storage system according to the embodiments of the present disclosure, by determining whether the virtual scheduling value is received and comparing the virtual scheduling value and the first scheduling value, whether it is necessary to respond to the remote scheduling of the virtual power plant is determined. In addition, with the total rated power or the local rated power of the local photovoltaic energy storage system, the local scheduling process is limited. A variety of local scheduling constraint methods are provided to improve the flexibility of the local scheduling.

In the scheduling method for the photovoltaic energy storage system according to the embodiments of the present disclosure, an executing entity may be a scheduling apparatus for a photovoltaic energy storage system. In the embodiment of the present disclosure, as an example, the scheduling apparatus for a photovoltaic energy storage system is configured to perform the scheduling method for the photovoltaic energy storage system, and thus the scheduling apparatus for a photovoltaic energy storage system according to the embodiments of the present disclosure is described.

The embodiments of the present disclosure further provide a scheduling apparatus for a photovoltaic energy storage system. As illustrated in FIG. 5, the scheduling apparatus for the photovoltaic energy storage system includes a first processing module 510 and a second processing module 520.

The first processing module 510 is configured to determine, in response to obtaining a virtual scheduling value sent by the virtual power plant, a charge-discharge threshold of a local scheduling value corresponding to the local photovoltaic energy storage system based on the virtual scheduling value and a total rated power corresponding to the local photovoltaic energy storage system. A positive scheduling value represents discharging. A negative scheduling value represents charging.

The second processing module 520 is configured to perform local scheduling and virtual scheduling on the local photovoltaic energy storage system based on the virtual scheduling value, the local scheduling value, and the charge-discharge threshold.

With the scheduling apparatus for the photovoltaic energy storage system according to the embodiments of the present disclosure, by receiving the virtual scheduling value sent by the virtual power plant, the local scheduling value is limited based on the virtual scheduling value and the total rated power corresponding to the local photovoltaic energy storage system. Therefore, remote scheduling of the virtual power plant and local scheduling of the photovoltaic energy storage system can be balanced by the local photovoltaic energy storage system, and the resource utilization rate of the local photovoltaic energy storage system and the local power supply reliability of the photovoltaic energy storage system can be improved, thereby enhancing the user experience.

In some embodiments, the first processing module 510 may further be configured to: determine a target scheduling mode based on a scheduling demand corresponding to the virtual power plant, the scheduling demand including reserved scheduling, preemptive scheduling, or additive scheduling; and process, based on the target scheduling mode, the virtual scheduling value and the total rated power corresponding to the local photovoltaic energy storage system, and determine the charge-discharge threshold of the local scheduling value.

In some embodiments, the first processing module 510 may further be configured to: divide the total rated power corresponding to the local photovoltaic energy storage system into a virtual power plant scheduling portion power and a local scheduling portion power, a sum of the virtual power plant scheduling portion power and the local scheduling portion power being smaller than or equal to the total rated power; and perform local scheduling on the local photovoltaic energy storage system by determining the local scheduling portion power as a limit value.

In some embodiments, the first processing module 510 may further be configured to: divide the total rated power corresponding to the local photovoltaic energy storage system into at least two portions of power, to obtain the virtual power plant scheduling portion power and the local scheduling portion power.

In some embodiments, the first processing module 510 may further be configured to: keep, in response to the virtual power plant scheduling portion power satisfying the virtual scheduling value, the virtual power plant scheduling portion power and the local scheduling portion power unchanged; and adjust, in response to the virtual power plant scheduling portion power not satisfying the virtual scheduling value, a proportion of the virtual power plant scheduling portion power in the total rated power and a proportion of the local scheduling portion power in the total rated power, respectively, to obtain an adjusted virtual power plant scheduling portion power and an adjusted local scheduling portion power.

In some embodiments, the first processing module 510 may further be configured to: determine a first remaining available power as a maximum discharge threshold of the local scheduling value, and determine a first numerical value as a minimum discharge threshold of the local scheduling value in response to the virtual scheduling value being positive, the first remaining available power being a difference between the total rated power and the virtual scheduling value; and determine a second remaining available power as a maximum charge threshold of the local scheduling value, and determine the first numerical value as a minimum charge threshold of the local scheduling value in response to the virtual scheduling value being negative. The second remaining available power is a sum of an opposite number of a total rated power and the negative virtual scheduling value.

In some embodiments, the first processing module 510 may further be configured to: determine, based on the virtual scheduling value, the total rated power of the local photovoltaic energy storage system as a maximum discharge threshold of the local scheduling value, and determine, based on the virtual scheduling value, an opposite number of a total rated power of the local photovoltaic energy storage system as a maximum charge threshold of the local scheduling value.

In some embodiments, the second processing module 520 may further be configured to: perform, based on the local scheduling value, the local scheduling on the local photovoltaic energy storage system under the limitation of the charge-discharge threshold.

In some embodiments, the second processing module 520 may further be configured to: calculate a local energy storage state of charge corresponding to local energy storage in the local photovoltaic energy storage system during performing, based on the local scheduling value, the local scheduling on the local photovoltaic energy storage system under the limitation of the charge-discharge threshold; stop discharging for the local energy storage when the local energy storage state of charge is not greater than a first state of charge; and stop charging for the local energy storage when the local energy storage state of charge is greater than a second state of charge. The first state of charge is smaller than the second state of charge.

In some embodiments, the second processing module 520 may further be configured to: perform the virtual scheduling on the local photovoltaic energy storage system based on the virtual power plant scheduling portion power in the case of reserved scheduling, a sum of the virtual power plant scheduling portion power and the local scheduling portion power being smaller than or equal to the total rated power; and perform the virtual scheduling on the local photovoltaic energy storage system based on the virtual scheduling value in the case of preemptive scheduling or additive scheduling.

In some embodiments, the second processing module 520 may further be configured to: calculate a virtual energy storage state of charge corresponding to virtual energy storage in the local photovoltaic energy storage system during performing the virtual scheduling on the local photovoltaic energy storage system based on the virtual power plant scheduling portion power; or calculate the virtual energy storage state of charge corresponding to the virtual energy storage in the local photovoltaic energy storage system during performing, based on the virtual scheduling value, virtual scheduling on the local photovoltaic energy storage system; or stop discharging for the virtual energy storage when the virtual energy storage state of charge is not greater than a third state of charge; or stop charging for the virtual energy storage when the virtual energy storage state of charge is greater than a fourth state of charge. The third state of charge is smaller than the fourth state of charge.

In some embodiments, the apparatus may further include a third processing module. The third processing module may be configured to: determine the total rated power of the local photovoltaic energy storage system as a maximum discharge threshold of the local scheduling value, and determine an opposite number of the total rated power of the local photovoltaic energy storage system as a maximum charge threshold of the local scheduling value in response to the virtual scheduling value sent by the virtual power plant being not received or the virtual scheduling value being a first scheduling value; or determine a local rated power corresponding to the local photovoltaic energy storage system as the maximum discharge threshold of the local scheduling value, and determine an opposite number of a local rated power corresponding to the local photovoltaic energy storage system as the maximum charge threshold of the local scheduling value in response to the virtual scheduling value sent by the virtual power plant being not received or the virtual scheduling value is the first scheduling value; perform the local scheduling on the local photovoltaic energy storage system based on the maximum discharge threshold and the maximum charge threshold.

The scheduling apparatus for the photovoltaic energy storage system in the embodiments of the present disclosure may be a photovoltaic energy storage system, an electronic device communicatively connected to the photovoltaic energy storage system, or a component in the photovoltaic energy storage system or the electronic device, such as an integrated circuit or a chip. The electronic device may be a terminal or another device other than the terminal. Exemplarily, the electronic device may be a mobile phone, a tablet computer, a notebook computer, a handheld computer, an in-vehicle electronic device, a Mobile Internet Device (MID), an augmented reality (AR)/a virtual reality (VR) device, a robot, a wearable device, an ultra-mobile personal computer (UMPC), a netbook, a personal digital assistant (PDA), or the like. The electronic device may also be a server, a Network Attached Storage (NAS), a personal computer (PC), a television (TV), a teller machine, a self-service machine, or the like, which is not specifically limited in the embodiments of the present disclosure.

The scheduling apparatus for the photovoltaic energy storage system in the embodiments of the present disclosure may be an apparatus having an operating system. The operating system may be an Android operating system, an IOS operating system, or other possible operating systems, which is not specifically limited in the embodiments of the present disclosure.

The scheduling apparatus for the photovoltaic energy storage system according to the embodiments of the present disclosure can realize various processes described in the method embodiments of FIG. 1 to FIG. 4, which is not repeated here to avoid repetition.

The embodiments of the present disclosure further provide a photovoltaic energy storage system.

In some embodiments, the photovoltaic energy storage system includes an energy storage system, a photovoltaic inverter system, and a scheduling apparatus based on the photovoltaic energy storage system according to any of the above embodiments.

In this embodiment, the photovoltaic inverter system is electrically connected to the energy storage system. The energy storage system and the photovoltaic inverter system are capable of providing energy for the load and other electrical devices.

With the photovoltaic energy storage system according to the embodiments of the present disclosure, by receiving the virtual scheduling value sent by the virtual power plant, the local scheduling value is limited based on the virtual scheduling value and the total rated power corresponding to the local photovoltaic energy storage system. Therefore, remote scheduling of the virtual power plant and local scheduling of the photovoltaic energy storage system can be balanced by the local photovoltaic energy storage system, and the resource utilization rate of the local photovoltaic energy storage system and the local power supply reliability of the photovoltaic energy storage system can be improved, thereby enhancing the user experience.

In some embodiments, as illustrated in FIG. 6, the embodiments of the present disclosure further provide an electronic device 600. The electronic device 600 includes a processor 601, a memory 602, and a computer program stored on the memory 602 and executable on the processor 601. The program, when executed by the processor 601, is configured to implement each process of the above-described scheduling method embodiment for the photovoltaic energy storage system. In addition, the same technical effect can be achieved. To avoid repetition, details thereof will not be described again here.

It should be noted that the electronic device in the embodiments of the present disclosure includes a mobile electronic device and a non-mobile electronic device described above.

The embodiments of the present disclosure further provide a non-transitory computer-readable storage medium having a computer program stored thereon. The computer program is configured to, when executed by a processor, implement each process of the above-described scheduling method embodiment for the photovoltaic energy storage system. In addition, the same technical effect can be achieved. To avoid repetition, details thereof will not be described again here.

The processor is the processor in the electronic device described in the above embodiment. The readable storage medium includes a computer-readable storage medium such as a computer read-only memory ROM, a random access memory RAM, a magnetic disk, an optical disc, or the like.

The embodiments of the present disclosure further provide a computer program product. The computer program product includes a computer program. The computer program, when executed by a processor, is configured to implement the above-described scheduling method for the photovoltaic energy storage system.

The processor is the processor in the electronic device described in the above embodiment. The readable storage medium includes the computer-readable storage medium such as the computer read-only memory ROM, the random access memory RAM, the magnetic disk, the optical disc, or the like.

The embodiments of the present disclosure further provide a chip. The chip includes a processor and a communication interface. The communication interface is coupled with the processor. The processor is configured to run a program or an instruction to realize each process of the above-mentioned scheduling method embodiment for the photovoltaic energy storage system. In addition, the same technical effect can be achieved. To avoid repetition, details thereof will not be described again here.

It should be understood that the chip mentioned in the embodiments of the present disclosure may also be referred to as a system-level chip, a system chip, a chip system, a system-on-chip, or the like.

Energy storage virtualization technology virtually divides a photovoltaic energy storage system into multiple virtual photovoltaic energy storage systems. Each virtual photovoltaic energy storage system may operate in different modes according to a setting, such as maximum self-generation and self-consumption, TOU, virtual power plant scheduling, etc. Correspondingly, the energy storage battery may also be virtualized into multiple virtual batteries for use by different virtual photovoltaic energy storage systems.

Since the virtual energy storage system has different demands for the virtual battery when operating in different modes, to maximize the resource utilization rate, flexible adjustment of the parameter of the virtual battery is crucial. However, in the related art, there is a lack of a scheme for adjusting the parameter of the virtual battery.

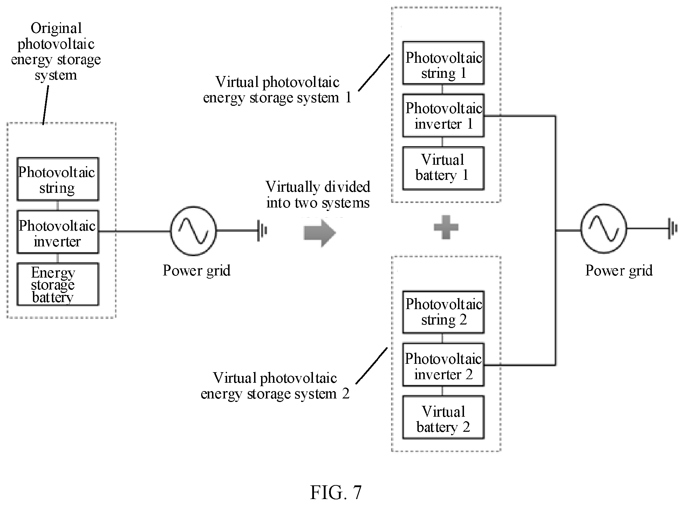

FIG. 7 is an exemplary diagram illustrating partitioning of a virtual photovoltaic energy storage system according to an embodiment of the present disclosure. As illustrated in FIG. 7, in the field of photovoltaic energy storage, the original photovoltaic energy storage system is virtually divided into two (a plurality of) virtual photovoltaic energy storage systems. Correspondingly, the energy storage battery may be virtually divided into two (a plurality of) virtual batteries. Each virtual battery is connected to a virtual photovoltaic energy storage system for serving the virtual photovoltaic energy storage system.

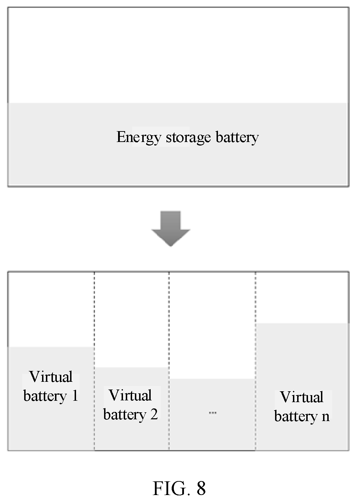

In an exemplary embodiment of the present disclosure, FIG. 8 is an exemplary diagram illustrating partitioning of a virtual battery according to an embodiment of the present disclosure. As illustrated in FIG. 8, the energy storage battery is virtually divided into n (n≥2) virtual batteries. A parameter of each virtual battery may include a virtual capacity, a virtual electric quantity, and a state of charge. A capacity, an electric quantity, and a state of charge of the energy storage battery are real, which can be obtained by collecting a corresponding signal (such as a battery temperature, a voltage, and a current) by a sensor. However, the virtual capacity, the virtual electric quantity, and the state of charge of each virtual battery are virtual values. A total virtual capacity and a total virtual electric quantity of n virtual batteries need to meet the following conditions. Let the capacity of the energy storage battery be Cₛᵤₘ, and the virtual capacity of each virtual battery be Cⱼ. Then, the following relationship holds: ${C}_{sum} = {\sum }_{j = 1}^{n} {C}_{j}$ (1) Let the electric quantity of the energy storage battery be Qₛᵤₘ, and the virtual electric quantity of each virtual battery be Qⱼ. Then, the following relationship holds: ${Q}_{sum} = {\sum }_{j = 1}^{n} {Q}_{j}$ (2) In addition, the state of charge SOCₛᵤₘ of the energy storage battery and the state of charge SOCⱼ of each virtual battery are ${SOC}_{sum} = \frac{{Q}_{sum}}{{C}_{sum}}$ (3), and ${SOC}_{j} = \frac{{Q}_{j}}{{C}_{j}}$ (4), respectively.
In formulas (1) to (4), j represents a j-th virtual battery. An initial virtual capacity and an initial virtual electric quantity of each of the above virtual batteries may be obtained by allocation. The total virtual capacity of n virtual batteries is equal to the capacity of the energy storage battery, and the total virtual electric quantity is equal to the electric quantity of the energy storage battery, i.e., the above formulas (1) and (2) are satisfied. An initial state of charge of each virtual battery may be obtained by substituting the initial virtual capacity and the initial virtual electric quantity of each virtual battery into the above formula (4) for calculation

Since operation modes of virtual photovoltaic energy storage systems are different, an electricity demand is also different. Therefore, to maximize the resource utilization rate, it is very important to flexibly adjust the parameter of the virtual battery. The method for adjusting the parameter of the virtual battery according to the embodiments of the present disclosure may be to adjust one or more of the virtual capacity, the virtual electric quantity, and the state of charge of the virtual battery.

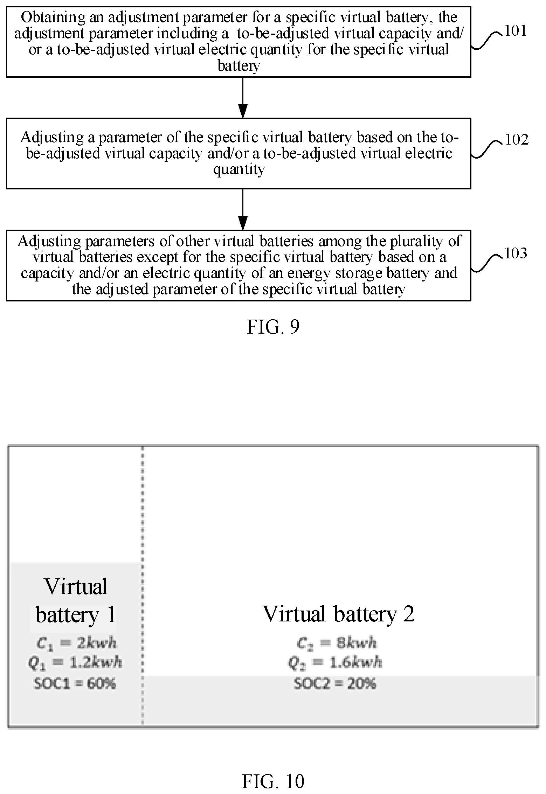

FIG. 9 is a flowchart illustrating a method for adjusting a parameter of a virtual battery according to an embodiment of the present disclosure. As illustrated in FIG. 9, the method may be applied to the above photovoltaic energy storage system. The energy storage battery of the photovoltaic energy storage system is divided into a plurality of virtual batteries. Each virtual battery is connected to a virtual photovoltaic energy storage system for serving the virtual photovoltaic energy storage system. The method may include Steps 101 to 103.

Step 101, obtaining an adjustment parameter for a specific virtual battery, the adjustment parameter including a to-be-adjusted virtual capacity and/or a to-be-adjusted virtual electric quantity for the specific virtual battery.

Step 102, adjusting a parameter of the specific virtual battery based on the to-be-adjusted virtual capacity and/or a to-be-adjusted virtual electric quantity.

Step 103, adjusting parameters of other virtual batteries among the plurality of virtual batteries except for the specific virtual battery based on a capacity and/or an electric quantity of an energy storage battery and the adjusted parameter of the specific virtual battery.

The method for adjusting the parameter of the virtual battery illustrated in FIG. 9 is described below in detail.

In the embodiments of the present disclosure, the parameter of the virtual battery may be adjusted based on needs of the user or based on power consumption of the virtual photovoltaic energy storage system connected to the virtual battery.

First embodiment of adjusting the parameter of the virtual battery based on the needs of the user is as follows.

Firstly, the adjustment parameter for the specific virtual battery may be determined according to the needs of the user. The above Step 101 may include: obtaining the to-be-adjusted virtual capacity for the specific virtual battery inputted by the user; and keeping a state of charge of the specific virtual battery unchanged, and calculating the to-be-adjusted virtual electric quantity for the specific virtual battery based on a state of charge and the to-be-adjusted virtual capacity of the specific virtual battery.

In the specific implementation, the user may input the to-be-adjusted virtual capacity for the specific virtual battery by a setting page. Then, based on the principle of maintaining the state of charge constant, the to-be-adjusted virtual electric quantity for the specific virtual battery is calculated using the following formula (5): ${Q}_{i} = {C}_{i} \times {SOC}_{i}$ (5) where in the formula (5), Cᵢ represents the to-be-adjusted virtual capacity for the specific virtual battery inputted by the user, SOCᵢ represents a current state of charge of the specific virtual battery, and Qᵢ represents the calculated to-be-adjusted virtual electric quantity for the specific virtual battery.

In the above Step 102, the adjusting a parameter of the specific virtual battery based on the to-be-adjusted virtual capacity and/or the to-be-adjusted virtual electric quantity may include: determining a to-be-adjusted virtual capacity difference and a to-be-adjusted virtual electric quantity difference for the specific virtual battery based on the to-be-adjusted virtual capacity and the to-be-adjusted virtual electric quantity; and allocating the to-be-adjusted virtual capacity difference and the to-be-adjusted virtual electric quantity difference of the specific virtual battery to other virtual batteries, or compensating the to-be-adjusted virtual capacity difference and the to-be-adjusted virtual electric quantity difference of the specific virtual battery from the other virtual batteries to the specific virtual battery, according to the predetermined virtual battery priority.

In the specific implementation, the to-be-adjusted virtual capacity of the specific virtual battery may be compared with a current virtual capacity of the specific virtual battery to calculate a difference, to obtain a virtual capacity difference. The to-be-adjusted virtual electric quantity of the specific virtual battery may be compared with a current virtual electric quantity of the specific virtual battery to calculate a difference, to obtain a virtual electric quantity difference. Subsequently, when the specific virtual battery needs to reduce the virtual capacity and the virtual electric quantity, the virtual capacity difference and the virtual electric quantity difference may be allocated to other virtual batteries with a lowest priority based on the virtual battery priority.

When the specific virtual battery needs to increase the virtual capacity and the virtual electric quantity, the required virtual capacity difference and virtual electric quantity difference of the specific virtual battery may be compensated by other virtual batteries with a lowest priority based on the virtual battery priority. If a virtual capacity or a virtual electric quantity of the other virtual batteries with the lowest priority is insufficient to compensate for the virtual capacity difference or the virtual electric quantity difference, compensation may be implemented according to maximum compensation capabilities of the other virtual batteries. In this case, a state of charge of the specific virtual battery needs to be recalculated based on a virtual capacity and a virtual electric quantity of the specific virtual battery after actual compensation. If other virtual batteries with a second-lowest priority exist, the remaining insufficient portion may be jointly compensated by the other virtual batteries with the second-lowest priority, and this procedure is then repeated with virtual batteries of a progressively higher priority until the compensation amount reaches the virtual capacity difference or the virtual electric quantity difference.

In the above Step 103, the adjusting parameters of other virtual batteries among the plurality of virtual batteries except for the specific virtual battery based on the capacity and/or the electric quantity of the energy storage battery and the adjusted parameter of the specific virtual battery may include: increasing, in response to the to-be-adjusted virtual capacity difference and the to-be-adjusted virtual electric quantity difference of the specific virtual battery being allocated to other virtual batteries, virtual capacities and virtual electric quantities of the other virtual batteries by the virtual capacity difference and the virtual electric quantity difference, respectively; or, decreasing, in response to the to-be-adjusted virtual capacity difference and the to-be-adjusted virtual electric quantity difference of the specific virtual battery being compensated from the other virtual batteries to the specific virtual battery, the virtual capacities and the virtual electric quantities of the other virtual batteries by the virtual capacity difference and the virtual electric quantity difference, respectively; and adjusting the states of charge of the other virtual batteries based on the adjusted virtual capacities and the adjusted virtual electric quantities of the other virtual batteries.

In specific implementation, virtual battery capacities of the other virtual batteries that compensate for or receive the virtual capacity difference or the virtual electric quantity difference may be correspondingly increased or decreased. Then, virtual capacities and virtual electric quantities of the other virtual batteries after the increase or the decrease may be substituted into the aforementioned Formula (4) to calculate the state of charges of the other virtual batteries, adjusting the state of charge parameter.

It should be noted that priorities of other virtual batteries used to compensate for or receive the virtual capacity difference or the virtual electric quantity difference are not higher than a priority of the specific virtual battery.

A specific example is provided below to illustrate this.

As illustrated in FIG. 10, it is assumed that the energy storage battery is virtually divided into two virtual batteries (i.e., n=2): a virtual battery 1 and a virtual battery 2. In addition, a priority is set as that the priority of the virtual battery 1 is greater than the priority of the virtual battery 2. In addition, a current virtual capacity of each virtual battery is C₁ = 2kwh and C₂ = 8kwh , respectively. A current virtual electric quantity is Q₁ = 1.2kwh and Q₂ = 1.8kwh, respectively. A current state of charge is SOC₁ = 60% and SOC₂ = 20%, respectively.

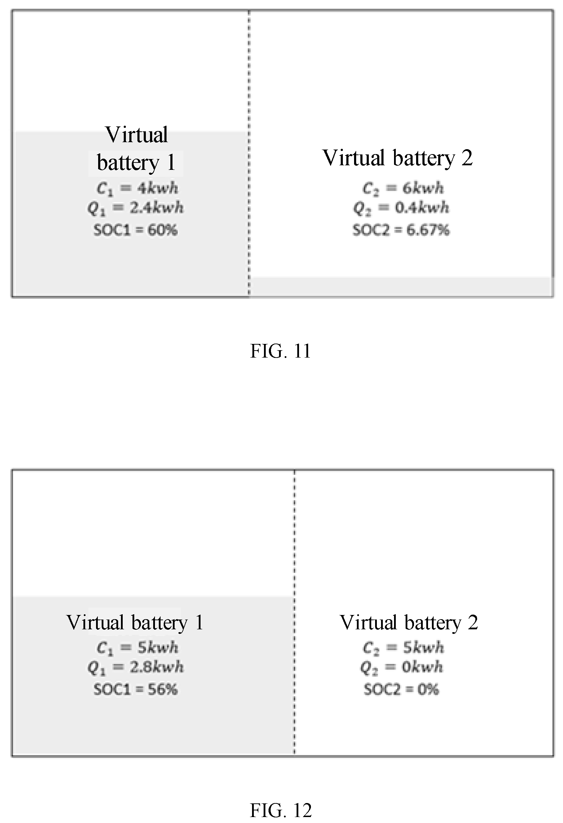

If it is necessary to expand a virtual capacity of the virtual battery 1 to 4kwh, that is, a to-be-adjusted virtual capacity is 4kwh, the virtual electric quantity after the virtual capacity of the virtual battery 1 changes to 4kwh is allocated according to the principle of unchanged state of charge. That is, a to-be-adjusted virtual electric quantity of the virtual battery 1 is Q₁ = 4kwh × 60% = 2.4kwh. Then, the virtual capacity difference is 2kwh, and the virtual electric quantity difference is 1.2kwh. Based on the priority, 2kwh of virtual capacity and 1.2kwh of virtual electric quantity are compensated from the virtual battery 2 to the virtual battery 1. Therefore, as illustrated in FIG. 11, parameters of the virtual battery 1 after adjustment are C₁ = 4kwh, Q₁ = 2.4kwh, and SOC₁ = 60% . After adjusting the parameters of the virtual battery 1, parameters of the virtual battery 2 are adjusted to C₂ = 6kwh, Q₂ = 0.4kwh, and SOC₂ = 6.67%.

If it is necessary to expand a capacity of the virtual battery 1 to 5kwh, that is, the to-be-adjusted virtual capacity is 5kwh, through allocation according to the principle of unchanged state of charge, the to-be-adjusted virtual electric quantity of the virtual battery 1 is Q₁ = 5kwh × 60% = 3kwh. Then, the virtual capacity difference is 3kwh, and the virtual electric quantity difference is 1.8kwh. Based on the priority, 3kwh of virtual capacity and 1.8kwh of virtual electric quantity are compensated from the virtual battery 2 to the virtual battery 1. However, since only 1.2kwh of virtual electric quantity in the virtual battery 2 exists, which cannot compensate for the virtual electric quantity difference of the virtual battery 1, compensation is performed based on a maximum compensation capacity 1.2kwh for a virtual electric quantity required by the virtual battery 1. As illustrated in FIG. 12, the adjusted parameters of the virtual battery 1 are C₁ = 5kwh, Q₁ = 2.8kwh, and SOC₁ = 56%. After adjusting the parameters of the virtual battery 1, the parameters of the virtual battery 2 are adjusted to: C₂ = Skwh, Q₂ = 0kwh, and SOC₂ = 0%.

Another specific example is provided below to illustrate this.

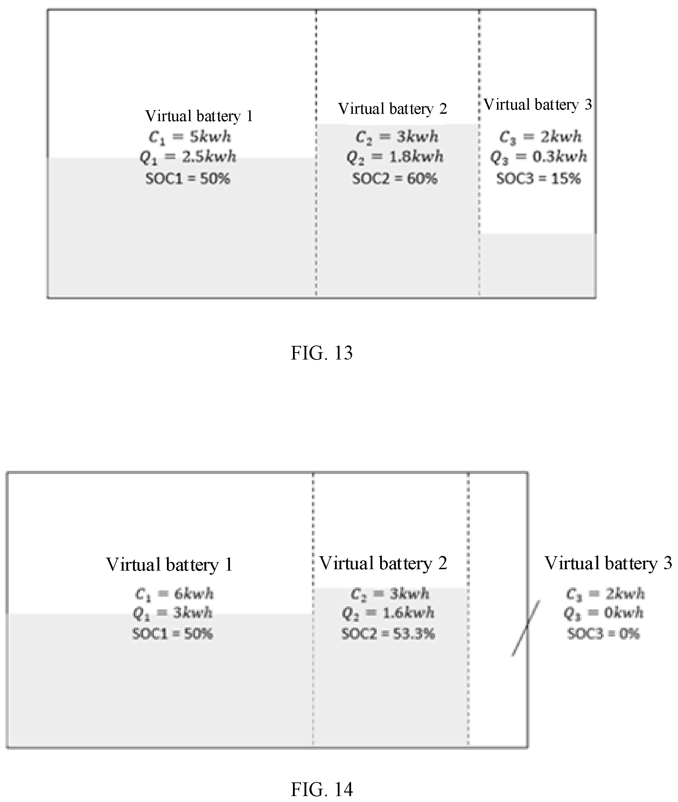

As illustrated in FIG. 13, it is assumed that the energy storage battery is virtually divided into three virtual batteries (i.e. n =3): the virtual battery 1, the virtual battery 2, and a virtual battery 3. In addition, a priority is set as the priority of the virtual battery 1 is greater than the priority of the virtual battery 2, the priority of the virtual battery 2 is greater than the priority of the virtual battery 3. In addition, the current virtual capacity of each virtual battery is C₁ = 5kwh, C₂ = 3kwh, and C₃ = 2kwh, respectively. The current virtual electric quantity is Q₁ = 2.5kwh, Q₂ = 1.8kwh, and Q₃ = 0.3kwh, respectively. The current state of charge is SOC₁ = 50%, SOC₂ = 60%, and SOC₃ = 15%, respectively.

If it is necessary to expand the virtual capacity of the virtual battery 1 to 6kwh, that is, the to-be-adjusted virtual capacity is 6kwh, the virtual electric quantity after the virtual capacity of the virtual battery 1 changes to 6kwh is allocated according to the principle of unchanged state of charge. That is, the to-be-adjusted virtual electric quantity of the virtual battery 1 is Q₁ = 6kwh × 50% = 3kwh. Then, the virtual capacity difference is 1kwh, and the virtual electric quantity difference is 0.5kwh. Based on the priority, 1kwh of virtual capacity and 0.5kwh of virtual electric quantity are compensated from the virtual battery 3 to the virtual battery 1. However, the virtual battery 3 only contains 0.3kwh of virtual electric quantity, which is not sufficient for compensating for the virtual electric quantity difference of the virtual battery 1, and thus 0.2kwh of virtual electric quantity difference may be compensated from a virtual battery 2 having a next-lowest priority. Therefore, as illustrated in FIG. 14, the adjusted parameters of the virtual battery 1 are C₁ = 6kwh, Q₁ = 3kwh, and SOC₁ = 50%. After adjusting the parameters of the virtual battery 1, the parameters of the virtual battery 2 are adjusted to C₂ = 3kwh, Q₂ = 1.6kwh, and SOC₂ = 53.3%. The parameters of the virtual battery 3 are adjusted to C₃ = 2kwh, Q₃ = 0kwh, and SOC₃ = 0%.

Second embodiment of adjusting the parameters of the virtual battery based on the needs of the user is as follows.

Firstly, the adjustment parameter for the specific virtual battery may be determined according to the needs of the user. The above Step 101 may include: obtaining the to-be-adjusted virtual capacity for the specific virtual battery inputted by the user; and adjusting, in response to the initial virtual capacity of the specific virtual battery being 0, the state of charge of the specific virtual battery based on states of charge of other virtual batteries according to a predetermined virtual battery priority, and calculating the to-be-adjusted virtual electric quantity for the specific virtual battery based on the to-be-adjusted virtual capacity and the adjusted state of charge of the specific virtual battery.

In the specific implementation, if the initial virtual capacity of the specific virtual battery is 0, the states of charge of the other virtual batteries having lowest priorities may be determined as the state of charge of the specific virtual battery according to the predetermined virtual battery priority. Then, based on the state of charge of the specific virtual battery and the to-be-adjusted virtual capacity, the to-be-adjusted virtual electric quantity of the specific virtual battery is calculated according to the above formula (5).

After obtaining the to-be-adjusted virtual capacity and the to-be-adjusted virtual electric quantity of the specific virtual battery, an implementation process of adjusting the parameters of the specific virtual battery by the above-described Step 102, and adjusting parameters of other virtual batteries other than the specific virtual battery by the above-described Step 103 is the same as that of the first embodiment, and thus details thereof are omitted herein for brevity.

A specific example is provided below to illustrate this.

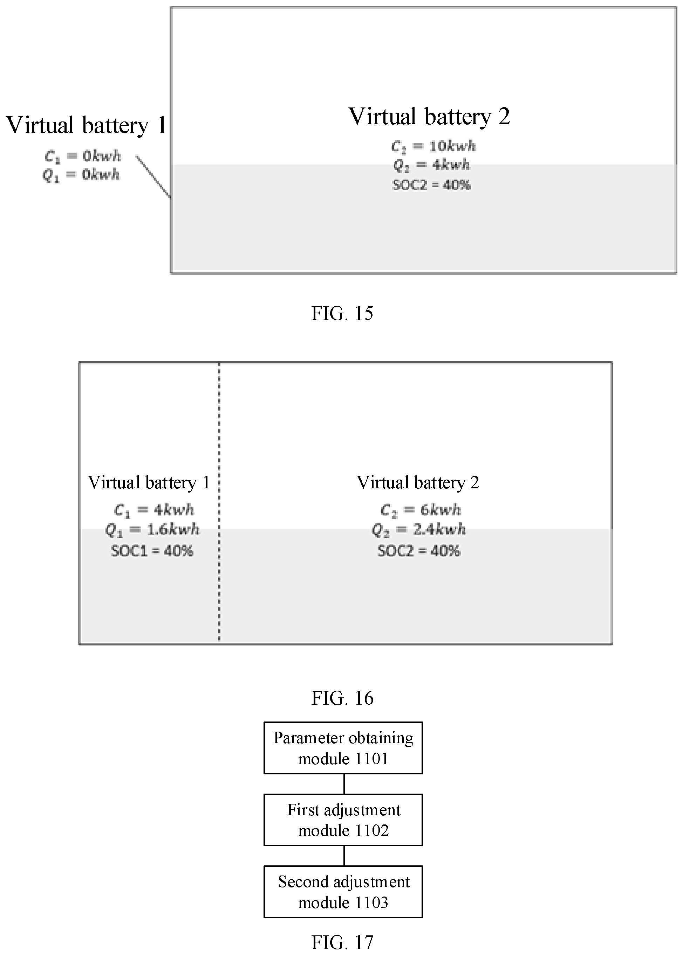

As illustrated in FIG. 15, it is assumed that the energy storage battery is virtually divided into two virtual batteries (i.e., n =2): the virtual battery 1 and the virtual battery 2. In addition, the priority is set such that the priority of the virtual battery 1 is greater than the priority of the virtual battery 2. In addition, the current virtual capacity of each virtual battery is C₁ = 0kwh and C₂ = 10kwh, respectively. The current virtual electric quantity is Q₁ = 0kwh and Q₂ = 4kwh, respectively. The current state of charge is SOC₁ = 0% and SOC₂ = 40%, respectively.

If it is necessary to allocate 4kwh of virtual capacity to the virtual battery 1, that is, the to-be-adjusted virtual capacity is 4kwh, based on the priority, the state of charge SOC₁ = 40% of the virtual battery 1 may be adjusted based on the state of charge of the virtual battery 2. Then, the to-be-adjusted virtual electric quantity of the virtual battery 1 is calculated as Q₁ = 4kwh × 40% = 1.6kwh. Then, the virtual capacity difference is 4kwh, and the virtual electric quantity difference is 1.6kwh. Based on the priority, 4kwh of virtual capacity and 1.6kwh of virtual electric quantity are compensated from the virtual battery 2 to the virtual battery 1. Therefore, as illustrated in FIG. 16, adjusted parameters of the virtual battery 1 are C₁ = 4kwh, Q₁ = 1.6kwh, and SOC₁ = 40%. After adjusting the parameters of the virtual battery 1, parameters of the virtual battery 2 are adjusted to be C₂ = 6kwh, Q₂ = 2.4kwh, and SOC₂ = 40%.

In this way, by the method in the second embodiment, a state of charge of the virtual battery (that is, the other virtual batteries or the virtual battery 2) in which the virtual capacity and the virtual electric quantity are divided is made to be consistent with that before the adjustment, not causing a sudden change in the state of charge of the virtual battery in which the virtual capacity and the virtual electric quantity are divided. Therefore, a better electricity consumption experience can be offered to the user.

Third embodiment of adjusting the parameters of the virtual battery based on the power consumption of the virtual photovoltaic energy storage system connected to the virtual battery is as follows.

Firstly, the parameters may be determined based on the power consumption of the virtual photovoltaic energy storage system connected to the virtual battery. The above Step 101 may include: calculating the to-be-adjusted virtual electric quantity for the specific virtual battery based on the charge-discharge power of the virtual photovoltaic energy storage system connected to the specific virtual battery within the specified time period.

In the specific implementation, the virtual capacity of each virtual battery remains unchanged, and the to-be-adjusted virtual electric quantity of each specific virtual battery may be calculated based on the charge-discharge power of the virtual photovoltaic energy storage system connected to the specific virtual battery within the specified time period.

In one embodiment, the to-be-adjusted virtual electric quantity of the specific virtual battery may be calculated according to the following formula based on a power integration method, i.e., the formula (6): ${Q}_{i} = {\int }_{0}^{t} {P}_{i} dt + {Q}_{i _ Init}$ (6). In the formula (6), Pᵢ represents the charge-discharge power of the i-th specific virtual battery within the specific time period from 0 to t, Qᵢ represents the to-be-adjusted virtual electric quantity of the i-th specific virtual battery, and Q_{i_Init} represents the current virtual electric quantity of the i-th specific virtual battery, i.e., the virtual electric quantity at time 0.

In the above Step 102, after the to-be-adjusted virtual electric quantity of each specific virtual battery is obtained, the virtual capacity of each specific virtual battery remains unchanged, and the virtual electric quantity of the specific virtual battery is adjusted based on the to-be-adjusted virtual electric quantity of the specific virtual battery.

In the embodiments of the present disclosure, the state of charge of each specific virtual battery can also be adjusted, which may include: keeping the virtual capacity of the specific virtual battery unchanged; and adjusting the state of charge of the specific virtual battery based on the virtual capacity and the to-be-adjusted virtual electric quantity of the specific virtual battery.

In the specific implementation, the virtual capacity and the to-be-adjusted virtual electric quantity of the specific virtual battery may be substituted into the above formula (4), to calculate the state of charge of each specific virtual battery, and then the state of charge is adjusted.

In the above Step 103, the adjusting parameters of other virtual batteries among the plurality of virtual batteries except for the specific virtual battery based on the capacity and/or the electric quantity of the energy storage battery and the adjusted parameter of the specific virtual battery may include: subtracting the adjusted virtual electric quantity of the specific virtual battery from the electric quantity of the energy storage battery to obtain adjusted virtual electric quantities of other virtual batteries; and adjusting the states of charge of the other virtual batteries based on virtual capacities and adjusted virtual electric quantities of the other virtual batteries.

In the specific implementation, assuming that the number of the specific virtual battery is the number of a plurality of virtual batteries minus 1, i.e., n-1, the number of other virtual batteries is 1. Since a total virtual capacity and a total virtual electric quantity of the plurality of virtual batteries remain unchanged and are equal to the capacity and electric quantity of the energy storage battery respectively, to-be-adjusted virtual electric quantities (the adjusted virtual electric quantities) of n-1 specific virtual batteries may be calculated by the above formula (6), and an adjusted virtual electric quantity of one other virtual battery can be obtained by subtracting the adjusted virtual electric quantities of the n-1 specific virtual batteries from the electric quantity of the energy storage battery. The calculation formula is illustrated in the formula (7): ${Q}_{n} = {Q}_{sum} - {\sum }_{i = 1}^{n - 1} {Q}_{i}$ (7), where Qₙ represents adjusted virtual electric quantities of the other virtual batteries, and Qₛᵤₘ represents the electric quantity of the energy storage battery.

Then, the virtual capacities and the adjusted virtual electric quantities of the other virtual batteries may be substituted into the above formula (4), to calculate the states of charge of the other virtual batteries, and then the states of charge is adjusted.

In summary, according to the third embodiment, the parameter of the virtual battery can be adjusted based on the power consumption of the virtual photovoltaic energy storage system connected to the virtual battery, enabling the virtual battery to better serve the virtual photovoltaic energy storage system, improving the resource utilization rate and thus avoiding resource waste.

The embodiments of the present disclosure further provide an apparatus for adjusting a parameter of a virtual battery, as described in the following embodiments. Since a principle of the apparatus for solving the problem is similar to the above-described method for adjusting the parameter of the virtual battery, reference about the implementation of the method can be made to the implementation of the method for adjusting the parameter of the virtual battery, and the repeated details thereof will be omitted here.

FIG. 17 is a schematic diagram of an apparatus for adjusting a parameter of a virtual battery according to an embodiment of the present disclosure. As illustrated in FIG. 17, the apparatus is applied to a photovoltaic energy storage system. The energy storage battery of the photovoltaic energy storage system is divided into a plurality of virtual batteries. Each virtual battery is connected to a virtual photovoltaic energy storage system for serving the virtual photovoltaic energy storage system. The apparatus may include: a parameter obtaining module 1101 configured to obtain an adjustment parameter for a specific virtual battery, the adjustment parameter including a to-be-adjusted virtual capacity and/or a to-be-adjusted virtual electric quantity for the specific virtual battery; a first adjustment module 1102 configured to adjust a parameter of the specific virtual battery based on the to-be-adjusted virtual capacity and/or a to-be-adjusted virtual electric quantity; and a second adjustment module 1103 configured to adjust parameters of other virtual batteries among the plurality of virtual batteries except for the specific virtual battery based on a capacity and/or an electric quantity of an energy storage battery and the adjusted parameter of the specific virtual battery.

In some embodiments, the parameter obtaining module 1101 may be configured to: obtain a to-be-adjusted virtual capacity for the specific virtual battery inputted by a user; and keep a state of charge of the specific virtual battery unchanged, and calculate the to-be-adjusted virtual electric quantity for the specific virtual battery based on a state of charge and the to-be-adjusted virtual capacity of the specific virtual battery.

In some embodiments, the parameter obtaining module 1101 may further be configured to: obtain a to-be-adjusted virtual capacity for the specific virtual battery inputted by a user; and adjust, in response to an initial virtual capacity of the specific virtual battery being 0, a state of charge of the specific virtual battery based on states of charge of other virtual batteries according to a predetermined virtual battery priority, and calculate the to-be-adjusted virtual electric quantity for the specific virtual battery based on the to-be-adjusted virtual capacity and the adjusted state of charge of the specific virtual battery.

In some embodiments, the first adjustment module 1102 may be configured to: determine a to-be-adjusted virtual capacity difference and a to-be-adjusted virtual electric quantity difference for the specific virtual battery based on the to-be-adjusted virtual capacity and the to-be-adjusted virtual electric quantity; and allocate the to-be-adjusted virtual capacity difference and the to-be-adjusted virtual electric quantity difference of the specific virtual battery to other virtual batteries, or compensate the to-be-adjusted virtual capacity difference and the to-be-adjusted virtual electric quantity difference of the specific virtual battery from the other virtual batteries to the specific virtual battery, according to the predetermined virtual battery priority.

In one embodiment, the second adjustment module 1103 may be configured to: maintain a total virtual capacity of the plurality of virtual batteries to be equal to the capacity of the energy storage battery, and a total virtual electric quantity of the plurality of virtual batteries to be equal to an electric quantity of the energy storage battery; increase, in response to the to-be-adjusted virtual capacity difference and the to-be-adjusted virtual electric quantity difference of the specific virtual battery being allocated to other virtual batteries, virtual capacities and virtual electric quantities of the other virtual batteries by the virtual capacity difference and the virtual electric quantity difference, respectively; decrease, in response to the to-be-adjusted virtual capacity difference and the to-be-adjusted virtual electric quantity difference of the specific virtual battery being compensated from the other virtual batteries to the specific virtual battery, the virtual capacities and the virtual electric quantities of the other virtual batteries by the virtual capacity difference and the virtual electric quantity difference, respectively; and adjust the states of charge of the other virtual batteries based on the adjusted virtual capacities and the adjusted virtual electric quantities of the other virtual batteries.

In some embodiments, the parameter obtaining module 1101 may further be configured to: calculate the to-be-adjusted virtual electric quantity for the specific virtual battery based on a charge-discharge power of a virtual photovoltaic energy storage system connected to the specific virtual battery within a specified time period.

In one embodiment, the to-be-adjusted virtual electric quantity of the specific virtual battery may be calculated according to the following formula based on the power integration method: ${Q}_{i} = {\int }_{0}^{t} {P}_{i} dt + {Q}_{i _ Init}$ where Pᵢ represents a charge-discharge power of an i-th specific virtual battery within a specific time period from 0 to t, Qᵢ represents a to-be-adjusted virtual electric quantity of the i-th specific virtual battery, and Q_{i_Init} represents a current virtual electric quantity of the i-th specific virtual battery.

In one embodiment, the first adjustment module 1102 may further be configured to: keep the virtual capacity of the specific virtual battery unchanged; and adjust the state of charge of the specific virtual battery based on the virtual capacity and the to-be-adjusted virtual electric quantity of the specific virtual battery.

In some embodiments, the second adjustment module 1103 may further be configured to: subtract the adjusted virtual electric quantity of the specific virtual battery from the electric quantity of the energy storage battery to obtain adjusted virtual electric quantities of other virtual batteries; and adjust the states of charge of the other virtual batteries based on virtual capacities and adjusted virtual electric quantities of the other virtual batteries.

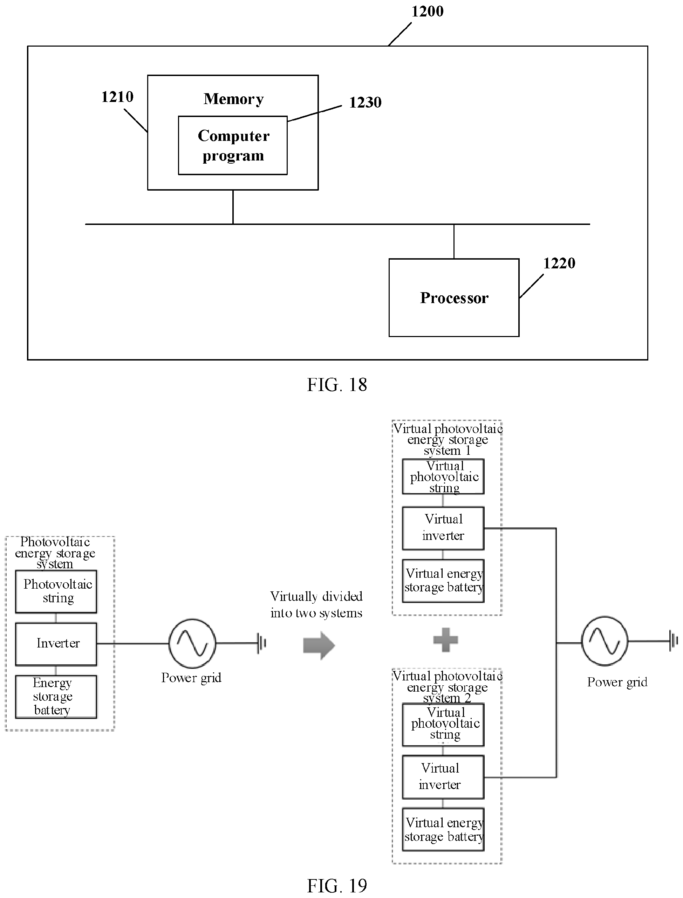

The embodiments of the present disclosure further provide a computer device. FIG. 18 is a schematic diagram of a computer device according to an embodiment of the present disclosure. The computer device 1200 includes a memory 1210, a processor 1220, and a computer program 1230 stored on the memory 1210 and executable on the processor 220. The processor 1220 is configured to, when executing the computer program 1230, implement the above method for adjusting the parameter of the virtual battery.

The embodiments of the present disclosure further provide a computer-readable storage medium. The computer-readable storage medium has a computer program stored thereon. The computer program is configured to, when executed by a processor, implement the above method for adjusting the parameter of the virtual battery.

The embodiments of the present disclosure further provide a computer program product. The computer program product includes a computer program. The computer program is configured to, when executed by a processor, implement the above method for adjusting the parameter of the virtual battery.

The method for adjusting the parameter of the virtual battery according to the embodiments of the present disclosure includes: obtaining the adjustment parameter for the specific virtual battery, the adjustment parameter including the to-be-adjusted virtual capacity and/or the to-be-adjusted virtual electric quantity for the specific virtual battery; adjusting the parameter of the specific virtual battery based on the to-be-adjusted virtual capacity and/or the to-be-adjusted virtual electric quantity; and adjusting parameters of other virtual batteries among the plurality of virtual batteries except for the specific virtual battery based on the capacity and/or the electric quantity of the energy storage battery and the adjusted parameter of the specific virtual battery. In this way, the parameter of the specific virtual battery can be adjusted based on the adjustment parameter, and parameters of other virtual batteries can be adjusted based on the capacity and/or the electric quantity of the energy storage battery after the parameter of the specific virtual battery are adjusted, flexibly adjusting the parameter of the virtual battery and improving the resource utilization rate.

It is conceivable for those skilled in the art that embodiments of the present disclosure may be provided as the method, the system, or the computer program product. Therefore, the present disclosure may take the form of an entirely hardware embodiment, an entirely software embodiment, or an embodiment combining a software aspect and a hardware aspect. Moreover, the present disclosure may take the form of a computer program product implemented on one or more computer-usable storage media (including, but not limited to, magnetic disk storage, CD-ROM, optical storage, etc.) containing computer-usable program code therein.

The present disclosure is described with reference to flowcharts and/or block diagrams of the method, the device (the system), and the computer program product according to the embodiments of the present disclosure. It should be understood that each process and/or block in the flowchart and/or block diagram, and combinations of processes and/or blocks in the flowchart and/or block diagram, may be implemented by computer program instructions. These computer program instructions may be provided to a processor of a general purpose computer, a processor of a special purpose computer, a processor of an embedded processor, or processors of other programmable data processing devices to produce a machine such that instructions executed by the processor of the computer or other programmable data processing devices produce an apparatus for implementing functions specified in a flow or multiple processes of the flowchart and/or a block or multiple blocks of the block diagram.

These computer program instructions may also be stored in a computer-readable memory capable of directing a computer or other programmable data processing devices to operate in a particular manner, in such a manner that an instruction stored in the computer-readable memory produces an article of manufacture including instruction means that implement the functions specified in a flow or multiple processes of the flowchart and/or a block or multiple blocks of the block diagram.

These computer program instructions may also be loaded onto the computer or other programmable data processing devices such that a series of operational steps are performed on the computer or other programmable devices to produce computer-implemented processing. Therefore, the instructions executed on the computer or other programmable devices provide steps for implementing the functions specified in a flow or multiple processes of the flowchart and/or a block or multiple blocks of the block diagram.

The above-described specific embodiments further describe the purpose, the technical solution, and advantageous effects of the present disclosure in detail. It should be understood that the above-described embodiments are only specific embodiments of the present disclosure, and are not intended to limit the scope of protection of the present disclosure. Any modifications, equivalent substitutions, improvements, or the like made within the concept and principles of the present disclosure shall be included in the scope of protection of the present disclosure.

Energy storage virtualization technology virtually divides a photovoltaic energy storage system into a plurality of virtual photovoltaic energy storage systems. Each virtual photovoltaic energy storage system may operate in different modes according to a setting. For example, one photovoltaic energy storage system is virtually divided into two virtual photovoltaic energy storage systems: the photovoltaic energy storage system 1 and the photovoltaic energy storage system 2. Operation modes of the photovoltaic energy storage system 1 and the photovoltaic energy storage system 2 may be set independently, such as maximum self-generation and self-consumption, TOU, virtual power plant scheduling, etc. When one photovoltaic energy storage system is virtually divided into the plurality of virtual photovoltaic energy storage systems, a sum of the power capabilities of a same component of each virtual photovoltaic energy storage system is not greater than a power capability of a component corresponding to the same component in the original photovoltaic energy storage system. For the inverter of the photovoltaic energy storage system, when the photovoltaic energy storage system is virtually divided into a plurality of parts, the corresponding inverter may also be virtually divided into a plurality of virtual inverters. If the inverter is a three-phase inverter, the inverter is also virtually divided into a plurality of virtual three-phase inverters.

Take the three-phase inverter being divided virtually into two three-phase inverters as an example, in a scenario where each phase of the inverter is independently controlled, the discussion is based on the inverter being a three-phase inverter with independent phase control.
A. Assume that a maximum output power of the original inverter is *Pₘₐₓ* = 27kw, the inverter is virtually divided into a photovoltaic energy storage inverter 1 and a photovoltaic energy storage inverter 2. Maximum output powers of the two photovoltaic energy storage inverters are distributed as *P*_{*max*1} = 12kw and *P*_{*max*2} = 15kw , respectively. Typically, the inverter capacity is evenly distributed across each phase, and thus maximum output powers of each phase of the two photovoltaic energy storage inverters are ${P}_{A 1 max} = {P}_{B 1 max} = {P}_{C 1 max} = {P}_{max 1} / 3 = 4 kw$ and ${P}_{A 2 max} = {P}_{B 2 max} = {P}_{C 2 max} = {P}_{max 2} / 3 = 5 kw ,$ respectively.
B. When a power instruction of each phase of the photovoltaic energy storage inverter 2 is small (for example, when the power instruction is 0), the photovoltaic energy storage inverter 1 is limited by a maximum output of 4 kw per phase under the setting of fixed distribution of power of each phase. When an output power instruction of a phase of the photovoltaic energy storage inverter 1 exceeds a maximum value of the power instruction of each phase, the output power instruction cannot be outputted according to an instruction. For example, when a C-phase load of the photovoltaic energy storage inverter 1 is 5 kw and an A phase and a B phase are unloaded, since a maximum power of each phase of the photovoltaic energy storage inverter 1 is 4 kw, the C-phase of the photovoltaic energy storage inverter 1 may only be supplied to the load according to the output of 4kw, and it is necessary to purchase 1 kw of electricity from the power grid side.
C. In fact, since a power instruction of the photovoltaic energy storage inverter 2 is 0, a maximum output power capability of each phase of the original inverter is 9 kw, the system is fully capable of providing 5 kw output for the load. However, under the setting of fixed power distribution of each phase, the system capacity cannot be fully utilized, resulting in a need to purchase electricity from the power grid.

Therefore, it can be seen from the above phenomenon that when the power capability of each phase of the inverter is fixed allocated, the system capacity may be sufficient but the system cannot fully supply power to the load, which can undoubtedly result in a waste of a rich power capability of the photovoltaic energy storage system. Therefore, the rich power capability of the photovoltaic energy storage system cannot be fully utilized.

This embodiment describes a method for controlling a parameter of a virtualized twin in a photovoltaic energy storage system. The photovoltaic energy storage system includes an inverter having a plurality of phases. In addition, each phase of the inverter is independently controlled. As illustrated in FIG. 19, the photovoltaic energy storage system is virtually divided into two or more virtual photovoltaic energy storage systems. Each of the two or more virtual photovoltaic energy storage systems is independently configured with an operation mode.

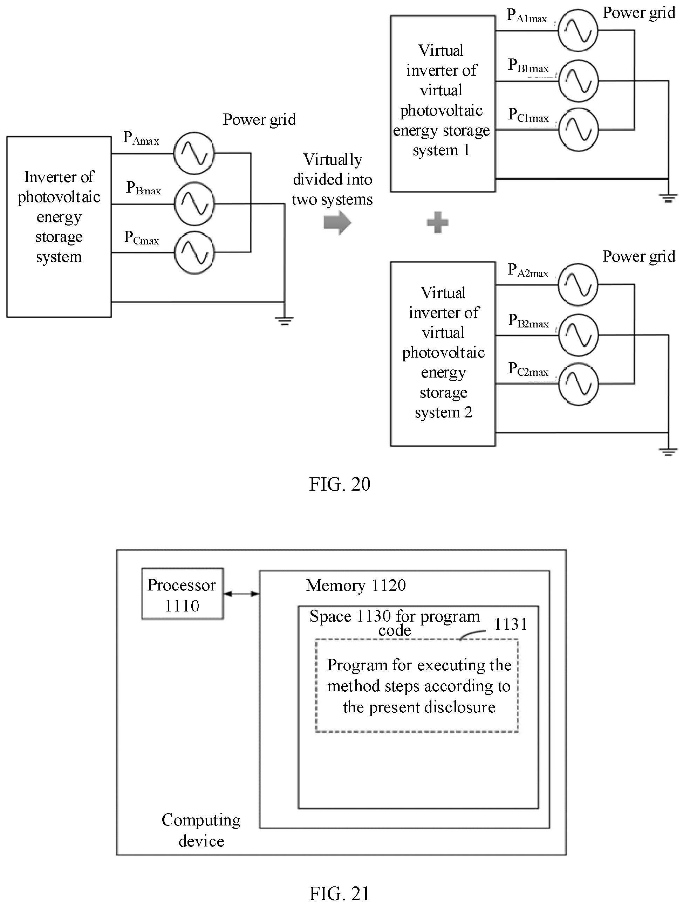

As illustrated in FIG. 20, each of the virtual photovoltaic energy storage systems includes a virtual inverter. The method further includes: dynamically allocating power capabilities of the phases of the virtual inverters in the virtual photovoltaic energy storage systems based on change of the scheduling instruction. A sum of the power capabilities of the phases of the virtual inverters in the virtual photovoltaic energy storage systems is not greater than a power capability of a corresponding phase in the photovoltaic energy storage system.

The component in the photovoltaic energy storage system includes at least one of the photovoltaic string, the inverter, or the energy storage battery. Correspondingly, the component of each virtual photovoltaic energy storage system includes at least one component in the photovoltaic energy storage system (in the following cases, to better express a control process, the components of each virtual photovoltaic energy storage system are designed to be the same as the components in the photovoltaic energy storage system, i.e., each virtual photovoltaic energy storage system includes the virtual photovoltaic string, the virtual inverter, and the virtual energy storage battery). The power capability refers to the maximum output power of the inverter or the maximum absorption power of the inverter.

On the premise of satisfying *P*_{*N*1}*ₘₐₓ + P*_{*N*2}*ₘₐₓ+...+P_{Nkmax}* ≤ *P_{Nmax}, P_{Nimax}* may be dynamically adjusted. That is, on the premise that "the sum of the power capabilities of the phases of the virtual inverters in the virtual photovoltaic energy storage systems is not greater than a power capability of a corresponding phase in the photovoltaic energy storage system" as mentioned above, "the power capabilities of the phases of the virtual inverters in the virtual photovoltaic energy storage systems are dynamically allocated. " N represents an N-th phase of the inverter. For example, A, B, C... may be used to represent the A phase, the B phase, a C phase of the inverter, respectively. k represents the number of virtual photovoltaic energy storage systems into which the photovoltaic energy storage system is divided, which is an integer greater than or equal to 2. *P_{Nimax}* represents a power capability of an *N-th* phase in the i-th virtual photovoltaic energy storage system. *P_{Nmax}* is a power capability of an N-th phase in the original photovoltaic energy storage system.

The power capabilities of the phases of the virtual inverters in the virtual photovoltaic energy storage systems are dynamically allocated according to the following formula, ${P}_{Nimax} = \frac{{P}_{NiRef}}{{\sum }_{1}^{k} {P}_{NiRef}} \times {P}_{Nmax} ,$ where *P_{Nimax}* is a power capability of an *N-th* phase of the virtual inverter in an i-th virtual photovoltaic energy storage system, *P_{Nmax}* is the power capability of the *N-th* phase of the inverter in the photovoltaic energy storage system, *P_{NiRef}* is a scheduling instruction of the N-th phase of the virtual inverter in the i-th virtual photovoltaic energy storage system, and ***k*** is the number of the virtual photovoltaic energy storage systems into which the photovoltaic energy storage system is divided.

### Case 1

By way of example, let k=2. The inverter employed is a three-phase inverter including the phase A, the phase B, and the phase C. That is, the case in question involves virtually dividing the original photovoltaic energy storage system into 2 virtual photovoltaic energy storage systems, in addition to discussing a maximum output power of the phase A of the inverter of the original photovoltaic energy storage system. Assume that an output power capability of the phase A of the inverter of the original photovoltaic energy storage system is *P_{Amax}* = 9kw, the scheduling instruction of the A phase of the virtual inverter of the virtual photovoltaic energy storage system 1 and the scheduling instruction of the A phase of the virtual inverter of the virtual photovoltaic energy storage system 2 are power outputs, and the power scheduling instructions thereof are *P*_{*A*1*Ref*} = 1*kw* and *P*_{*A*2*Ref*} = 2*kw ,* respectively. Then, the power capability of the A phase allocated to the virtual inverter of the virtual photovoltaic energy storage system 1 and the power capability of the A phase allocated to the virtual inverter of the virtual photovoltaic energy storage system 2 are ${P}_{A 1 max} = \frac{1}{1 + 2} ∗ 9 kw = 3 kw$ and ${P}_{A 2 max} = \frac{2}{1 + 2} ∗ 9 kw = 6 kw$, respectively. Based on this method, it is also possible to solve the problem that the load power cannot be covered in the discussion of the background technology, and it is necessary to purchase electricity from the power grid.

It should be noted that when adjusting the power capabilities of the components of each divided virtual photovoltaic energy storage system, for example, adjusting the output power of one of the virtual photovoltaic energy storage systems, another virtual photovoltaic energy storage system performs corresponding input power adjustment, and in this case this situation needs to be specially defined. Conversely, if the input power of one of the virtual photovoltaic energy storage systems is adjusted, then another virtual photovoltaic energy storage system performs corresponding output power adjustment, and in this case this situation needs to be specially defined.

Specifically, when the scheduling instruction of the N-th phase of the virtual inverter in the i-th virtual photovoltaic energy storage system is an output power, if a scheduling instruction of an *N-th* phase of a virtual inverter in an i'-th virtual photovoltaic energy storage system is an input power, *P_{Ni'Ref}* is defined as 0 when calculating and allocating a power capability *P_{Nimax}* of the *N-th* phase of the virtual inverter in the i-th virtual photovoltaic energy storage system. When the scheduling instruction of the N-th phase of the virtual inverter in the i-th virtual photovoltaic energy storage system is the input power, if the scheduling instruction of the N-th phase of the virtual inverter in the i'-th virtual photovoltaic energy storage system is the output power, *P_{Ni'Ref}* is defined as 0 when calculating and allocating the power capability *P_{Nimax}* of the *N-th* phase of the virtual inverter in the i-th virtual photovoltaic energy storage system.

For a plurality of divided virtual photovoltaic energy storage systems, if operation stability needs to be ensured for one of the virtual photovoltaic energy storage systems (for example, it is necessary to ensure operation stability of the load first, it is necessary to ensure operation stability of a virtual power grid first, or the like), it is possible to prioritize each phase of the inverter in each of the virtual photovoltaic energy storage systems to prioritize power capability response of a predetermined phase having a higher priority. That is, a power capability *P_{Nimax}* of an *N-th* phase of a virtual inverter in an i-th virtual photovoltaic energy storage system is calculated and allocated based on the priority.

A power priority of each virtual inverter in each of *k* virtual photovoltaic energy storage systems is predetermined. A principle for allocating a power capability of the photovoltaic energy storage system is allocation based on the power priority: a scheduling instruction of an N-th phase of the virtual inverter in the virtual photovoltaic energy storage system with a higher power priority is responded firstly, and then when the photovoltaic energy storage system has a remaining power capability, a scheduling instruction of an N-th phase of the virtual inverter in the virtual photovoltaic energy storage system with a lower power priority is responded.

### Case 2

Based on Case 1, the priority of the virtual inverter of the virtual photovoltaic energy storage system 1 is set to be higher than that of the virtual photovoltaic energy storage system 2. Consequently, a response priority of the power capability of each phase of the virtual inverter corresponding to the virtual photovoltaic energy storage system 1 is also higher than that of each phase of the virtual inverter of the virtual photovoltaic energy storage system 2. Different scenarios are described below based on different scheduling instructions for the output power of the phase A of the inverter.

Scenario 1: Suppose the output power capability of the phase A of the virtual inverter of the original photovoltaic energy storage system is *P_{Amax}* = 9*kw*, a power instruction of the phase A of the virtual inverter of the virtual photovoltaic energy storage system 1 and a power instruction of the phase A of the virtual inverter of the virtual photovoltaic energy storage system 2 are *P*_{*A*1*Ref*} = 1*kw* and *P*_{*A*2*Ref*} = 2*kw ,* respectively. Due to the priority setting, a high priority is satisfied first, i.e., the power scheduling instruction of the phase A of the virtual inverter of the virtual photovoltaic energy storage system 1 is satisfied first to achieve an output of 1 kw. In this case, 1 kw of output capability is allocated to the phase A of the virtual inverter of the virtual photovoltaic energy storage system 1. After satisfying the 1 kw power instruction of the phase A of the virtual inverter of the virtual photovoltaic energy storage system 1, a remaining power capability of 8 kw is allocated to a phase A of the virtual inverter of the virtual photovoltaic energy storage system 2 with a low priority. In this case, the power scheduling instruction of the phase A of the virtual inverter of the virtual photovoltaic energy storage system 2 is 2 kw, which is smaller than the remaining power capability of 8 kw. Therefore, 2 kw of power capability can be allocated to the phase A of the virtual inverter of the virtual photovoltaic energy storage system 2 for power output.

Scenario 2: Suppose the output power capability of the phase A of the inverter of the original photovoltaic energy storage system is *P_{Amax}* = **9*kw*,** the power instruction of the phase A of the virtual inverter of the virtual photovoltaic energy storage system 1 and the power instruction of the phase A of the virtual inverter of the virtual photovoltaic energy storage system 2 are *P*_{*A*1*Ref*} = 8*kw* and *P*_{*A*2*Ref*} = 2*kw*, respectively. Due to the priority setting, a high priority is satisfied first, i.e., the power scheduling instruction of the virtual inverter of the virtual photovoltaic energy storage system 1 is satisfied first to achieve an output of 8 kw. In this case, 8 kw of output capability is allocated to the phase A of the virtual inverter of the virtual photovoltaic energy storage system 1. After satisfying the 8 kw power scheduling instruction of the phase A of the virtual inverter of the virtual photovoltaic energy storage system 1, a remaining power capability of 1 kw is further allocated to a phase A of the virtual inverter of the virtual photovoltaic energy storage system 2 with a low priority. In this case, the power scheduling instruction of the phase A of the virtual inverter of the virtual photovoltaic energy storage system 2 is 2 kw, which is greater than the remaining power capability of 1 kw. Therefore, only 1 kw of power capability can be allocated to the phase A of the virtual inverter of the virtual photovoltaic energy storage system 2 for power output, meaning that the phase A of the virtual inverter of the virtual photovoltaic energy storage system 2 can only output 1 kw of power.

Scenario 3: Suppose the output power capability of the phase A of the inverter of the original photovoltaic energy storage system is *P_{Amax}* = 9kw, the power instruction of the phase A of the virtual inverter of the virtual photovoltaic energy storage system 1 and the power instruction of the phase A of the virtual inverter of the virtual photovoltaic energy storage system 2 are *P*_{*A*1}*_{Ref} =* 9kw and *P*_{*A*2*Ref*} = 2*kw*, respectively. Due to the priority setting, a high priority is satisfied first, i.e., the power scheduling instruction of the phase A of the virtual inverter of the virtual photovoltaic energy storage system 1 is satisfied first to achieve an output of 9 kw. In this case, 9 kw of output capability is allocated to the phase A of the virtual inverter of the virtual photovoltaic energy storage system 1. After satisfying the 9 kw power scheduling instruction of the phase A of the virtual inverter of the virtual photovoltaic energy storage system 1, no remaining power capability is further allocated to the phase A of the virtual inverter of the virtual photovoltaic energy storage system 2 with a low priority. In this case, the power scheduling instruction of the phase A of the virtual inverter of the virtual photovoltaic energy storage system 2 is 2 kw, which is greater than the remaining power capability of 0 kw. Therefore, the power capability cannot be allocated to the phase A of the virtual inverter of the virtual photovoltaic energy storage system 2 for power output, meaning that the virtual inverter of the virtual photovoltaic energy storage system 2 has no power output.

To avoid situations where powers of virtual inverters of some virtual photovoltaic energy storage systems is completely restricted or excessively restricted due to proportional or priority-based allocation, a limitation is imposed on a power upper bound of the virtual photovoltaic energy storage system with a high priority or a power upper bound of each virtual photovoltaic energy storage system to basically satisfy input or output of the virtual inverter of the virtual photovoltaic energy storage system. That is, an upper limit is set for the power capability of the N-th phase of the virtual inverter in each virtual photovoltaic energy storage system. When calculating and allocating the power capability *P_{Nimax}* of the *N-th* phase of the virtual inverter in the i-th virtual photovoltaic energy storage system, the allocated parameter value is not allowable to exceed the set upper limit of the virtual inverter.

As in the case of Scenario 3 in Case 2, the output power of the virtual inverter in each virtual photovoltaic energy storage system can be restricted. For example, if a maximum output power of the phase A of the virtual inverter of the virtual photovoltaic energy storage system 1 is set to *P*_{*A*1*Max*} = 7*kw*, under the circumstances of Scenario 3 in Case 2, the phase A of the virtual inverter of the virtual photovoltaic energy storage system 1 outputs 7kw, reserving 2kw for the output of the phase A of the virtual inverter of the virtual photovoltaic energy storage system 2 (e.g., reserved for the virtual power plant scheduling). In this way, even when a power scheduling instruction of a virtual inverter of the virtual photovoltaic energy storage system with a high priority is large, a virtual inverter of the virtual photovoltaic energy storage system with a low priority still has a certain output capability.

In addition, when dynamically allocating the power capabilities of the phases of the virtual inverters in the virtual photovoltaic energy storage systems, a sum of the power capabilities of the phases of each virtual inverter is a set value. The purpose is to ensure that the total power of each virtual inverter is limited to a fixed value in terms of external characteristics, even if output limits of each phase of each virtual inverter are inconsistent. For example, a total power of the virtual inverter of the virtual photovoltaic energy storage system 1 is limited to be 12 kw, and a total power of the virtual inverter of the virtual photovoltaic energy storage system 2 is limited to be 15 kw. The dynamic allocation is performed on the power of each phase, and thus power limitations of each phase of the virtual inverter of the virtual photovoltaic energy storage system 1 are 1 kw, 2 kw, and 9 kw, respectively, or the power limitations of each phase are 0 kw, 1 kw, and 11 kw, respectively. However, the total power limitation of the virtual inverter of the virtual photovoltaic energy storage system 1 always remains at the fixed value of 12 kw. From the perspective of external characteristics, while ensuring that the total power limitation of each virtual inverter is fixed, the power of each phase can be relatively freely allocated, maximizing the power capability of the inverter as much as possible.

In summary, the method for controlling the parameter of the virtualized twin in the photovoltaic energy storage system in the present disclosure targets a photovoltaic energy storage system containing the multi-phase inverter for inverter power control, where each phase of the inverter can be controlled independently. By dynamically allocating the power capability of each phase of the virtual inverter in the virtually divided virtual photovoltaic energy storage system, the method can better meet a demand for an unbalanced output of each phase. Therefore, a utilization rate of the power capability of the photovoltaic energy storage system can be improved, avoiding an unnecessary power purchasing action from the power grid, and reducing an operating cost.

An embodiment of the present disclosure further provides a computing device. As illustrated in FIG. 21, the computing device includes a memory 1120, a processor 1110, and a computer program stored in the memory 1120 and executed by the processor 1110. The computer program is stored in a space 1130 for program code in the memory 1120. The computer program is configured to, when executed by the processor 1110, implement any one of the method steps 1131 according to the present disclosure.

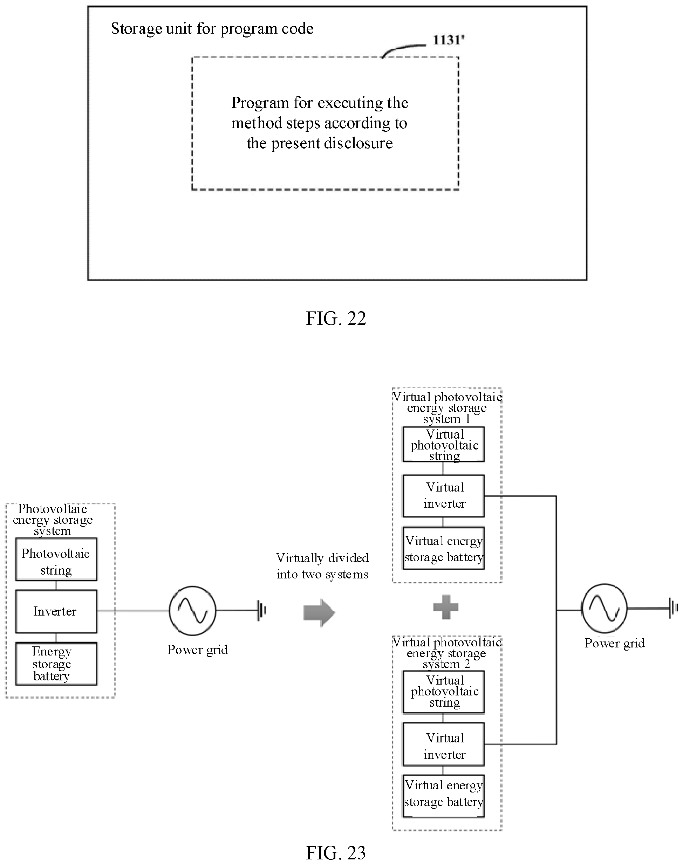

An embodiment of the present disclosure further provides a computer-readable storage medium. As illustrated in FIG. 22, the computer-readable storage medium includes a storage unit for program code. The storage unit has a program 1131' for executing the method steps according to the present disclosure. The program is executed by the processor.

An embodiment of the present disclosure further provides a computer program product including an instruction. When the computer program product is executed on the computer, the computer is caused to perform the method steps according to the present disclosure.

The above-described embodiments may be implemented in whole or in part by software, hardware, firmware, or any combination thereof. When implemented using the software, it may be fully or partially implemented in the form of a computer program product. The computer program product includes one or more computer instructions. When a computer program instruction is loaded and executed on the computer, processes or functions according to the embodiments of the present disclosure are generated in whole or in part. The computer may be the general purpose computer, the special purpose computer, the computer network, or other programmable apparatuses. The computer instruction may be stored in the computer-readable storage medium or transmitted from a computer-readable storage medium to another computer-readable storage medium. For example, the computer instruction may be transmitted from one website, computer, server, or data center to another website, computer, server, or data center via wired means (e.g., coaxial cable, fiber optic cable, digital subscriber line (DSL)) or wireless means (e.g., infrared, radio, microwave). The computer-readable storage medium may be any available medium accessible by a computer or a data storage device such as a server or a data center that includes one or more integrated available media. The available medium may be a magnetic medium (e.g., a floppy disk, a hard disk, a magnetic tape), an optical medium (such as a DVD), or a semiconductor medium (such as a Solid State Disk (SSD)).

It is further conceivable for those skilled in the art that the elements and algorithm steps of each example described in connection with the embodiments disclosed herein may be implemented in electronic hardware, computer software, or a combination of both. To clearly illustrate interchangeability of hardware and software, the composition and steps of each example are described generally in terms of function in the foregoing description. Whether these functions are performed in hardware or software depends on specific application and design constraints of the technical solution. Different methods can be used by those skilled in the art for implementing the described functions for each particular application, but such implementations should not be considered beyond the scope of the present disclosure.

It is conceivable for those skilled in the art that all or part of the steps in implementing the method of the above embodiments can be completed by instructing the processor through a program. The program may be stored in the computer-readable storage medium. The storage medium is a non-transitory medium, such as a random access memory, a read-only memory, a flash memory, a hard disk, a solid state drive, the magnetic tape, the floppy disk, an optical disc, and any combination thereof.

In a further embodiment, the present disclosure further provides a computing device. The computing device includes: the memory; the processor; and the computer program stored in the memory and executable on the processor. The processor is configured to, when executing the computer program, implement the method described above.

The present disclosure further provides a computer-readable storage medium having a computer program stored therein. The computer program is configured to, when executed by a processor, implement the method described above. The computer-readable storage medium is preferably a non-volatile readable storage medium.

The above-mentioned embodiments are only for illustrating the technical concept and characteristics of the present disclosure, and aim to make those familiar with the technology understand the content of the present disclosure and implement the present disclosure accordingly, which does not limit the scope of protection of the present disclosure. Any equivalent changes or modifications made according to the concept and essence of the present disclosure shall be covered within the scope of protection of the present disclosure.

Energy storage virtualization technology virtually divides the photovoltaic energy storage system into the plurality of virtual photovoltaic energy storage systems. Each virtual photovoltaic energy storage system may operate in different modes according to the setting. For example, one photovoltaic energy storage system is virtually divided into two virtual photovoltaic energy storage systems, such as the photovoltaic energy storage system 1 and the photovoltaic energy storage system 2. Operation modes of the photovoltaic energy storage system 1 and the photovoltaic energy storage system 2 may be set independently, such as maximum self-generation and self-consumption, TOU, virtual power plant scheduling, etc.

When one photovoltaic energy storage system is virtually divided into the plurality of virtual photovoltaic energy storage systems, the sum of parameters of the same component of each virtual photovoltaic energy storage system is not greater than the parameter of the component corresponding to the same component in the original photovoltaic energy storage system. For example, when the maximum output power of the inverter of the original photovoltaic energy storage system is 27 kw, the photovoltaic energy storage system is virtually divided into two virtual photovoltaic energy storage systems, and the power capability is allocated to the two virtual systems. For example, maximum output powers of inverters allocated to the two virtual systems are 12 kw and 15 kw, respectively. The sum of the maximum output powers of the inverters of the virtual system does not exceed the maximum power of the inverter of the original photovoltaic energy storage system. Similarly, the maximum absorption power of the inverter, the maximum charging/discharging power of the battery, the photovoltaic power generation power, the electric quantity and the capacity of the energy storage battery may be allocated to the virtual system.

Usually, the capability of each virtual system is set according to the fixed distribution relationship, such as the above-mentioned fixed distribution of 12 kw and 15 kw. Advantages of fixed distribution are simple system control and clear power division, and a disadvantage is that the capability of the original system cannot be fully utilized. Still take the above-mentioned inverter output power distribution as an example: the maximum output power of the original system inverter is 27 kw, and 12 kw and 15 kw are allocated to the virtual inverter 1 and the virtual inverter 2, respectively. When the virtual inverter 1 has no power output, that is, the power is 0, and the output power scheduling instruction of the virtual inverter 2 exceeds 15 kw (such as 20 kw), the virtual inverter 2 is limited by the set maximum output capability of the inverter, and the output is 15 kw. However, since the original system inverter may output 27 kw at maximum, and the current virtual inverter 1 has no power output, in principle, the system can respond to the 20 kw scheduling instruction for the virtual inverter 2. In this way, undoubtedly the waste of the surplus power capability of the photovoltaic energy storage system can occur, preventing full utilization of the surplus power capability.

In addition, technical features related to different embodiments of the present disclosure described below may be combined with each other as long as the technical features do not conflict with each other.

This embodiment describes a method for controlling a parameter of a virtualized twin in a photovoltaic energy storage system. As illustrated in FIG. 23, the photovoltaic energy storage system is virtually divided into two or more virtual photovoltaic energy storage systems. Each of the two or more virtual photovoltaic energy storage systems is independently configured with an operation mode. The method includes: dynamically allocating, based on change of a received scheduling instruction, a parameter of each component in each of the two or more virtual photovoltaic energy storage systems. A sum of the parameters of a same component in the two or more virtual photovoltaic energy storage systems is not greater than a parameter of a component corresponding to the same component in the photovoltaic energy storage system. The parameter includes a power capability of a power component or a battery capacity of an energy storage battery.

The component in the photovoltaic energy storage system includes at least one of the photovoltaic string, the inverter, or the energy storage battery. Correspondingly, the components in each virtual photovoltaic energy storage system include part or all of the components in the photovoltaic energy storage system. In the following examples, to facilitate explanation of the technical solution, the components of each virtual photovoltaic energy storage system are arranged to be the same as those in the photovoltaic energy storage system. That is, each virtual photovoltaic energy storage system includes a virtual photovoltaic string, a virtual inverter, and a virtual energy storage battery. As power devices, the photovoltaic string, the inverter, and the energy storage battery can adjust the power capability thereof when receiving a scheduling instruction. In addition, since a battery SOC of the energy storage battery is different for different operating conditions or operation modes, the battery capacity of the energy storage battery is dynamically allocated in this case. The power capability includes at least one of a photovoltaic generation power of a photovoltaic string, a maximum output power of an inverter, a maximum absorption power of the inverter, a maximum charging power of the energy storage battery, or a maximum discharging power of the energy storage battery.

The method further includes: for at least one component of at least one virtual photovoltaic energy storage system, dynamically allocating the parameter of the at least one component when the set condition is satisfied; and allocating the parameter of the at least one component according to the preset parameter when the set condition is not satisfied. The set condition includes any one or a combination of: A. a voltage of a power grid connected to the photovoltaic energy storage system is within a set range; B. a frequency of the power grid connected to the photovoltaic energy storage system is within a set range; C. a power instruction of a virtual inverter of the at least one virtual photovoltaic energy storage system is within a set range, or the power instruction of the virtual inverter remains within a set range for a predetermined duration; D. the at least one virtual photovoltaic energy storage system has no power scheduling plan within a set time window starting from a current moment; E. a state of charge of a virtual battery corresponding to the at least one virtual photovoltaic energy storage system is within a set range; and F. an output power of an inverter of the at least one virtual photovoltaic energy storage system is smaller than a load power consumption of the at least one virtual photovoltaic energy storage system.

The above is to set that for the virtual component of each virtual photovoltaic energy storage system, the parameter of the virtual component is dynamically allocated when the certain condition is satisfied. The parameter of the at least one component is allocated according to the preset parameter when the certain condition is not satisfied. The specific corresponding example scenario conditions are listed as follows:
A. the voltage of the power grid is within a set range such as from 225 v to 235 v;
B. the frequency of the power grid is within a set range such as between 49.9 Hz and 50.1 Hz;
C. the power instruction of the virtual inverter of the at least one virtual photovoltaic energy storage system is around 0 and exceeds a predetermined time. For example, the power instruction is within a range from -10 W to 10 W and lasts for more than 1 min;
D. for at least one virtual photovoltaic energy storage system, starting from the current moment, the power scheduling duration within the set time window is calculated. For example, starting from the current moment, within the next half hour, the planned power scheduling instruction is 0;
E. the state of charge of the virtual battery corresponding to the at least one virtual photovoltaic energy storage system is greater than 50%; and
F. the output power of the inverter of the at least one virtual photovoltaic energy storage system is smaller than the load power consumption of the at least one virtual photovoltaic energy storage system. If the photovoltaic energy storage system can only output 8 kw power, but the load power is 10 kw, the system output cannot cover the load power.

In an example in the background, where in the initial state the power capability of the virtual inverter is 12 kw and 15 kw, respectively, dynamic power capability distribution between the two virtual inverters is allowed when the condition that the voltage of the power grid is within the set range and/or the frequency of the power grid is within the set range is met.

On the premise that P_N1max+P_N2max+...[+P]_Nkmax≤P_Nmax is satisfied, a magnitude of P_Nimax may be dynamically adjusted. That is, on the premise that "the sum of the parameters of the same component in the two or more virtual photovoltaic energy storage systems is not greater than the power capability of the component corresponding to the same component in the photovoltaic energy storage system" as mentioned above, "the power capability of each component in each of the two or more virtual photovoltaic energy storage systems is dynamically allocated." N represents the components and corresponding power capabilities. For example, 1, 2, 3... may be used to represent the photovoltaic generation power, the maximum output power of the inverter, the maximum absorption power of the inverter, the maximum discharging power of the energy storage battery, or the maximum charging power of the energy storage battery. k represents the number of the virtual photovoltaic energy storage systems into which the photovoltaic energy storage system is divided, which is an integer greater than or equal to 2. P_Nimax represents the power capability of the N-th component in the i-th virtual photovoltaic energy storage system. P_Nmax represents the power capability of the N-th component in the original photovoltaic energy storage system.

Based on the total logic of performing dynamic allocation for the power capability of each component in each virtual photovoltaic energy storage system, the allocation can be performed according to the following formula: ${P}_{- Nimax} = \frac{{P}_{- NiRef}}{{\sum }_{1}^{k} {P}_{- NiRef}} ∗ {P}_{_ Nmax}$.

P_Nimax is the power capability of the N-th component in the i-th virtual photovoltaic energy storage system. P_Nmax is the power capability of the component in the photovoltaic energy storage system, P_NiRef is a scheduling instruction of the N-th component in the i-th virtual photovoltaic energy storage system, and k is the number of the virtual photovoltaic energy storage systems into which the photovoltaic energy storage system is divided.

### Case 1

By way of example, let k=2. N represents the maximum output power of the inverter (where N is taken as the aforementioned 2, and N is consistently used in the subsequent examples for ease of understanding). That is, the case is that the original photovoltaic energy storage system is virtually divided into two virtual photovoltaic energy storage systems, and the maximum output power of the inverter of the original photovoltaic energy storage system is discussed. Assuming that the maximum output power of the inverter of the original photovoltaic energy storage system is P_Nmax=27kw, the scheduling instruction of the inverter of the virtual photovoltaic energy storage system 1 and the scheduling instruction of the inverter of the virtual photovoltaic energy storage system 2 are power outputs, and the output scheduling instructions are P_N1Ref =3kw and P_N2Ref =6kw, respectively, the power capability allocated to the inverter of the virtual photovoltaic energy storage system 1 and the power capability allocated to the inverter of the virtual photovoltaic energy storage system 2 are P_N1max=P_N1Ref/(P_N1Ref+P_N2Ref)*P_Nmax=9kw, and P_N2max=P_N2Ref/(P_N1Ref+P_N2Ref)*P_Nmax=18kw, respectively. Based on this method, the problem in the background discussion that the load power cannot be covered, and the electricity needs to be purchased from the power grid can be solved.

It should be noted that when adjusting the power capability of the component of each divided virtual photovoltaic energy storage system, for example, adjusting the output power of one of the virtual photovoltaic energy storage systems, if another virtual photovoltaic energy storage system performs corresponding input power adjustment, in this case this situation needs to be specially defined.

In an exemplary embodiment of the present disclosure, when the scheduling instruction of the N-th component in the i-th virtual photovoltaic energy storage system is an output power, if a scheduling instruction of an N-th component in an i'-th virtual photovoltaic energy storage system is an input power, P_Ni'Ref is defined as 0 when calculating and allocating the output power capability P_Nimax of the N-th component in the i-th virtual photovoltaic energy storage system. When the scheduling instruction of the N-th component in the i-th virtual photovoltaic energy storage system is the input power, if the scheduling instruction of the N-th component in the i'-th virtual photovoltaic energy storage system is the output power, P_Ni'Ref is defined as 0 when calculating and allocating the input power capability P_Nimax of the N-th component in the i-th virtual photovoltaic energy storage system.

In one embodiment, for the divided virtual photovoltaic energy storage systems, if one of the virtual photovoltaic energy storage systems needs to ensure operation stability thereof, for example, if it is necessary to first ensure operation stability of the load, or if it is necessary to first ensure operation stability of the virtual power plant, or the like, it is possible to first ensure operation of the N-th component of the i-th photovoltaic energy storage system by setting the priority for each component in each of the virtual photovoltaic energy storage systems and calculating and allocating the power capability P_Nimax of the N-th component of the i-th photovoltaic energy storage system based on the priority.

The power priority of the N-th component in each of k virtual photovoltaic energy storage systems is predetermined. The principle for allocating the power capability of the photovoltaic energy storage system is allocation based on the power priority: the scheduling instruction of the N-th component in the virtual photovoltaic energy storage system with the higher power priority is responded firstly, and then when the photovoltaic energy storage system has the remaining power capability, the scheduling instruction of the virtual photovoltaic energy storage system with the lower power priority is responded.

### Case 2

On the basis of Case 1, the priority of the inverter of the virtual photovoltaic energy storage system 1 is set to be higher than that of the inverter of the virtual photovoltaic energy storage system 2. Different scenarios are described below combined with scheduling instructions of different output powers of the inverter.

In Scenario 1, it is assumed that the maximum output power of the inverter of the original photovoltaic energy storage system is P_Nmax =27 kw, and the scheduling instruction of the output power of the inverter of the virtual photovoltaic energy storage system 1 and the scheduling instruction of the output power of the inverter of the virtual photovoltaic energy storage system 2 are P_N1Ref =3 kw and P_N2Ref =6 kw, respectively. Due to setting of the priority, a high priority is satisfied first, i.e., the power scheduling instruction of the inverter of the virtual photovoltaic energy storage system 1 is satisfied first to achieve an output of 3 kw, and then an output capacity of 3kw is allocated to the inverter of the virtual photovoltaic energy storage system 1. After outputting a power of 3 kw of the inverter of the virtual photovoltaic energy storage system 1, a remaining power capability of 24 kw is further allocated to the inverter of the virtual photovoltaic energy storage system 2 having a low priority. In this case, the power scheduling instruction of the inverter of the virtual photovoltaic energy storage system 2 is 6 kw, which is smaller than the remaining capacity of 24 kw. Therefore, a power capability of 6 kw can be allocated to the inverter of the virtual photovoltaic energy storage system 2 for power output.

In Scenario 2, it is assumed that the output power capability of the inverter of the original photovoltaic energy storage system is P_Nmax =27 kw, and the output power instruction of the inverter of the virtual photovoltaic energy storage system 1 and the output power instruction of the inverter of the virtual photovoltaic energy storage system 2 are P_N1Ref =24 kw and P_N2Ref =6 kw, respectively. Due to setting of the priority, a high priority is satisfied first, i.e., the power scheduling instruction of the inverter of the virtual photovoltaic energy storage system 1 is satisfied first to achieve an output of 24 kw, and then an output capacity of 24 kw is allocated to the inverter of the virtual photovoltaic energy storage system 1. After outputting a power of 24 kw of the inverter of the virtual photovoltaic energy storage system 1, a remaining power capability of 3 kw is allocated to the inverter of the virtual photovoltaic energy storage system 2 having a low priority. In this case, the power scheduling instruction of the inverter 2 is 6 kw, which is greater than the remaining power capability of 3 kw. Therefore, only a power capability of 3 kw can be allocated to the inverter of the virtual photovoltaic energy storage system 2 for power output, and the inverter of the virtual photovoltaic energy storage system 2 can only output a power of 3 kw.

In Scenario 3, it is assumed that the maximum output power of the inverter of the original photovoltaic energy storage system is P_Nmax =27kw, and the power instruction of the inverter of the virtual photovoltaic energy storage system 1 and the power instruction of the inverter of the virtual photovoltaic energy storage system 2 are P_N1Ref =27kw and P_N2Ref =6kw, respectively. Due to setting of the priority, a high priority is satisfied first, i.e., the power scheduling instruction of the inverter of the virtual photovoltaic energy storage system 1 is satisfied first to achieve an output of 27 kw, and then an output capacity of 27 kw is allocated to the inverter of the virtual photovoltaic energy storage system 1. After outputting a power of 27 kw of the inverter of the virtual photovoltaic energy storage system 1, no remaining power capability is further allocated to the inverter of the virtual photovoltaic energy storage system 2 having the low priority. In this case, the power scheduling instruction of the inverter of the virtual photovoltaic energy storage system 2 is 6 kw, which is greater than the remaining power capability of 0 kw. Therefore, the power capability cannot be allocated to the inverter of the virtual photovoltaic energy storage system 2 for power output, and the inverter of the virtual photovoltaic energy storage system 2 has no power output.

In one embodiment, for the divided virtual photovoltaic energy storage systems, one of the virtual photovoltaic energy storage systems needs to ensure stable power supply, for example, to ensure the priority of stable power supply of the load, or to ensure the priority of scheduling power consumption of the virtual power plant, or the like. Therefore, if a priority for the current electric quantity of the energy storage battery in each virtual photovoltaic energy storage system is set, and a current electric quantity Q_i of an energy storage battery in an i-th virtual photovoltaic energy storage system based on the priority is calculated and allocated, the priority of the power consumption of the i-th photovoltaic energy storage system can be ensured.

A priority of the current electric quantity of the virtual energy storage battery in each of k virtual photovoltaic energy storage systems is predetermined. A principle for allocating the current electric quantity of the virtual energy storage battery of the photovoltaic energy storage system is allocation based on the priority: a virtual photovoltaic energy storage system having a high priority of the current electric quantity of the energy storage battery can utilize the current electric quantity of a virtual photovoltaic energy storage system having a low priority of the current electric quantity of the energy storage battery.

### Case 3

By way of example, assuming that the current electric quantity of the current energy storage battery of the original photovoltaic energy storage system is Q=10kwh, the original photovoltaic energy storage system is divided into two virtual photovoltaic energy storage systems, and the two virtual photovoltaic energy storage systems contain energy storage batteries. A priority of the current electric quantity of the energy storage battery of the virtual photovoltaic energy storage system is set such that the virtual photovoltaic energy storage system 1 has a higher priority than the virtual photovoltaic energy storage system 2. It is assumed that the current electric quantity of the energy storage battery of the virtual photovoltaic energy storage system 1 and the current electric quantity of the energy storage battery of the virtual photovoltaic energy storage system 2 are Q_1=3 kwh and Q_2=7 kwh, respectively. Due to setting of the priority, the virtual photovoltaic energy storage system 1 having a high priority of an electric quantity of the energy storage battery can utilize a current electric quantity of the virtual photovoltaic energy storage system 2 having a low priority of the electric quantity of the energy storage battery. The virtual photovoltaic energy storage system 1 first utilizes an electric quantity Q_1=3kwh of the energy storage battery of the virtual photovoltaic energy storage system 1. When the electric quantity of the energy storage battery of the virtual photovoltaic energy storage system 1 is exhausted, Q_1=0kwh. In this case, electric energy cannot be continuously supplied to the virtual photovoltaic energy storage system 1. Since the priority of the current electric quantity of the energy storage battery of the virtual photovoltaic energy storage system 1 is higher than the priority of the current electric quantity of the energy storage battery of the virtual photovoltaic energy storage system 2, the virtual photovoltaic energy storage system 1 can utilize a current electric quantity Q_2 of the energy storage battery of the virtual photovoltaic energy storage system 2, which can prioritize ensuring the electricity demand of the photovoltaic energy storage system 1.

In one embodiment, for the divided virtual photovoltaic energy storage systems, if a certain virtual photovoltaic energy storage system needs to ensure a charging demand of the system, for example, it is necessary to ensure a scheduled charging priority of the virtual power plant, or the like, and thus if a priority for the rated electric quantity of the energy storage battery in each virtual photovoltaic energy storage system is set, and a rated electric quantity C_i of a virtual energy storage battery in an i-th photovoltaic energy storage system based on the priority is calculated and allocated, a charging priority of the i-th photovoltaic energy storage system can be ensured.

A priority of the rated electric quantity of the energy storage battery in each of k virtual photovoltaic energy storage systems is predetermined. A principle for allocating the rated electric quantity of the energy storage battery of the photovoltaic energy storage system is allocation based on the priority: a virtual photovoltaic energy storage system having a high priority of the rated electric quantity of the energy storage battery can utilize a rated electric quantity of a virtual photovoltaic energy storage system having a low priority of the rated electric quantity of the energy storage battery.

### Case 4

By way of example, assuming that the rated electric quantity of the original photovoltaic energy storage system is C=20kwh, the original photovoltaic energy storage system is divided into two virtual photovoltaic energy storage systems, and the two virtual photovoltaic energy storage systems contain energy storage batteries. A priority of the rated electric quantity of the energy storage battery of the virtual photovoltaic energy storage system is set such that the virtual photovoltaic energy storage system 1 has a higher priority than the virtual photovoltaic energy storage system 2. It is assumed that a rated electric quantity of the current energy storage battery of the virtual photovoltaic energy storage system 1 and a rated electric quantity of the current energy storage battery of the virtual photovoltaic energy storage system 2 are C_1=5 kwh and C_2=15 kwh, respectively. Due to setting of the priority, the virtual photovoltaic energy storage system 1 having a high priority of a rated electric quantity of the energy storage battery can utilize a rated electric quantity of the virtual photovoltaic energy storage system 2 having a low priority of the rated electric quantity of the energy storage battery. The virtual photovoltaic energy storage system 1 first utilizes a rated electric quantity C_1=5kwh of the energy storage battery of the virtual photovoltaic energy storage system 1. When a capacity of the energy storage battery of the virtual photovoltaic energy storage system 1 is fully charged, i.e., the current electric quantity of the energy storage battery of the virtual photovoltaic energy storage system 1 is Q_1=5kwh, in this case, electric energy cannot be continuously supplied to the virtual photovoltaic energy storage system 1. Since the priority of the rated electric quantity of the energy storage battery of the virtual photovoltaic energy storage system 1 is higher than the priority of the rated electric quantity of the energy storage battery of the virtual photovoltaic energy storage system 2, the virtual photovoltaic energy storage system 1 can utilize a rated electric quantity C_2 of the energy storage battery of the virtual photovoltaic energy storage system 2, which can prioritize ensuring the electricity demand of the photovoltaic energy storage system 1.

The method further includes: setting an upper limit for a parameter of at least one component of at least one of the two or more virtual photovoltaic energy storage systems. When allocating a parameter of a virtual component for which the upper limit is set, the allocated parameter value is not allowable to exceed the set upper limit of the virtual component. As in the case of Case 2-Scenario 3 mentioned above, the output powers of the inverters in each virtual photovoltaic energy storage system may be limited. For example, the maximum output power of the inverter of the virtual photovoltaic energy storage system 1 is set as P_N1Max=21kw and P_N2Max =12kw. In the case of Scenario 3, the inverter of the virtual photovoltaic energy storage system 1 outputs 21 kw, and 6 kw is reserved for an inverter output of the virtual photovoltaic energy storage system 2. In this way, even when the inverter with a high priority has a large power instruction, the inverter with a low priority can still have a certain output capacity.

In summary, it can be seen that with the method for controlling the parameter of the virtualized twin in the photovoltaic energy storage system according to the present disclosure, power capabilities of each component in the virtually divided virtual photovoltaic energy storage system are dynamically allocated. In this way, needs of responding to scheduling instructions of different components of different virtual photovoltaic energy storage systems can be better adapted. Therefore, when adopting the control of the parameter of the virtualized twin, the photovoltaic energy storage system can better utilize a rich capacity of the original photovoltaic energy storage system to improve the utilization rate of the power capability of the photovoltaic energy storage system, improving operating stability and reliability of the photovoltaic energy storage system.

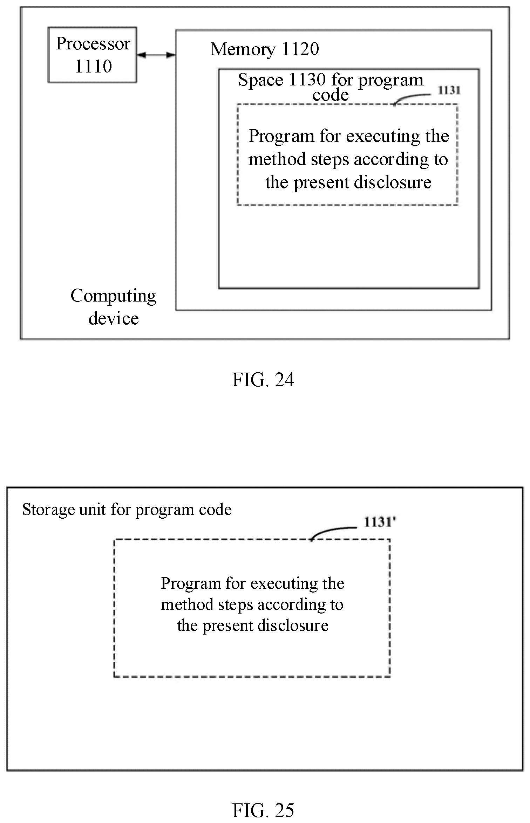

An embodiment of the present disclosure further provides a computing device. As illustrated in FIG. 24, the computing device includes a memory 1120, a processor 1110, and a computer program stored in the memory 1120 and executed by the processor 1110. The computer program is stored in a space 1130 for program code in the memory 1120. The computer program is configured to, when executed by the processor 1110, implement any one of the method steps 1131 according to the present disclosure.

An embodiment of the present disclosure further provides a computer-readable storage medium. As illustrated in FIG. 25, the computer-readable storage medium includes a storage unit for program code. The storage unit has a program 1131' for executing the method steps according to the present disclosure. The program is executed by the processor.

An embodiment of the present disclosure further provides a computer program product including an instruction. When the computer program product is executed on the computer, the computer is caused to perform the method steps according to the present disclosure.

In the above-described embodiments, it may be implemented in whole or in part by software, hardware, firmware, or any combination thereof. When implemented using the software, it may be fully or partially implemented in the form of a computer program product. The computer program product includes one or more computer instructions. When a computer program instruction is loaded and executed on the computer, processes or functions according to the embodiments of the present disclosure are generated in whole or in part. The computer may be the general purpose computer, the special purpose computer, the computer network, or other programmable apparatuses. The computer instruction may be stored in the computer-readable storage medium or transmitted from a computer-readable storage medium to another computer-readable storage medium. For example, the computer instruction may be transmitted from one website, computer, server, or data center to another website, computer, server, or data center via wired means (e.g., coaxial cable, fiber optic cable, digital subscriber line (DSL)) or wireless means (e.g., infrared, radio, microwave). The computer-readable storage medium may be any available medium accessible by a computer or a data storage device such as a server or a data center that includes one or more integrated available media. The available medium may be a magnetic medium (e.g., a floppy disk, a hard disk, a magnetic tape), an optical medium (such as a DVD), or a semiconductor medium (such as a Solid State Disk (SSD)).

It is further conceivable for those skilled in the art that the elements and algorithm steps of each example described in connection with the embodiments disclosed herein may be implemented in electronic hardware, computer software, or a combination of both. To clearly illustrate interchangeability of hardware and software, the composition and steps of each example are described generally in terms of function in the foregoing description. Whether these functions are performed in hardware or software depends on specific application and design constraints of the technical solution. Different methods can be used by those skilled in the art for implementing the described functions for each particular application, but such implementations should not be considered beyond the scope of the present disclosure.

It is conceivable for those skilled in the art that all or part of the steps in implementing the method of the above embodiments can be completed by instructing the processor through a program. The program may be stored in the computer-readable storage medium. The storage medium is a non-transitory medium, such as a random access memory, a read-only memory, a flash memory, a hard disk, a solid state drive, the magnetic tape, the floppy disk, an optical disc, and any combination thereof.

In a further embodiment, the present disclosure further provides a computing device. The computing device includes: the memory; the processor; and the computer program stored in the memory and executable on the processor. The processor is configured to, when executing the computer program, implement the method described above.

The present disclosure further provides a computer-readable storage medium having a computer program stored therein. The computer program is configured to, when executed by a processor, implement the method described above. The computer-readable storage medium is preferably a non-volatile readable storage medium.

The above-mentioned embodiments are only for illustrating the technical concept and characteristics of the present disclosure, and aim to make those familiar with the technology understand the content of the present disclosure and implement the present disclosure accordingly, which does not limit the scope of protection of the present disclosure. Any equivalent changes or modifications made according to the concept and essence of the present disclosure shall be covered within the scope of protection of the present disclosure.

It should be noted that, terms "comprise," "include" or any other variations thereof are meant to cover non-exclusive including, such that the process, method, goods, or device including a series of elements do not only include those elements, but further include other elements that are not explicitly listed, or further include inherent elements of the process, method, goods, or device. In a case that there are no more restrictions, an element limited by the statement "comprises a ..." does not exclude the presence of additional identical elements in the process, method, goods, or device that includes the said element. In addition, it should be noted that a scope of the method and the apparatus described in the embodiments of the present disclosure is not limited to performing functions in the order shown or discussed. It can also include performing functions in a substantially simultaneous manner or in a reverse order, depending on the functions involved. For example, the method described can be performed in an order different from that described order, and steps can also be added, omitted, or combined as needed. In addition, the features described with reference to certain examples may be combined in other examples.

From the description of the above embodiments, it will be clear to those skilled in the art that the above embodiment method can be implemented by means of software plus a necessary general hardware platform. Of course, the embodiment method can also be implemented by hardware. However, in many cases, the former is a preferred implementation. Based on this understanding, the essence of the technical solution of the present disclosure, or the part of the technical solution of the present disclosure that contributes to the related art, may be embodied in the form of a computer software product. The computer software product is stored in a storage medium (such as a ROM/RAM, the magnetic disk, or the optical disc) and includes a plurality of instructions configured to cause a terminal (which may be a mobile phone, a computer, a server, or a network device, etc.) to implement the method described in the various embodiments of the present disclosure.

The embodiments of the present disclosure are described above with reference to the accompanying drawings, but the present application is not limited to the above-described specific embodiments, which are only schematic and not limited. Many forms can be further made by those skilled in the art under the inspiration of the present disclosure without departing from the concept of the present disclosure and the scope of protection of the claims, all of which fall within the protection of the present disclosure.

Reference throughout this specification to "an embodiment," "some embodiments," "an illustrative embodiment," "an example," "a specific example," or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. In addition, the particular features, structures, materials, or characteristics described may be combined in any suitable manner in any one or more embodiments or examples.

Although embodiments of the present disclosure have been illustrated and described, it is conceivable for those skilled in the art that various changes, modifications, replacements, and variations can be made to these embodiments without departing from the principles and concept of the present disclosure. The scope of the present disclosure shall be defined by the claims as appended and their equivalents.

## Claims

1. A method for controlling a parameter of a virtualized twin in a photovoltaic energy storage system, wherein the photovoltaic energy storage system is virtually divided into two or more virtual photovoltaic energy storage systems, and each of the two or more virtual photovoltaic energy storage systems is independently configured with an operation mode, wherein the method comprises:
dynamically allocating a parameter of each component in each of the two or more virtual photovoltaic energy storage systems, wherein a sum of the parameters of a same component in the two or more virtual photovoltaic energy storage systems is not greater than a parameter of a component corresponding to the same component in the photovoltaic energy storage system, the parameter comprises a power capability of a power component, a current electric quantity of an energy storage battery, or a rated electric quantity of the energy storage battery.

2. The method for controlling the parameter of the virtualized twin in the photovoltaic energy storage system according to claim 1, further comprising:
for at least one component of at least one virtual photovoltaic energy storage system, presetting a parameter of the at least one component;
determining whether a set condition is satisfied;
dynamically allocating the parameter of the at least one component when the set condition is satisfied; and
allocating the parameter of the at least one component according to the preset parameter when the set condition is not satisfied.

3. The method for controlling the parameter of the virtualized twin in the photovoltaic energy storage system according to claim 2, wherein the set condition comprises any one or a combination of:
A. a voltage of a power grid connected to the photovoltaic energy storage system is within a set range;
B. a frequency of the power grid connected to the photovoltaic energy storage system is within a set range;
C. a power instruction of a virtual inverter of the at least one virtual photovoltaic energy storage system is within a set range, or the power instruction of the virtual inverter remains within a set range for a predetermined duration;
D. the at least one virtual photovoltaic energy storage system has no power scheduling plan within a set time window starting from a current moment;
E. a state of charge of a virtual battery corresponding to the at least one virtual photovoltaic energy storage system is within a set range; and
F. an output power of an inverter of the at least one virtual photovoltaic energy storage system is smaller than a load power consumption of the at least one virtual photovoltaic energy storage system.

4. The method for controlling the parameter of the virtualized twin in the photovoltaic energy storage system according to any one of claims 1 to 3, wherein the dynamically allocating a parameter of each component in each of the two or more virtual photovoltaic energy storage systems comprises:
dynamically allocating the power capability of each component in each of the two or more virtual photovoltaic energy storage systems according to the following formula ${P}_{Nimax} = \frac{{P}_{NiRef}}{{\sum }_{1}^{k} {P}_{NiRef}} \times {P}_{Nmax} ,$
where ***P_{Nimax}*** is a power capability of an *N*-th component in an *i*-th virtual photovoltaic energy storage system, ***P_{Nmax}*** is the power capability of the component in the photovoltaic energy storage system, ***P_{NiRef}*** is a scheduling instruction of the *N*-th component in the ***i***-th virtual photovoltaic energy storage system, and ***k*** is the number of the virtual photovoltaic energy storage systems into which the photovoltaic energy storage system is divided.

5. The method for controlling the parameter of the virtualized twin in the photovoltaic energy storage system according to claim 4, wherein:
when the scheduling instruction of the ***N***-th component in the ***i***-th virtual photovoltaic energy storage system is an output power, if a scheduling instruction of an ***N***-th component in an ***i'***-th virtual photovoltaic energy storage system is an input power, ***P_{Ni'Ref}*** is defined as 0 when calculating and allocating the power capability ***P_{Nimax}*** of the ***N***-th component in the ***i***-th virtual photovoltaic energy storage system; and
when the scheduling instruction of the ***N***-th component in the ***i***-th virtual photovoltaic energy storage system is the input power, if the scheduling instruction of the ***N***-th component in the ***i***'-th virtual photovoltaic energy storage system is the output power, ***P_{Ni'OutRef}*** is defined as 0 when calculating and allocating the power capability ***P_{Nimax}*** of the ***N***-th component in the ***i***-th virtual photovoltaic energy storage system.

6. The method for controlling the parameter of the virtualized twin in the photovoltaic energy storage system according to any one of claims 1 to 5, further comprising:
setting a priority for each component in each virtual photovoltaic energy storage system;
and
calculating and allocating a power capability ***P_{Nimax}*** of an ***N-***th component in an ***i***-th virtual photovoltaic energy storage system based on the priority.

7. The method for controlling the parameter of the virtualized twin in the photovoltaic energy storage system according to claim 6, wherein a power priority of an ***N***-th component in each of ***k*** virtual photovoltaic energy storage systems is predetermined, and a principle for allocating a power capability of the photovoltaic energy storage system is allocation based on the power priority: a scheduling instruction of the ***N**-*th component in the virtual photovoltaic energy storage system with a higher power priority is responded firstly, and then when the photovoltaic energy storage system has a remaining power capability, a scheduling instruction of the virtual photovoltaic energy storage system with a lower power priority is responded.

8. The method for controlling the parameter of the virtualized twin in the photovoltaic energy storage system according to any one of claims 1 to 7, wherein each component comprises an energy storage battery and an inverter, wherein
the method further comprises: setting a priority for the current electric quantity of the energy storage battery in each virtual photovoltaic energy storage system; and calculating and allocating a current electric quantity ***Qᵢ*** of an energy storage battery in an ***i***-th virtual photovoltaic energy storage system based on the priority; and/or
the photovoltaic energy storage system comprises an inverter having a plurality of phases, each of the plurality of phases of the inverter being independently controlled, each of the virtual photovoltaic energy storage systems comprises a virtual inverter, the method further comprises dynamically allocating power capabilities of the phases of the virtual inverters in the virtual photovoltaic energy storage systems, wherein a sum of the power capabilities of the phases of the virtual inverters in the virtual photovoltaic energy storage systems is not greater than a power capability of a corresponding phase in the photovoltaic energy storage system.

9. The method for controlling the parameter of the virtualized twin in the photovoltaic energy storage system according to claim 1, wherein:
the power capability comprises at least one of a photovoltaic generation power of a photovoltaic string, a maximum output power of an inverter, a maximum absorption power of the inverter, a maximum charging power of the energy storage battery, or a maximum discharging power of the energy storage battery; and/or
a component in the photovoltaic energy storage system comprises at least one of the photovoltaic string, the inverter, or the energy storage battery, and correspondingly, the component in each virtual photovoltaic energy storage system comprises part or all of components in the photovoltaic energy storage system.

10. The method for controlling the parameter of the virtualized twin in the photovoltaic energy storage system according to claim 8, wherein when dynamically allocating the power capabilities of the phases of the virtual inverters in the virtual photovoltaic energy storage systems, a sum of the power capabilities of the phases of at least one virtual inverter is a set value.

11. The method for controlling the parameter of the virtualized twin in the photovoltaic energy storage system according to claim 8, wherein the dynamically allocating power capabilities of the phases of the virtual inverters in the virtual photovoltaic energy storage systems comprises:
dynamically allocating the power capabilities of the phases of the virtual inverters in the virtual photovoltaic energy storage systems according to the following formula: ${P}_{Nimax} = \frac{{P}_{NiRef}}{{\sum }_{1}^{k} {P}_{NiRef}} \times {P}_{Nmax} ,$
where ***P_{Nimax}*** is a power capability of an ***N***-th phase of the virtual inverter in an ***i***-th virtual photovoltaic energy storage system, ***P_{Nmax}*** is the power capability of the ***N***-th phase of the virtual inverter in the photovoltaic energy storage system, ***P_{NiRef}*** is a scheduling instruction of the ***N***-th phase of the virtual inverter in the ***i***-th virtual photovoltaic energy storage system, and ***k*** is the number of the virtual photovoltaic energy storage systems into which the photovoltaic energy storage system is divided.

12. The method for controlling the parameter of the virtualized twin in the photovoltaic energy storage system according to claim 11, wherein:
when the scheduling instruction of the ***N***-th phase of the virtual inverter in the ***i***-th virtual photovoltaic energy storage system is an output power, if a scheduling instruction of an ***N***-th phase of a virtual inverter in an ***i'***-th virtual photovoltaic energy storage system is an input power, ***P_{Ni'Ref}*** is defined as 0 when calculating and allocating a power capability ***P_{Nimax}*** of the ***N***-th phase of the virtual inverter in the ***i***-th virtual photovoltaic energy storage system; and
when the scheduling instruction of the ***N***-th phase of the virtual inverter in the ***i***-th virtual photovoltaic energy storage system is the input power, if the scheduling instruction of the ***N***-th phase of the virtual inverter in the ***i'***-th virtual photovoltaic energy storage system is the output power, ***P_{Ni'Ref}*** is defined as 0 when calculating and allocating the power capability ***P_{Nimax}*** of the ***N***-th phase of the virtual inverter in the ***i***-th virtual photovoltaic energy storage system.

13. The method for controlling the parameter of the virtualized twin in the photovoltaic energy storage system according to any one of claims 8 to 12, further comprising:
setting a priority for each phase in each virtual inverter in each virtual photovoltaic energy storage system; and calculating and allocating a power capability ***P_{Nimax}*** of an ***N***-th phase of a virtual inverter in an ***i***-th virtual photovoltaic energy storage system based on the priority; and/or
setting a priority for the rated electric quantity of the energy storage battery in each virtual photovoltaic energy storage system; and calculating and allocating a rated electric quantity ***Cᵢ*** of an energy storage battery in an ***i***-th virtual photovoltaic energy storage system based on the priority.

14. The method for controlling the parameter of the virtualized twin in the photovoltaic energy storage system according to claim 13, wherein
a power priority of each virtual inverter in each of ***k*** virtual photovoltaic energy storage systems is predetermined, and a principle for allocating a power capability of the photovoltaic energy storage system is allocation based on the power priority: a scheduling instruction of an ***N***-th phase of the virtual inverter in the virtual photovoltaic energy storage system with a higher power priority is responded firstly, and then when the photovoltaic energy storage system has a remaining power capability, a scheduling instruction of an ***N***-th phase of the virtual inverter in the virtual photovoltaic energy storage system with a lower power priority is responded; and/or
a priority of the current electric quantity of the energy storage battery in each of ***k*** virtual photovoltaic energy storage systems is predetermined, and a principle for allocating the current electric quantity of the energy storage battery of the photovoltaic energy storage system is allocation based on the priority: the current electric quantity of the energy storage battery of the virtual photovoltaic energy storage system with a lower priority for the current electric quantity of the energy storage battery is dynamically allocated to the current electric quantity of the energy storage battery of the virtual photovoltaic energy storage system with a higher priority for the current electric quantity of the energy storage battery.

15. The method for controlling the parameter of the virtualized twin in the photovoltaic energy storage system according to any one of claims 8 to 14, further comprising:
setting an upper limit for a power capability of an ***N***-th phase of the virtual inverter in each virtual photovoltaic energy storage system, wherein when calculating and allocating a power capability P_Nimax of an ***N***-th phase of the virtual inverter in an ***i***-th virtual photovoltaic energy storage system, the allocated parameter value is not allowable to exceed the set upper limit of the virtual inverter; and/or
the power capability is a maximum output power of the inverter or a maximum absorption power of the inverter.
